(19)

Europäisches
Patentamt
European
Patent Office
Office européen
des brevets

(11) **EP 4 672 848 A1**

(12) **EUROPEAN PATENT APPLICATION**
published in accordance with Art. 153(4) EPC

(43) Date of publication:
**31.12.2025 Bulletin 2026/01**

(21) Application number: **23927964.9**

(22) Date of filing: **20.03.2023**

(51) International Patent Classification (IPC):
**H04W 74/08** (2024.01)     **H04B 7/26** (2006.01)

(52) Cooperative Patent Classification (CPC):
**H04B 7/26; H04W 74/08**

(86) International application number:
**PCT/CN2023/082624**

(87) International publication number:
**WO 2024/192647 (26.09.2024 Gazette 2024/39)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **HUAWEI TECHNOLOGIES CO., LTD.
Shenzhen, Guangdong 518129 (CN)**

(72) Inventors:
• **FENG, Qi
  Shenzhen, Guangdong 518129 (CN)**

• **WANG, Fan
  Shenzhen, Guangdong 518129 (CN)**
• **ZHANG, Zhang
  Shenzhen, Guangdong 518129 (CN)**
• **WEI, Dongdong
  Shenzhen, Guangdong 518129 (CN)**
• **HU, Yuanzhou
  Shenzhen, Guangdong 518129 (CN)**

(74) Representative: **Goddar, Heinz J.
Boehmert & Boehmert
Anwaltspartnerschaft mbB
Pettenkoferstrasse 22
80336 München (DE)**

(54) **COMMUNICATION METHOD, COMMUNICATION APPARATUS AND COMMUNICATION SYSTEM**

(57)     Embodiments of this application provide a communication method, a communication apparatus, and a communication system. The method includes: A first apparatus obtains a cyclic shift sequence pair, where the cyclic shift sequence pair includes a first sequence and a second sequence, the first sequence is obtained by performing cyclic shifts on a first root sequence respectively based on a delay cyclic shift index and a Doppler cyclic shift index, the second sequence is obtained by performing the cyclic shifts on a second root sequence respectively based on the delay cyclic shift index and the Doppler cyclic shift index, and a first root index of the first root sequence is different from a second root index of the second root sequence; and outputs the cyclic shift sequence pair. According to embodiments of this application, a maximum measurable range and/or a maximum measurable velocity can be increased.

FIG. 5

**Description**

**TECHNICAL FIELD**

This application relates to the field of communication technologies, and in particular, to a communication method, a communication apparatus, and a communication system.

**BACKGROUND**

In wireless communication, a user terminal device may perform initial network access or short message service message transmission by sending a random access signal. In a long term evolution (long term evolution, LTE) technology and a new radio (new radio, NR) technology, a random access signal sequence set may be generated by using a Zadoff-Chu (ZC) sequence. The sequence set is obtained by performing different cyclic shifts on the same original ZC sequence. Due to an ideal autocorrelation property of a ZC sequence, sequences obtained by performing different cyclic shifts on a same root ZC sequence are orthogonal to each other. Downlink signal synchronization and uplink random access may be implemented by using a correlation of the ZC sequence, and pilot multiplexing may be implemented by using orthogonality of the ZC sequence.

A zero correlation zone may be formed by performing cyclic shifts on the ZC sequence. Therefore, uplink user access and delay estimation may be implemented by using a random access signal formed by the ZC sequence, and a range between a user and a base station and a velocity of the user relative to the base station are obtained through measurement. Some attributes of a target object, including a range or a velocity, may be determined by using a sensing signal formed by the ZC sequence. However, all the foregoing ZC sequences are single ZC sequences, and the range and the velocity that can be obtained through measurement by using the single ZC sequence are limited. How to break through the limitation and increase a measurable range and velocity is a problem that needs to be urgently resolved currently.

**SUMMARY**

According to a communication method, a communication apparatus, and a communication system provided in this application, a maximum measurable range and/or a maximum measurable velocity can be increased.

According to a first aspect, this application provides a communication method, including: A first apparatus obtains a cyclic shift sequence pair, where the cyclic shift sequence pair includes a first sequence and a second sequence, the first sequence is obtained by performing cyclic shifts on a first root sequence respectively based on a delay cyclic shift index and a Doppler cyclic shift index, the second sequence is obtained by performing the cyclic shifts on a second root sequence respectively based on the delay cyclic shift index and the Doppler cyclic shift index, and a first root index of the first root sequence is different from a second root index of the second root sequence; and outputs the cyclic shift sequence pair.

In the foregoing method, the first apparatus may be a terminal device or a functional module (for example, a circuit or a chip) in the terminal device, or may be a network device or a functional module (for example, a circuit or a chip) in the network device. A second apparatus may be a terminal device or a functional module (for example, a circuit or a chip) in the terminal device, or may be a network device or a functional module (for example, a circuit or a chip) in the network device. For example, in some scenarios (for example, random access), when the first apparatus is the terminal device or the functional module (for example, the circuit or the chip) in the terminal device, the second apparatus is the network device or the functional module (for example, the circuit or the chip) in the network device. In some other scenarios (for example, sensing), when the first apparatus is the network device or the functional module (for example, the circuit or the chip) in the network device, the second apparatus may be the terminal device or the functional module (for example, the circuit or the chip) in the terminal device. When the first apparatus is the terminal device or the functional module (for example, the circuit or the chip) in the terminal device, the second apparatus may be the terminal device or the functional module (for example, the circuit or the chip) in the terminal device. When the first apparatus is the network device or the functional module (for example, the circuit or the chip) in the network device, the second apparatus may be the network device or the functional module (for example, the circuit or the chip) in the network device. The cyclic shift sequence pair obtained in this embodiment of this application may increase a capacity of an available sequence, and may increase a measurement range and a measurement velocity, to improve communication performance.

In a possible implementation of the first aspect, a coordinate spacing between a first peak of an ambiguity function of the first sequence and a second peak of an ambiguity function of the second sequence in a delay domain is greater than or equal to a first threshold, and/or a coordinate spacing between the first peak of the ambiguity function of the first sequence and the second peak of the ambiguity function of the second sequence in a Doppler domain is greater than or equal to a second threshold. Therefore, impact of a side peak of an ambiguity function of the cyclic shift sequence pair on delay-Doppler estimation can be reduced or even avoided, to reduce or even avoid a timing velocity measurement deviation caused by the side peak of the ambiguity function.

In a possible implementation of the first aspect, the delay cyclic shift index is any one index in a delay cyclic shift set, and the Doppler cyclic shift index is any one index in a Doppler cyclic shift set; and the first sequence and the second sequence have the same delay cyclic shift index, and the first sequence and the second sequence have the same Doppler cyclic shift index. It may be understood that, sequences with different root indexes may form a low ambiguity zone, and the same delay domain cyclic shift and the same Doppler domain cyclic shift are performed on each of the first sequence and the second sequence based on the delay cyclic shift set and the Doppler cyclic shift set, to increase a capacity of the cyclic shift sequence pair.

In a possible implementation of the first aspect, the delay cyclic shift set and the Doppler cyclic shift set each are determined based on one or more target boundary points, the target boundary point is determined based on an adjacent peak pair, the adjacent peak pair includes a third peak of an ambiguity function of the first root sequence and a fourth peak of an ambiguity function of the second root sequence, a coordinate spacing between the third peak and the fourth peak in the delay domain is less than or equal to the first threshold, and a coordinate spacing between the third peak and the fourth peak in the Doppler domain is less than or equal to the second threshold. It may be understood that, the adjacent peak pair causes a delay-Doppler estimation deviation. Therefore, the delay cyclic shift set and the Doppler cyclic shift set determined in this embodiment of this application exclude the adjacent peak pair. Therefore, the first sequence and the second sequence that are obtained by performing the cyclic shifts respectively based on the delay cyclic shift set and the Doppler cyclic shift set can reduce or even avoid a delay-Doppler estimation deviation caused by the adjacent peak pair.

In a possible implementation of the first aspect, the first apparatus may determine a low ambiguity zone based on coordinates of the adjacent peak pair on a delay-Doppler plane, perform a delay domain cyclic shift and a Doppler domain cyclic shift on the first root sequence in the low ambiguity zone to obtain the first sequence, and perform the delay domain cyclic shift and the Doppler domain cyclic shift on the second root sequence in the low ambiguity zone to obtain the second sequence. The delay cyclic shift set and the Doppler cyclic shift set are for determining the low ambiguity zone.

In a possible implementation of the first aspect, the one or more target boundary points are determined based on a plurality of candidate boundary points, where a first target boundary point is any one of the one or more target boundary points; and a coordinate spacing between the first target boundary point and an origin in the Doppler domain is less than or equal to a coordinate spacing between a to-be-determined candidate boundary point and the origin in the Doppler domain, and/or a coordinate spacing between the first target boundary point and the origin in the delay domain is less than a coordinate spacing between the to-be-determined candidate boundary point and the origin in the delay domain, where the to-be-determined candidate boundary point is any candidate boundary point other than the first target boundary point in the plurality of candidate boundary points, and the candidate boundary point is a coordinate point closest to the origin in a side peak zone determined based on the adjacent peak pair; and the coordinate spacing in the Doppler domain is determined based on a Doppler coordinate and a sequence length of the cyclic shift sequence pair, and the coordinate spacing in the delay domain is determined based on a delay coordinate and the sequence length of the cyclic shift sequence pair.

It can be learned that, the one or more target boundary points determined in this embodiment of this application exclude the adjacent peak pair. In this way, the delay cyclic shift set and the Doppler cyclic shift set determined based on the one or more target boundary points also exclude the adjacent peak pair. Therefore, the first sequence and the second sequence that are obtained by performing the cyclic shifts respectively based on the delay cyclic shift set and the Doppler cyclic shift set can reduce or even avoid a delay-Doppler estimation deviation caused by the adjacent peak pair.

In a possible implementation of the first aspect, the adjacent peak pair includes one or more of the following: the third peak and the fourth peak have the same coordinate in the delay domain, and the coordinate spacing between the third peak and the fourth peak in the Doppler domain is less than or equal to the second threshold; the coordinate spacing between the third peak and the fourth peak in the delay domain is less than or equal to the first threshold, and the third peak and the fourth peak have the same coordinate in the Doppler domain; and the coordinate spacing between the third peak and the fourth peak in the delay domain is less than or equal to the first threshold, and the coordinate spacing between the third peak and the fourth peak in the Doppler domain is less than or equal to the second threshold. It can be learned that, the adjacent peak pair has different representation forms on the delay-Doppler plane. Therefore, the side peak zone of the adjacent peak pair also has different representation forms. Therefore, the delay cyclic shift set and the Doppler cyclic shift set that are finally determined based on the adjacent peak pair can reduce or even avoid a delay-Doppler estimation deviation caused by side peak zones at different locations.

In a possible implementation of the first aspect, the first threshold is a delay resolution, and the second threshold is a Doppler resolution. Therefore, the coordinate spacing between the first peak of the ambiguity function of the first sequence and the second peak of the ambiguity function of the second sequence in the delay domain is greater than or equal to the delay resolution, or the coordinate spacing between the first peak of the ambiguity function of the first sequence and the second peak of the ambiguity function of the second sequence in the Doppler domain is greater than or equal to the Doppler resolution. In this way, a timing velocity measurement deviation caused by side peaks of the ambiguity functions of the first sequence and the second sequence can be reduced or even avoided.

In a possible implementation of the first aspect, the cyclic shift sequence pair is for measuring a range between the first apparatus and a target apparatus, or a velocity of the first apparatus relative to the target apparatus.

In a possible implementation of the first aspect, an expression of a discrete-time signal of the cyclic shift sequence pair is as follows:

$$s_{u_1|u_2,k,l}(n) = \tilde{s}_{u_1,k,l}(n) + s_{u_1,k,l}(n - N_{\text{CP}}) + \tilde{s}_{u_2,k,l}(n - N - N_{\text{CP}}) + s_{u_2,k,l}(n - N - 2N_{\text{CP}})$$

$$s_{u_1,k,l}(n) = e^{-j\pi[u_1(n+k\Delta_{\text{T}})(n+k\Delta_{\text{T}}+1)+2nl\Delta_{\text{F}}]/N}, n = 0, 1, \ldots, N - 1$$

$$\tilde{s}_{u_1,k,l}(n) = s_{u_1,k,l}(n + N - N_{\text{CP}}), n = 0, 1, \ldots, N_{\text{CP}} - 1$$

$$s_{u_2,k,l}(n) = e^{-j\pi[u_2(n+k\Delta_{\text{T}})(n+k\Delta_{\text{T}}+1)+2nl\Delta_{\text{F}}]/N}, n = 0, 1, \ldots, N - 1$$

$$\tilde{s}_{u_2,k,l}(n) = s_{u_2,k,l}(n + N - N_{\text{CP}}), n = 0, 1, \ldots, N_{\text{CP}} - 1$$

where $s_{u_1,k,l}(n)$ indicates the first sequence, $\tilde{s}_{u_1,k,l}(n)$ indicates a cyclic prefix of the first sequence, $s_{u_2,k,l}(n)$ indicates the second sequence, $\tilde{s}_{u_2,k,l}(n)$ indicates a cyclic prefix of the second sequence, N indicates the sequence length of the cyclic shift sequence pair, $N_{\text{CP}}$ indicates a length of the cyclic prefix, $u_1$ indicates the first root index, $u_2$ indicates the second root index, $\Delta_{\text{T}}$ indicates a preset maximum delay, $\Delta_{\text{F}}$ indicates a preset maximum Doppler shift, the length of the cyclic prefix is greater than or equal to the preset maximum delay, k indicates the delay cyclic shift index, and l indicates the Doppler cyclic shift index. The first sequence and the second sequence occupy consecutive time domain resources and same frequency domain resources, to reduce overheads of a guard interval between the sequences.

According to a second aspect, an embodiment of this application provides a communication method, including:

A second apparatus receives a cyclic shift sequence pair, where the cyclic shift sequence pair includes a first sequence and a second sequence, the first sequence is obtained by performing cyclic shifts on a first root sequence respectively based on a delay cyclic shift index and a Doppler cyclic shift index, the second sequence is obtained by performing the cyclic shifts on a second root sequence respectively based on the delay cyclic shift index and the Doppler cyclic shift index, and a first root index of the first root sequence is different from a second root index of the second root sequence; and

processes the cyclic shift sequence pair.

In a possible implementation of the second aspect, a coordinate spacing between a first peak of an ambiguity function of the first sequence and a second peak of an ambiguity function of the second sequence in a delay domain is greater than or equal to a first threshold, and/or a coordinate spacing between the first peak of the ambiguity function of the first sequence and the second peak of the ambiguity function of the second sequence in a Doppler domain is greater than or equal to a second threshold.

In a possible implementation of the second aspect, the delay cyclic shift index is any one index in a delay cyclic shift set, and the Doppler cyclic shift index is any one index in a Doppler cyclic shift set; and

the first sequence and the second sequence have the same delay cyclic shift index, and the first sequence and the second sequence have the same Doppler cyclic shift index.

In a possible implementation of the second aspect, the delay cyclic shift set and the Doppler cyclic shift set each are determined based on one or more target boundary points, the target boundary point is determined based on an adjacent peak pair, the adjacent peak pair includes a third peak of an ambiguity function of the first root sequence and a fourth peak of an ambiguity function of the second root sequence, a coordinate spacing between the third peak and the fourth peak in the delay domain is less than or equal to the first threshold, or a coordinate spacing between the third peak and the fourth peak in the Doppler domain is equal to the second threshold.

In a possible implementation of the second aspect, the one or more target boundary points are determined based on a plurality of candidate boundary points, where a first target boundary point is any one of the one or more target boundary points; and a coordinate spacing between the first target boundary point and an origin in the Doppler domain is less than or equal to a coordinate spacing between a to-be-determined candidate boundary point and the origin in the Doppler domain, and/or a coordinate spacing between the first target boundary point and the origin in the delay domain is less than a coordinate spacing between the to-be-determined candidate boundary point and the origin in the delay domain, where the to-be-determined candidate boundary point is any candidate boundary point other than the first target boundary point in the plurality of candidate boundary points, and the candidate boundary point is a coordinate point closest to the origin in a side peak zone determined based on the adjacent peak pair; and the coordinate spacing in the Doppler domain is determined based on a Doppler coordinate and a sequence length of the cyclic shift sequence pair, and the coordinate spacing in the delay domain is determined based on a delay coordinate and the sequence length of the cyclic shift sequence pair.

In a possible implementation of the second aspect, the adjacent peak pair includes one or more of the following: the third peak and the fourth peak have the same coordinate in the delay domain, and the coordinate spacing between the third peak and the fourth peak in the Doppler domain is less than or equal to the second threshold; the coordinate spacing between the third peak and the fourth peak in the delay domain is less than or equal to the first threshold, and the third peak and the first peak have the same coordinate in the Doppler domain; and the coordinate spacing between the third peak and the fourth peak in the delay domain is equal to the first threshold, and the coordinate spacing between the third peak and the first peak in the Doppler domain is equal to the second threshold.

In a possible implementation of the second aspect, the first threshold is a delay resolution, and the second threshold is a Doppler resolution.

In a possible implementation of the second aspect, the cyclic shift sequence pair is for measuring a range between the first apparatus and a target apparatus, or a velocity of the first apparatus relative to the target apparatus; and the target apparatus is an apparatus that receives the cyclic shift sequence pair.

In a possible implementation of the second aspect, an expression of a discrete-time signal of the cyclic shift sequence pair is as follows:

$$s_{u_1|u_2,k,l}(n) = \tilde{s}_{u_1,k,l}(n) + s_{u_1,k,l}(n - N_{\mathrm{CP}}) + \tilde{s}_{u_2,k,l}(n - N - N_{\mathrm{CP}}) + s_{u_2,k,l}(n - N - 2N_{\mathrm{CP}})$$

$$s_{u_1,k,l}(n) = e^{-j\pi[u_1(n+k\Delta_{\mathrm{T}})(n+k\Delta_{\mathrm{T}}+1)+2nl\Delta_{\mathrm{F}}]/N}, n = 0, 1, \dots, N - 1$$

$$\tilde{s}_{u_1,k,l}(n) = s_{u_1,k,l}(n + N - N_{\mathrm{CP}}), n = 0, 1, \dots, N_{\mathrm{CP}} - 1$$

$$s_{u_2,k,l}(n) = e^{-j\pi[u_2(n+k\Delta_{\mathrm{T}})(n+k\Delta_{\mathrm{T}}+1)+2nl\Delta_{\mathrm{F}}]/N}, n = 0, 1, \dots, N - 1$$

$$\tilde{s}_{u_2,k,l}(n) = s_{u_2,k,l}(n + N - N_{\mathrm{CP}}), n = 0, 1, \dots, N_{\mathrm{CP}} - 1$$

where $s_{u_1,k,l}(n)$ indicates the first sequence, $\tilde{s}_{u_1,k,l}(n)$ indicates a cyclic prefix of the first sequence, $s_{u_2,k,l}(n)$ indicates the second sequence, $\tilde{s}_{u_2,k,l}(n)$ indicates a cyclic prefix of the second sequence, N indicates the sequence length of the cyclic shift sequence pair, $N_{\mathrm{CP}}$ indicates a length of the cyclic prefix, $u_1$ indicates the first root index, $u_2$ indicates the second root index, $\Delta_{\mathrm{T}}$ indicates a preset maximum delay, $\Delta_{\mathrm{F}}$ indicates a preset maximum Doppler shift, the length of the cyclic prefix is greater than or equal to the preset maximum delay, $k$ indicates the delay cyclic shift index, and $l$ indicates the Doppler cyclic shift index.

According to a third aspect, an embodiment of this application provides a communication system. The communication system includes a first apparatus and a second apparatus. The first apparatus may be a terminal device or a functional module (for example, a circuit or a chip) in the terminal device, or may be a network device or a functional module (for example, a circuit or a chip) in the network device. The second apparatus may be a terminal device or a functional module (for example, a circuit or a chip) in the terminal device, or may be a network device or a functional module (for example, a circuit or a chip) in the network device.

The first apparatus is configured to obtain a cyclic shift sequence pair, where the cyclic shift sequence pair includes a first sequence and a second sequence, the first sequence is obtained by performing cyclic shifts on a first root sequence respectively based on a delay cyclic shift index and a Doppler cyclic shift index, the second sequence is obtained by performing the cyclic shifts on a second root sequence respectively based on the delay cyclic shift index and the Doppler cyclic shift index, and a first root index of the first root sequence is different from a second root index of the second root sequence; and output the cyclic shift sequence pair.

The second apparatus is configured to receive the cyclic shift sequence pair; and process the cyclic shift sequence pair.

In a possible implementation of the third aspect, a coordinate spacing between a first peak of an ambiguity function of the first sequence and a second peak of an ambiguity function of the second sequence in a delay domain is greater than or equal to a first threshold, and/or a coordinate spacing between the first peak of the ambiguity function of the first sequence and the second peak of the ambiguity function of the second sequence in a Doppler domain is greater than or equal to a second threshold.

In a possible implementation of the third aspect, the delay cyclic shift index is any one index in a delay cyclic shift set, and the Doppler cyclic shift index is any one index in a Doppler cyclic shift set; and

the first sequence and the second sequence have the same delay cyclic shift index, and the first sequence and the second sequence have the same Doppler cyclic shift index.

In a possible implementation of the third aspect, the delay cyclic shift set and the Doppler cyclic shift set each are determined based on one or more target boundary points, the target boundary point is determined based on an adjacent peak pair, the adjacent peak pair includes a third peak of an ambiguity function of the first root sequence and a fourth peak of an ambiguity function of the second root sequence, a coordinate spacing between the third peak and the fourth peak in the delay domain is less than or equal to the first threshold, and a coordinate spacing between the third peak and the fourth peak in the Doppler domain is less than or equal to the second threshold.

In a possible implementation of the third aspect, the one or more target boundary points are determined based on a plurality of candidate boundary points, where a first target boundary point is any one of the one or more target boundary points; and a coordinate spacing between the first target boundary point and an origin in the Doppler domain is less than or equal to a coordinate spacing between a to-be-determined candidate boundary point and the origin in the Doppler domain, and/or a coordinate spacing between the first target boundary point and the origin in the delay domain is less than a coordinate spacing between the to-be-determined candidate boundary point and the origin in the delay domain, where the to-be-determined candidate boundary point is any candidate boundary point other than the first target boundary point in the plurality of candidate boundary points, and the candidate boundary point is a coordinate point closest to the origin in a side peak zone determined based on the adjacent peak pair; and the coordinate spacing in the Doppler domain is determined based on a Doppler coordinate and a sequence length of the cyclic shift sequence pair, and the coordinate spacing in the delay domain is determined based on a delay coordinate and the sequence length of the cyclic shift sequence pair.

In a possible implementation of the third aspect, the adjacent peak pair includes one or more of the following: the third peak and the fourth peak have the same coordinate in the delay domain, and the coordinate spacing between the third peak and the fourth peak in the Doppler domain is less than or equal to the second threshold; the coordinate spacing between the third peak and the fourth peak in the delay domain is less than or equal to the first threshold, and the third peak and the fourth peak have the same coordinate in the Doppler domain; and the coordinate spacing between the third peak and the fourth peak in the delay domain is less than or equal to the first threshold, and the coordinate spacing between the third peak and the fourth peak in the Doppler domain is less than or equal to the second threshold.

In a possible implementation of the third aspect, the first threshold is a delay resolution, and the second threshold is a Doppler resolution.

In a possible implementation of the third aspect, the cyclic shift sequence pair is for measuring a range between the terminal device and a target device, or a velocity of the terminal device relative to the target device.

According to a fourth aspect, an embodiment of this application provides a communication apparatus. The communication apparatus may include modules or units that are in one-to-one correspondence with the methods/operations/steps/actions according to the first aspect. The module or the unit may be a hardware circuit, may be software, or may be implemented by the hardware circuit in combination with the software.

In a possible implementation of the fourth aspect, the communication apparatus includes a communication unit and a processing unit. The processing unit is configured to obtain a cyclic shift sequence pair, where the cyclic shift sequence pair includes a first sequence and a second sequence, the first sequence is obtained by performing cyclic shifts on a first root sequence respectively based on a delay cyclic shift index and a Doppler cyclic shift index, the second sequence is obtained by performing the cyclic shifts on a second root sequence respectively based on the delay cyclic shift index and the Doppler cyclic shift index, and a first root index of the first root sequence is different from a second root index of the second root sequence; and the communication unit is configured to output the cyclic shift sequence pair.

In a possible implementation of the fourth aspect, a coordinate spacing between a first peak of an ambiguity function of the first sequence and a second peak of an ambiguity function of the second sequence in a delay domain is greater than or equal to a first threshold, and/or a coordinate spacing between the first peak of the ambiguity function of the first sequence and the second peak of the ambiguity function of the second sequence in a Doppler domain is greater than or equal to a second threshold.

In a possible implementation of the fourth aspect, the delay cyclic shift index is any one index in a delay cyclic shift set, and the Doppler cyclic shift index is any one index in a Doppler cyclic shift set; and

the first sequence and the second sequence have the same delay cyclic shift index, and the first sequence and the second sequence have the same Doppler cyclic shift index.

In a possible implementation of the fourth aspect, the delay cyclic shift set and the Doppler cyclic shift set each are determined based on one or more target boundary points, the target boundary point is determined based on an adjacent peak pair, the adjacent peak pair includes a third peak of an ambiguity function of the first root sequence and a fourth peak of an ambiguity function of the second root sequence, a coordinate spacing between the third peak and the fourth peak in the delay domain is less than or equal to the first threshold, and a coordinate spacing between the third peak and the fourth peak in the Doppler domain is less than or equal to the second threshold.

In a possible implementation of the fourth aspect, the one or more target boundary points are determined based on a plurality of candidate boundary points, where a first target boundary point is any one of the one or more target boundary points; and a coordinate spacing between the first target boundary point and an origin in the Doppler domain is less than or equal to a coordinate spacing between a to-be-determined candidate boundary point and the origin in the Doppler domain, and/or a coordinate spacing between the first target boundary point and the origin in the delay domain is less than a coordinate spacing between the to-be-determined candidate boundary point and the origin in the delay domain, where the to-be-determined candidate boundary point is any candidate boundary point other than the first target boundary point in the plurality of candidate boundary points, and the candidate boundary point is a coordinate point closest to the origin in a side peak zone determined based on the adjacent peak pair; and the coordinate spacing in the Doppler domain is determined based on a Doppler coordinate and a sequence length of the cyclic shift sequence pair, and the coordinate spacing in the delay domain is determined based on a delay coordinate and the sequence length of the cyclic shift sequence pair.

In a possible implementation of the fourth aspect, the adjacent peak pair includes one or more of the following: the third peak and the fourth peak have the same coordinate in the delay domain, and the coordinate spacing between the third peak and the fourth peak in the Doppler domain is less than or equal to the second threshold; the coordinate spacing between the third peak and the fourth peak in the delay domain is less than or equal to the first threshold, and the third peak and the fourth peak have the same coordinate in the Doppler domain; and the coordinate spacing between the third peak and the fourth peak in the delay domain is less than or equal to the first threshold, and the coordinate spacing between the third peak and the fourth peak in the Doppler domain is less than or equal to the second threshold.

In a possible implementation of the fourth aspect, the first threshold is a delay resolution, and the second threshold is a Doppler resolution.

In a possible implementation of the fourth aspect, the cyclic shift sequence pair is for measuring a range between the first apparatus and a target apparatus, or a velocity of the first apparatus relative to the target apparatus.

In a possible implementation of the fourth aspect, an expression of a discrete-time signal of the cyclic shift sequence pair is as follows:

$$s_{u_1|u_2,k,l}(n) = \tilde{s}_{u_1,k,l}(n) + s_{u_1,k,l}(n - N_{\mathrm{CP}}) + \tilde{s}_{u_2,k,l}(n - N - N_{\mathrm{CP}}) + s_{u_2,k,l}(n - N - 2N_{\mathrm{CP}})$$

$$s_{u_1,k,l}(n) = e^{-j\pi[u_1(n+k\Delta_{\mathrm{T}})(n+k\Delta_{\mathrm{T}}+1)+2nl\Delta_{\mathrm{F}}]/N}, n = 0, 1, ..., N-1$$

$$\tilde{s}_{u_1,k,l}(n) = s_{u_1,k,l}(n + N - N_{\mathrm{CP}}), n = 0, 1, ..., N_{\mathrm{CP}} - 1$$

$$s_{u_2,k,l}(n) = e^{-j\pi[u_2(n+k\Delta_{\mathrm{T}})(n+k\Delta_{\mathrm{T}}+1)+2nl\Delta_{\mathrm{F}}]/N}, n = 0, 1, ..., N-1$$

$$\tilde{s}_{u_2,k,l}(n) = s_{u_2,k,l}(n + N - N_{\mathrm{CP}}), n = 0, 1, ..., N_{\mathrm{CP}} - 1$$

where $s_{u_1,k,l}(n)$ indicates the first sequence, $\tilde{s}_{u_1,k,l}(n)$ indicates a cyclic prefix of the first sequence, $s_{u_2,k,l}(n)$ indicates the second sequence, $\tilde{s}_{u_2,k,l}(n)$ indicates a cyclic prefix of the second sequence, $N$ indicates the sequence length of the cyclic shift sequence pair, $N_{\mathrm{CP}}$ indicates a length of the cyclic prefix, $u_1$ indicates the first root index, $u_2$ indicates the second root index, $\Delta_{\mathrm{T}}$ indicates a preset maximum delay, $\Delta_{\mathrm{F}}$ indicates a preset maximum Doppler shift, the length of the cyclic prefix is greater than or equal to the preset maximum delay, $k$ indicates the delay cyclic shift index, and $l$ indicates the Doppler cyclic shift index.

According to a fifth aspect, an embodiment of this application provides a communication apparatus. The communication apparatus may include modules or units that are in one-to-one correspondence with the methods/operations/steps/actions according to the second aspect. The module or the unit may be a hardware circuit, may be software, or may be implemented by the hardware circuit in combination with the software.

In a possible implementation of the fifth aspect, the communication apparatus includes a communication unit and a processing unit. The communication unit is configured to receive a cyclic shift sequence pair, where the cyclic shift sequence pair includes a first sequence and a second sequence, the first sequence is obtained by performing cyclic shifts on a first root sequence respectively based on a delay cyclic shift index and a Doppler cyclic shift index, the second sequence is obtained by performing the cyclic shifts on a second root sequence respectively based on the delay cyclic shift index and the Doppler cyclic shift index, and a first root index of the first root sequence is different from a second root index of the second root sequence; and the processing unit is configured to process the cyclic shift sequence pair.

In a possible implementation of the fifth aspect, a coordinate spacing between a first peak of an ambiguity function of the first sequence and a second peak of an ambiguity function of the second sequence in a delay domain is greater than or equal to a first threshold, and/or a coordinate spacing between the first peak of the ambiguity function of the first sequence and the second peak of the ambiguity function of the second sequence in a Doppler domain is greater than or equal to a second threshold.

In a possible implementation of the fifth aspect, the delay cyclic shift index is any one index in a delay cyclic shift set, and the Doppler cyclic shift index is any one index in a Doppler cyclic shift set; and

the first sequence and the second sequence have the same delay cyclic shift index, and the first sequence and the second sequence have the same Doppler cyclic shift index.

In a possible implementation of the fifth aspect, the delay cyclic shift set and the Doppler cyclic shift set each are determined based on one or more target boundary points, the target boundary point is determined based on an adjacent peak pair, the adjacent peak pair includes a third peak of an ambiguity function of the first root sequence and a fourth peak of an ambiguity function of the second root sequence, a coordinate spacing between the third peak and the fourth peak in the delay domain is less than or equal to the first threshold, or a coordinate spacing between the third peak and the fourth peak in the Doppler domain is equal to the second threshold.

In a possible implementation of the fifth aspect, the one or more target boundary points are determined based on a plurality of candidate boundary points, where a first target boundary point is any one of the one or more target boundary points; and a coordinate spacing between the first target boundary point and an origin in the Doppler domain is less than or equal to a coordinate spacing between a to-be-determined candidate boundary point and the origin in the Doppler domain, and/or a coordinate spacing between the first target boundary point and the origin in the delay domain is less than a coordinate spacing between the to-be-determined candidate boundary point and the origin in the delay domain, where the to-be-determined candidate boundary point is any candidate boundary point other than the first target boundary point in the plurality of candidate boundary points, and the candidate boundary point is a coordinate point closest to the origin in a side peak zone determined based on the adjacent peak pair; and the coordinate spacing in the Doppler domain is determined based on a Doppler coordinate and a sequence length of the cyclic shift sequence pair, and the coordinate spacing in the delay domain is determined based on a delay coordinate and the sequence length of the cyclic shift sequence pair.

In a possible implementation of the fifth aspect, the adjacent peak pair includes one or more of the following: the third peak and the fourth peak have the same coordinate in the delay domain, and the coordinate spacing between the third peak and the fourth peak in the Doppler domain is less than or equal to the second threshold; the coordinate spacing between the third peak and the fourth peak in the delay domain is less than or equal to the first threshold, and the third peak and the first peak have the same coordinate in the Doppler domain; and the coordinate spacing between the third peak and the fourth peak in the delay domain is equal to the first threshold, and the coordinate spacing between the third peak and the first peak in the Doppler domain is equal to the second threshold.

In a possible implementation of the fifth aspect, the first threshold is a delay resolution, and the second threshold is a Doppler resolution.

In a possible implementation of the fifth aspect, the cyclic shift sequence pair is for measuring a range between the first apparatus and a target apparatus, or a velocity of the first apparatus relative to the target apparatus; and the target apparatus is an apparatus that receives the cyclic shift sequence pair.

In a possible implementation of the fifth aspect, an expression of a discrete-time signal of the cyclic shift sequence pair is as follows:

$$s_{u_1|u_2,k,l}(n) = \tilde{s}_{u_1,k,l}(n) + s_{u_1,k,l}(n - N_{\mathrm{CP}}) + \tilde{s}_{u_2,k,l}(n - N - N_{\mathrm{CP}}) + s_{u_2,k,l}(n - N - 2N_{\mathrm{CP}})$$

$$s_{u_1,k,l}(n) = e^{-j\pi[u_1(n+k\Delta_{\mathrm{T}})(n+k\Delta_{\mathrm{T}}+1)+2nl\Delta_{\mathrm{F}}]/N}, n = 0, 1, ..., N - 1$$

$$\tilde{s}_{u_1,k,l}(n) = s_{u_1,k,l}(n + N - N_{\mathrm{CP}}), n = 0, 1, ..., N_{\mathrm{CP}} - 1$$

$$s_{u_2,k,l}(n) = e^{-j\pi[u_2(n+k\Delta_{\mathrm{T}})(n+k\Delta_{\mathrm{T}}+1)+2nl\Delta_{\mathrm{F}}]/N}, n = 0, 1, ..., N - 1$$

$$\tilde{s}_{u_2,k,l}(n) = s_{u_2,k,l}(n + N - N_{\mathrm{CP}}), n = 0, 1, ..., N_{\mathrm{CP}} - 1$$

where $s_{u_1,k,l}(n)$ indicates the first sequence, $\tilde{s}_{u_1,k,l}(n)$ indicates a cyclic prefix of the first sequence, $s_{u_2,k,l}(n)$ indicates the

second sequence, $\bar{s}_{u_2,k,l}(n)$ indicates a cyclic prefix of the second sequence, $N$ indicates the sequence length of the cyclic shift sequence pair, $N_{CP}$ indicates a length of the cyclic prefix, $u_1$ indicates the first root index, $u_2$ indicates the second root index, $\Delta_T$ indicates a preset maximum delay, $\Delta_F$ indicates a preset maximum Doppler shift, the length of the cyclic prefix is greater than or equal to the preset maximum delay, $k$ indicates the delay cyclic shift index, and $l$ indicates the Doppler cyclic shift index.

According to a sixth aspect, an embodiment of this application provides a communication apparatus. The communication apparatus includes a processor. The processor is configured to execute instructions stored in a memory, or run a logic circuit, to cause the communication apparatus to implement the method according to any one of the first aspect or the second aspect.

In a possible implementation, the communication apparatus further includes a communication interface. The communication interface is configured to receive and/or send data, and/or the communication interface is configured to provide input and/or output for the processor.

In a possible implementation, the communication apparatus further includes a memory. The memory is configured to store at least one of instructions, a configuration file of the logic circuit, and data. Optionally, the processor and the memory may be further integrated into one component, that is, the processor and the memory may be further integrated together.

In the foregoing embodiment, the processor (or referred to as a general-purpose processor) that performs the method by invoking the computer instructions is used as an example for description. During specific implementation, the processor may alternatively be a dedicated processor. In this case, the computer instructions are already pre-loaded on the processor. Optionally, the processor may alternatively include both a dedicated processor and a general-purpose processor.

According to a seventh aspect, an embodiment of this application provides a computer-readable storage medium. The computer-readable storage medium stores instructions, and when the instructions are run on at least one processor, the method according to any one of the first aspect or the second aspect is implemented.

According to an eighth aspect, this application provides a computer program product. The computer program product includes computer instructions, and when the instructions are run on at least one processor, the method according to any one of the first aspect or the second aspect is implemented.

Optionally, the computer program product may be a software installation package or an image package. When the foregoing method needs to be used, the computer program product may be downloaded, and the computer program product is executed on a computing device.

According to a ninth aspect, this application provides a chip system. The chip system includes at least one processor, a memory, and an interface circuit, the memory, the interface circuit, and the at least one processor are interconnected through a line, the at least one memory stores a computer program, and when the computer program is executed by the processor, the method according to any one of the first aspect or the second aspect is implemented.

According to a tenth aspect, this application provides a communication system. The communication system includes the communication apparatus according to the fourth aspect and the communication apparatus according to the fifth aspect.

For beneficial effects of the technical solutions provided in the second aspect to the tenth aspect of this application, refer to beneficial effects of the technical solution in the first aspect. Details are not described herein again.

## BRIEF DESCRIPTION OF DRAWINGS

FIG. 1 is a diagram of a structure of a communication system according to an embodiment of this application;
FIG. 2 is a diagram of time-frequency resources of a Zadoff-Chu sequence according to an embodiment of this application;
FIG. 3 is a diagram of an ambiguity function of a cyclic shift sequence based on a Zadoff-Chu sequence according to an embodiment of this application;
FIG. 4(a) to FIG. 4(d) are a diagram of comparison between a related function of a single cyclic shift sequence and an ambiguity function of a cyclic shift sequence pair according to an embodiment of this application;
FIG. 5 is a schematic flowchart of a communication method according to an embodiment of this application;
FIG. 6A is a diagram of time-frequency resources of a cyclic shift sequence pair according to an embodiment of this application;
FIG. 6B is a diagram of an ambiguity function of a sequence pair according to an embodiment of this application;
FIG. 6C is a diagram of a cyclic shift sequence pair according to an embodiment of this application;
FIG. 7 is a diagram of a related location relationship between adjacent peak pairs according to an embodiment of this application;

FIG. 8 is a diagram of a side peak zone of an ambiguity function according to an embodiment of this application;

FIG. 9A is a diagram of determining a target boundary point in candidate boundary points according to an embodiment of this application;

FIG. 9B is a diagram of constructing a cyclic shift sequence pair in a low ambiguity zone according to an embodiment of this application;

FIG. 10A is a diagram of determining one target boundary point in candidate boundary points according to an embodiment of this application;

FIG. 10B is a diagram of simulation of an ambiguity function of a cyclic shift sequence pair having one target boundary point according to an embodiment of this application;

FIG. 11A is a diagram of determining two target boundary points in candidate boundary points according to an embodiment of this application;

FIG. 11B is a diagram of simulation of an ambiguity function of a cyclic shift sequence pair having two target boundary points according to an embodiment of this application;

FIG. 12A is a diagram of determining three target boundary points in candidate boundary points according to an embodiment of this application;

FIG. 12B is a diagram of an ambiguity function of a cyclic shift sequence pair having two target boundary points according to an embodiment of this application;

FIG. 13A is a diagram of determining four target boundary points in candidate boundary points according to an embodiment of this application;

FIG. 13B is a diagram of an ambiguity function of a cyclic shift sequence pair having four target boundary points according to an embodiment of this application;

FIG. 14 is a diagram of a structure of a communication apparatus according to an embodiment of this application; and

FIG. 15 is a diagram of a structure of a communication apparatus according to an embodiment of this application.

## DESCRIPTION OF EMBODIMENTS

The following describes embodiments of this application with reference to accompanying drawings in embodiments of this application.

Technical solutions provided in this application may be applied to various communication systems, for example, 5th generation (5th Generation, 5G) mobile communication systems such as a long term evolution (long term evolution, LTE) system, an LTE frequency division duplex (frequency division duplex, FDD) system, an LTE time division duplex (time division duplex, TDD) system, and a new radio (new radio, NR) system, and systems evolved after 5G such as a 6th generation (6th Generation, 6G) mobile communication system and an integrated sensing and communication system.

The technical solutions provided in this application may be further applied to machine type communication (machine type communication, MTC), a long term evolution for machine-to-machine communication (long term evolution-machine, LTE-M) technology, a device-to-device (device-to-device, D2D) network, a machine-to-machine (machine-to-machine, M2M) network, an internet of things (internet of things, IoT) network, or another network. The IoT network may include, for example, an internet of vehicles. A communication manner in an internet of vehicles system is collectively referred to as vehicle-to-another device (vehicle-to-X, V2X, where X may represent everything). For example, the V2X may include vehicle-to-vehicle (vehicle-to-vehicle, V2V) communication, vehicle-to-infrastructure (vehicle-to-infrastructure, V2I) communication, vehicle-to-pedestrian (vehicle-to-pedestrian, V2P) communication, or vehicle-to-network (vehicle-to-network, V2N) communication. The V2X communication system is a sidelink (sidelink, SL) transmission technology based on D2D communication.

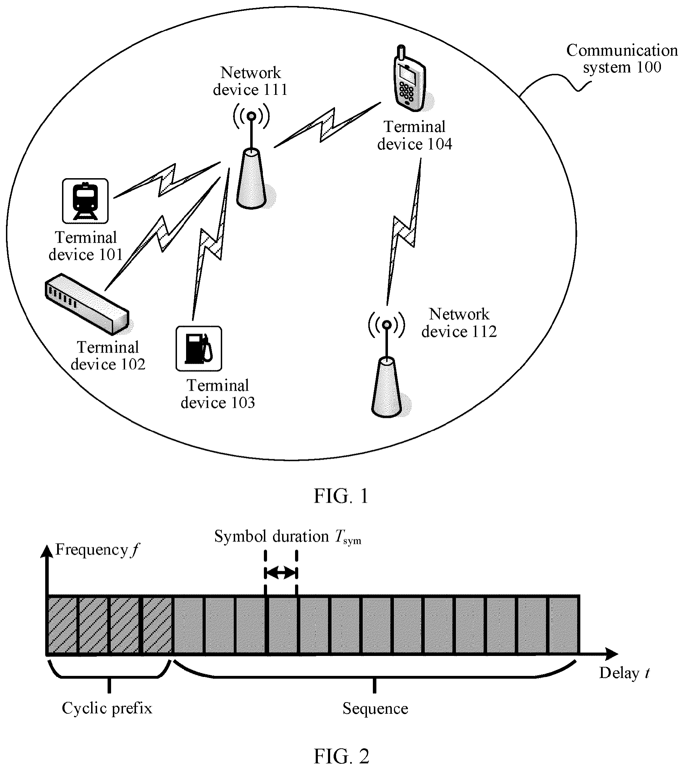

To better understand a communication method, an apparatus, and a system provided in embodiments of this application, the following first describes a communication system used in embodiments of this application. FIG. 1 is a diagram of a structure of a communication system 100 according to an embodiment of this application. The communication system 100 includes a network device 111, a network device 112, a terminal device 101, a terminal device 102, a terminal device 103, and a terminal device 104. It should be understood that, the communication system 100 may include more or fewer network devices and more or fewer terminal devices. The network device and the terminal device may be hardware, software obtained through functional division, or a combination thereof. The network device 111, the network device 112, and the terminal devices 101 to 104 may communicate with each other through another device or network element. In the system, the network device 111 and the network device 112 may perform data transmission with the plurality of terminal devices 101 to 104. For example, the network device 111 sends downlink data to the terminal devices 101 to 104, and the terminal devices 101 to 104 may also send uplink data to the network device 111. In addition, the terminal device 101, the terminal device 102, the terminal device 103, and the terminal device 104 may also form a communication system. In the system, the network device 111 may send downlink data to the terminal device 101 and the terminal device 104, and then the terminal device 104 sends the downlink data to the terminal device 102 or the terminal device 103. The terminal device 101 and the terminal device 104 may also send uplink data to the network device 111. The method in embodiments of this application may be applied to the communication system 100 shown in FIG. 1.

(1) A terminal device includes a device that provides voice and/or data connectivity for a user. For example, the terminal device may include a processing device connected to a wireless modem. The terminal device may communicate with a core network through a radio access network (radio access network, RAN), exchange voice or data with the RAN, or exchange the voice and the data with the RAN. The terminal device may include a handheld terminal, a notebook computer, a subscriber unit (subscriber unit), a cellular phone (cellular phone), a smart phone (smart phone), a wireless data card, a personal digital assistant (personal digital assistant, PDA) computer, a tablet computer, a palmtop computer, a wireless modem (modem), a handheld device (handheld), a laptop computer (laptop computer), a cordless phone (cordless phone) or a wireless local loop (wireless local loop, WLL), and a machine type communication (machine type communication, MTC) terminal, a wearable device (for example, a smart watch, a smart band, or a pedometer), a vehicle-mounted device (for example, a car, a bicycle, an electric vehicle, an airplane, a ship, a train, or a high-speed railway), a vehicle-to-everything (vehicle-to-everything, V2X) terminal device, a machine-to-machine/machine type communication (machine-to-machine/machine type communication, M2M/MTC) terminal device, an internet of things (internet of things, IoT) terminal device, a light terminal device (light UE), reduced capability user equipment (reduced capability UE, REDCAP UE), a smart point of sale (point of sale, POS) machine, customer-premises equipment (customer-premises equipment, CPE), a mobile internet device (mobile internet device, MID), a virtual reality (virtual reality, VR) device, an augmented reality (augmented reality, AR) device, a wireless terminal in industrial control (industrial control), a smart home device (for example, a refrigerator, a TV, an air conditioner, or an electricity meter), a smart robot, a workshop device, a wireless terminal in self driving (self driving), a wireless terminal in remote medical surgery (remote medical surgery), a wireless terminal in smart grid (smart grid), a wireless terminal in transportation safety (transportation safety), a wireless terminal in a smart city (smart city), a wireless terminal in a smart home (smart home), a flight device (for example, a smart robot, a hot air balloon, an unmanned aerial vehicle, or an airplane), or another device that can access a network.

In this embodiment of this application, the terminal device may further include a relay (relay). Alternatively, it is understood as that, any device that can perform data communication with a network device (for example, a base station) may be considered as a terminal device.

In embodiments of this application, an apparatus configured to implement a function of the terminal device may be a terminal device, or may be an apparatus that can support the terminal device in implementing the function, for example, a chip system. The apparatus may be installed in the terminal device. In embodiments of this application, the chip system may be formed by a chip, or may include a chip and another discrete component. In the technical solutions provided in embodiments of this application, an example in which the apparatus configured to implement the function of the terminal is the terminal device is used for describing the technical solutions provided in embodiments of this application.

(2) A network device is a node in the radio access network (radio access network, RAN), and may also be referred to as an access network device or a RAN node (or device). The network device 101 is configured to help a terminal implement wireless access. The plurality of network devices in the communication system 100 may be nodes of a same type, or may be nodes of different types.

In a possible scenario, the network device may be a base station (base station), an evolved base station (evolved NodeB, eNodeB), an access point (access point, AP), a transmission reception point (transmission reception point, TRP), a next generation base station (next generation NodeB, gNB), a base station in a 6G mobile communication system, a base station in a future mobile communication system, a satellite, an access node in a Wi-Fi system, an integrated access and backhaul (integrated access and backhaul, IAB) node, a transmitting point (transmitting point, TP), a mobile switching center, a device that functions as a base station function in D2D, V2X, M2M, or unmanned aerial vehicle communication, or the like. The network device may be a macro base station, a micro base station, an indoor base station, a relay node, a donor node, or a radio controller in a CRAN scenario. The network device may alternatively be a device that functions as a base station in device-to-device (device-to-device, D2D) communication, internet of vehicles communication, unmanned aerial vehicle communication, or machine communication. Optionally, the network device may alternatively be a server, a wearable device, a vehicle, a vehicle-mounted device, or the like. For example, an access network device in a vehicle-to-everything (vehicle-to-everything, V2X) technology may be a road side unit (road side unit, RSU).

In another possible scenario, the plurality of network devices collaborate to assist the terminal in implementing radio access, and different network devices respectively implement some functions of a base station. For example, the network device may be a central unit (central unit, CU), a distributed unit (distributed unit, DU), a CU-control plane (control plane, CP), a CU-user plane (user plane, UP), a radio unit (radio unit, RU), or the like. The CU and the DU may be separately arranged, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH). It may be understood that, the network device may be a CU node, a DU node, or a device including a CU node and a DU node. In addition, the CU may be classified as a network device in the access network RAN, or the CU may be classified as a network device in the core network CN. This is not limited herein.

In different systems, the CU (or the CU-CP and the CU-UP), the DU, or the RU may also have different names, but a person skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one unit of the CU (or the CU-CP and the CU-UP), the DU, and the RU in this application may be implemented by using a software module, a hardware module, or a combination of a software module and a hardware module.

The network device may also include a core network device, which is a device that is in the core network (core network, CN) and that provides service support for the terminal device. The core network device may be an access and mobility management function (access and mobility management function, AMF) network element, a session management function (session management function, SMF) network element, a user plane function (user plane function, UPF) network element, or the like, which is not listed one by one herein. The AMF network element may be responsible for access management and mobility management of the terminal device. The SMF network element may be responsible for session management, for example, session establishment of a user. The UPF network element may be a user plane functional entity, and is mainly responsible for connecting to an external network. It should be noted that, the network element in this application may also be referred to as an entity or a functional entity. For example, the AMF network element may also be referred to as an AMF entity or an AMF functional entity. For another example, the SMF network element may also be referred to as an SMF entity, an SMF functional entity, or the like.

In embodiments of this application, an apparatus configured to implement a function of the network device may be a network device, or may be an apparatus that can support the network device in implementing the function, for example, a chip system. The apparatus may be installed in the network device. In the technical solutions provided in embodiments of this application, the network device is used for implementation.

For ease of understanding, some concepts related to embodiments of this application are described below for reference by using examples. Details are as follows.

1. A Zadoff-Chu sequence, referred to as a ZC sequence for short, is a sequence generated through a phase change. The Zadoff-Chu sequence varies depending on whether a sequence length $N_{ZC}$ is an odd number or an even number. An expression of the Zadoff-Chu sequence may be in the following form:

$$s_u(n) = \begin{cases} e^{-j\pi u \cdot n(n+1)/N_{ZC}}, N_{ZC} \text{ is an odd number} \\ e^{-j\pi u \cdot n^2/N_{ZC}}, N_{ZC} \text{ is an even number} \end{cases}, n = 0, 1, \ldots, N_{ZC} - 1$$

$N_{ZC}$ is the length of the Zadoff-Chu sequence, and is an integer greater than 1. A root index (root index) $u = 1, 2, \ldots$, $N_{ZC}$ - 1. The root index $u$ and the sequence length $N_{ZC}$ are mutually prime.

The Zadoff-Chu sequence has the following properties.

(1) The sequence is a periodic sequence, and a periodicity of the sequence is equal to the sequence length $N_{ZC}$, that is, $s_u(n \pm N_{ZC}) = s_u(n)$.

(2) The sequence has a constant amplitude value, and the amplitude value is 1, that is, $|s_u(n)| = 1$.

(3) A sequence obtained through discrete Fourier transform (discrete Fourier transform, DFT) is still a constant-amplitude sequence, and the sequence may be obtained by performing a weighted shift on an original Zadoff-Chu sequence, to omit a DFT operation.

(4) The sequence has an ideal correlation property. A correlation value between two Zadoff-Chu sequences that have a same root index and that are obtained by performing different cyclic shifts on a Zadoff-Chu sequence is 0, or the two Zadoff-Chu sequences are orthogonal to each other. For any Zadoff-Chu sequences with different root indexes (for example, $u_1$ and $u_2$), when $|u_1 - u_2|$ and the sequence length $N_{ZC}$ are mutually prime, an amplitude of a correlation value between the sequences is a fixed value.

The Zadoff-Chu sequence is widely used in a communication system because of the foregoing properties. Examples are as follows:

(1) The constant amplitude property of the Zadoff-Chu sequence makes a signal of the Zadoff-Chu sequence have a low peak-to-average power ratio, to improve efficiency of a power amplifier of a device.

(2) The ideal correlation property of the Zadoff-Chu sequence is used for synchronization, timing estimation, ranging, and signal sensing.

(3) The ideal correlation property of the Zadoff-Chu sequence is used as a signature (signature) sequence or a preamble (preamble) for user identification, cell identification, or beam identification.

2. Quadratic exponential sequence

The quadratic exponential sequence is a sequence in which an order of a highest-order term in exponential factors is 2, and may not be subject to a constraint that the root index in the Zadoff-Chu sequence and the sequence length are mutually prime. In the quadratic exponential sequence, a quadratic term coefficient (corresponding to the root index of the Zadoff-Chu sequence) and the sequence length may be or may not be mutually prime. Therefore, some quadratic exponential sequences also have the properties of the Zadoff-Chu sequence.

3. Doppler shift

When a vibration source like sound, light, or a radio wave moves relative to an observer at a relative velocity, a vibration frequency received by the observer is different from a frequency provided by the vibration source. Such a phenomenon is referred to as a Doppler effect. A frequency change caused by the Doppler effect is referred to as a Doppler shift, which is directly proportional to the relative velocity and directly proportional to the vibration frequency.

4. Zero ambiguity zone/Low ambiguity zone

An ambiguity function of a transmission signal with duration of $T$ and a bandwidth of $B$ is generally defined in a delay-Doppler domain with a delay scope of 0 to $T$ and a Doppler shift scope of $-B/2$ to $B/2$. Therefore, the ambiguity function is an output response of a matched transmit signal filter through which a signal (on which a delay and a Doppler shift are performed) received by a receive end passes. If a signal with an extremely low ambiguity function value exists in a zone of the delay delay-Doppler Doppler domain, the zone is referred to as a low ambiguity zone (low ambiguity zone, LAZ). If a signal with a zero ambiguity function value exists in another zone of the delay delay-Doppler Doppler domain, the zone is referred to as a zero ambiguity zone (zero ambiguity zone, ZAZ).

5. Maximum delay $\Delta_T$ and maximum Doppler shift $\Delta_F$

In a zone (for example, a first zone), ranges between different sending devices and a receiving device may be different, and delays with which signals arrive at the receiving device are also different. Therefore, a maximum value of round-trip transmission delays that may correspond to the sending devices in the first zone needs to be considered for a delay domain cyclic shift. Therefore, the maximum delay $\Delta_T$ may be determined based on a radius of the first zone.

It may be further understood that, movement of the sending device relative to the receiving device causes a Doppler shift, and different movement velocities of the sending devices cause different Doppler shifts. When the movement velocity of the sending device is increased, the Doppler shift is also increased accordingly. Therefore, a maximum Doppler shift that may correspond to the sending devices in the first zone needs to be considered for a Doppler domain cyclic shift. Therefore, the maximum Doppler shift $\Delta_F$ is determined based on a possible maximum movement velocity of the sending devices in the first zone.

The first zone may be a cell, a sensing zone, or the like.

For example, in a communication system, a zone covered by an access network device or a part of the zone covered by the access network device is referred to as a cell, or referred to as a cellular cell. Due to different ranges between different terminals and the access network device, delays with which signals arrive at the access network device are also different. Therefore, a maximum value of round-trip transmission delays that may correspond to the terminals in the cell needs to be considered for a delay domain cyclic shift. Therefore, the maximum delay $\Delta_T$ may be determined based on a radius of the cell.

It may be further understood that, movement of the terminal causes a Doppler shift, and different movement velocities of the terminals cause different Doppler shifts. When a movement velocity of a user is increased, the Doppler shift is also increased accordingly. Therefore, a maximum Doppler shift that may correspond to the terminals in the cell needs to be considered for a Doppler domain cyclic shift. Therefore, the maximum Doppler shift $\Delta_F$ is determined based on a possible maximum movement velocity of the terminals in the cell.

It can be learned from the foregoing analysis that, Zadoff-Chu sequences that have a same root index and that are obtained by performing different cyclic shifts are orthogonal to each other to form a zero correlation zone. The Zadoff-Chu sequences that are obtained by performing different cyclic shifts on a Zadoff-Chu sequence with the same root index and that are orthogonal to each other may be for implementing uplink access, delay estimation, and signal sensing, to measure a range between a terminal device and a base station. An expression of a discrete-time signal of a Zadoff-Chu sequence $s_{u,k}(n)$ using a correlation property may be indicated in the following form:

$$s_{u,k}(n) = e^{-j\pi u(n+k\Delta_{\mathrm{T}})(n+k\Delta_{\mathrm{T}}+1)/N_{\mathrm{ZC}}}, n = 0, 1, \ldots, N_{\mathrm{ZC}} - 1 \quad (1.1)$$

In Formula (1.1), a sequence length $N_{\mathrm{ZC}}$ is a prime number, a root index $u$ = 1, 2, ... , $N_{\mathrm{ZC}}$ - 1, a zero correlation zone is $\Delta_{\mathrm{T}}$, $\Delta_{\mathrm{T}}$ indicates a maximum delay, and a cyclic shift index $k = 0, 1, \ldots, \lfloor N_{\mathrm{ZC}}/\Delta_{\mathrm{T}} \rfloor - 1$. A symbol "⌊ ⌋" indicates rounding down.

FIG. 2 is a diagram of time-frequency resources of a Zadoff-Chu sequence according to an embodiment of this application. It can be learned from FIG. 2 that, the Zadoff-Chu sequence includes a cyclic prefix (cyclic prefix, CP) and the sequence itself in terms of time. The cyclic prefix is a prefix of a symbol. Due to existence of a plurality of paths, if a guard interval is not added in the form of a cyclic prefix, a tail of a previous symbol falls into a sampling interval of a current symbol, causing inter-symbol interference (Inter-Symbol Interference, ISI). To reduce or even avoid inter-channel interference, a cyclic prefix is added at a transmit end, so that a receive end may obtain an ideal impulse function by using periodic correlation.

A Zadoff-Chu sequence set may be obtained by performing different cyclic shifts of a same root index on the Zadoff-Chu sequence shown in Formula (1.1). The Zadoff-Chu sequence set includes $\lfloor N_{\mathrm{ZC}}/\Delta_{\mathrm{T}} \rfloor$ Zadoff-Chu sequences, which are $s_{u,0}(n), s_{u,1}(n), \ldots, s_{u,\lfloor N_{\mathrm{ZC}}/\Delta_{\mathrm{T}}\rfloor-1}(n)$. The sequences in the Zadoff-Chu sequence set may form a zero correlation zone, to multiplex a given physical random access channel (physical random access channel, PRACH) resource.

To improve a capability of the Zadoff-Chu sequence in resisting a Doppler shift, in a possible implementation, a cyclic shift on the Zadoff-Chu sequence may be limited, and a cyclic shift is selected from a limited set to achieve an objective of measuring a delay and resisting a Doppler.

In still another possible implementation, periodic repetition may be performed on the Zadoff-Chu sequence to obtain an extended Zadoff-Chu sequence, and a zero ambiguity zone is constructed by using a delay domain cyclic shift. However, an extended Zadoff-Chu sequence obtained by using a delay domain cyclic shift is merely to construct the zero ambiguity zone by performing division on a delay domain. In this way, there are few available extended Zadoff-Chu sequences, limiting a sequence capacity.

However, in the foregoing possible implementations, a single sequence is used, and a velocity and a range that can be measured by using the single sequence are limited. Therefore, there are few scenarios in which the single sequence can be applied.

Performing a delay domain cyclic shift and a Doppler domain cyclic shift on a Zadoff-Chu sequence is used to describe why the range and the velocity that can be measured by using the single sequence are limited.

An expression of a discrete-time signal of a cyclic shift sequence based on the Zadoff-Chu sequence may be as follows:

$$s_{u,k,l}(n) = e^{-j\pi[u(n+k\Delta_{\mathrm{T}})(n+k\Delta_{\mathrm{T}}+1)+2nl\Delta_{\mathrm{F}}]/N}, n = 0, 1, \ldots, N - 1 \quad (2.1)$$

In Formula (2.1), $s_{u,k,l}(n)$ is the Zadoff-Chu sequence, a sequence length $N$ is a prime number, a quadratic term coefficient $u$ meets: $\Delta_{\mathrm{F}} \le u \le \lfloor N/\Delta_{\mathrm{T}} \rfloor$, a delay cyclic shift index $k = 0, 1, \ldots, \lfloor N/u\Delta_{\mathrm{T}} \rfloor - 1$, a Doppler cyclic shift index $l = 0, 1, \ldots, \lfloor u/\Delta_{\mathrm{F}} \rfloor - 1$, $\Delta_{\mathrm{T}}$ indicates a preset maximum delay, $\Delta_{\mathrm{F}}$ indicates a preset maximum Doppler shift, and $\Delta_{\mathrm{T}} \times \Delta_{\mathrm{F}}$ indicates a zero ambiguity zone.

The delay cyclic shift index k may also be referred to as a large-scale cyclic shift index, which means that a phase change caused by cyclic shift is equal to a multiple of the quadratic term coefficient $u$ of the sequence, and does not exceed the sequence length $N$.

The Doppler cyclic shift index $l$ may also be referred to as a small-scale cyclic shift index, which means that a phase change caused by cyclic shift does not exceed the quadratic term coefficient $u$ of the sequence.

It should be noted that, both $N_{\mathrm{ZC}}$ in Formula (1.1) and N in Formula (2.1) are sequence lengths.

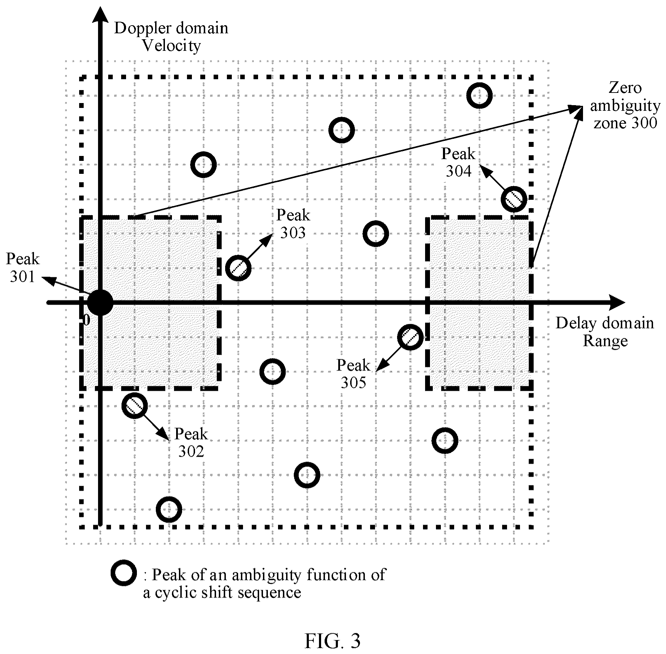

FIG. 3 is a diagram of an ambiguity function of a cyclic shift sequence based on a Zadoff-Chu sequence according to an embodiment of this application. The ambiguity function shown in FIG. 3 is an ambiguity function of a cyclic shift sequence set obtained according to Formula (2.1). The cyclic shift sequence set is obtained by performing a delay domain cyclic shift and a Doppler domain cyclic shift of a same root index on the cyclic shift sequence $s_{u,k,l}(n)$ based on the Zadoff-Chu sequence shown in Formula (2.1). It can be learned from FIG. 3 that, a circle indicates a peak of the ambiguity function, and the ambiguity function of $s_{u,k,l}(n)$ has only a single peak in a specific delay-Doppler interval, to form a zero ambiguity zone. It may be understood that, because only one peak exists in the zero ambiguity zone, a maximum zero ambiguity zone 300 may be obtained based on a peak 301 located at an origin and peaks around the peak 301. It can be learned from FIG. 3 that, the zero ambiguity zone 300 is adjacent to a peak 302, a peak 303, a peak 304, and a peak 305.

The zero ambiguity zone exists in the cyclic shift sequence based on the Zadoff-Chu sequence, and the delay domain cyclic shift and the Doppler domain cyclic shift can be multiplexed, to obtain more available sequences. It is assumed that symbol duration of the cyclic shift sequence is $T_{sym}$, a subcarrier spacing is $\Delta f$, and $\Delta f = 1/N \cdot T_{sym}$. Correspondingly, a maximum observation range $r = c\Delta_T T_{sym}/2$, and a maximum observation velocity $v = c\Delta_F \Delta f/4f_c$.

$$r \cdot v = c^2 \underbrace{\Delta_T \Delta_F}_{\leq N} \underbrace{T_{sym} \Delta f}_{=1/N} /8f_c \leq c^2/8f_c$$

Therefore, a range-velocity product . $c$ indicates a light velocity, and $f_c$ indicates a carrier frequency offset. In other words, the range-velocity product depends only on a carrier frequency, and is irrelevant to a sequence length, a quadratic term coefficient, and a time-frequency resource.

Therefore, for a specific carrier frequency, a product of a maximum observation range and velocity of a single cyclic shift sequence is a constant, that is, an area of the maximum zero ambiguity zone 300 shown in FIG. 3 is fixed. Therefore, when an observation range is increased, an observation velocity is reduced. To increase the maximum observation range and velocity, that is, when a to-be-measured range-velocity range exceeds the foregoing constant, a constraint of the zero ambiguity zone may be relaxed to a low ambiguity zone, to increase the range-velocity product.

For the limitation that the range-velocity product of the single cyclic shift sequence is the constant, in this application, a cyclic shift sequence pair is introduced to expand an area of the low ambiguity zone, so that the limitation that the range-velocity product of the single cyclic shift sequence is the constant can be avoided, and a range and velocity measurement range can be greatly extended.

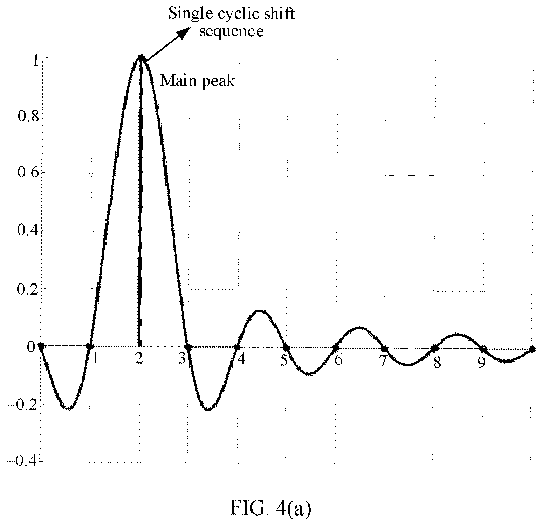

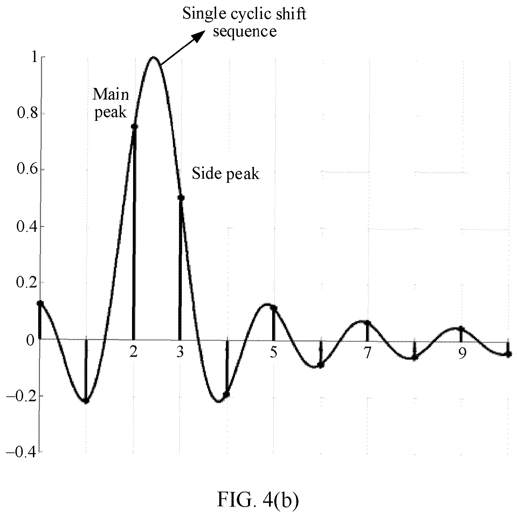

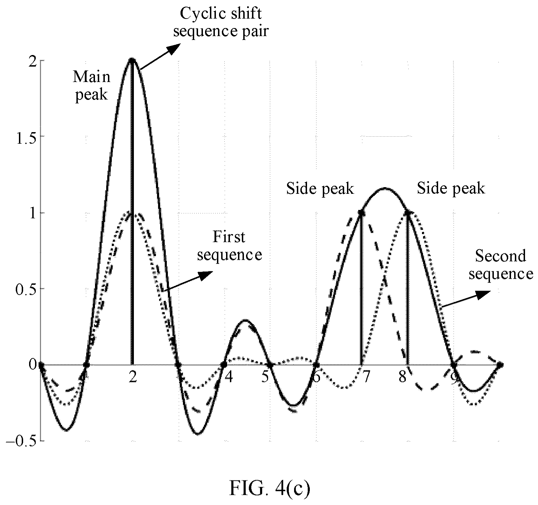

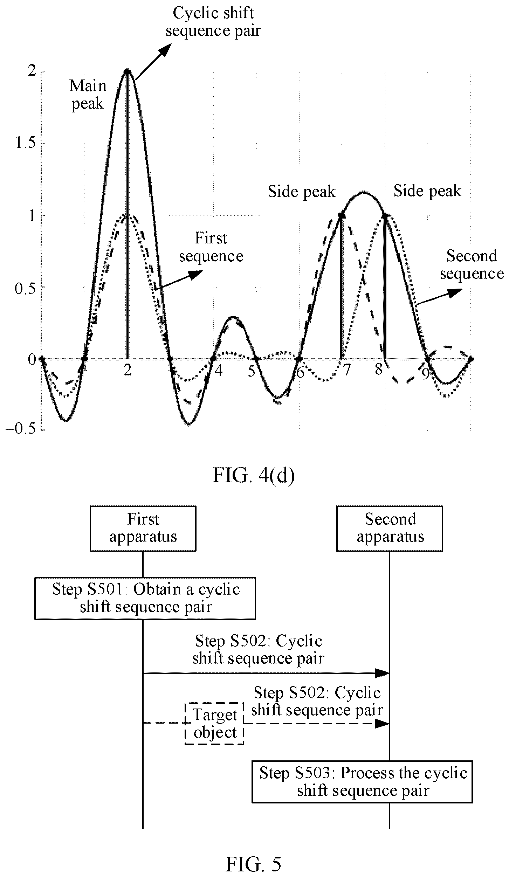

FIG. 4(a) to FIG. 4(d) are a diagram of comparison between a related function of a single cyclic shift sequence and an ambiguity function of a cyclic shift sequence pair according to an embodiment of this application. FIG. 4(a) and FIG. 4(b) are diagrams of the related function of the single cyclic shift sequence, and FIG. 4(c) and FIG. 4(d) are diagrams of the ambiguity function of the cyclic shift sequence pair.

A main lobe width of the related function of the single cyclic shift sequence is equal to a delay resolution, that is, a maximum timing deviation allowed by a system. It can be learned from FIG. 4(a) that, when integer multiple sampling is performed on the single cyclic shift sequence, a timing deviation between a main peak and a side peak of the single cyclic shift sequence is equal to the delay resolution. Therefore, in integer multiple sampling, the main peak of the single cyclic shift sequence can be accurately determined. It can be learned from FIG. 4(b) that, when fractional multiple sampling is performed on the single cyclic shift sequence, the timing deviation between the main peak and the side peak of the single cyclic shift sequence is not greater than the delay resolution. Therefore, in fractional multiple sampling, the main peak of the single cyclic shift sequence can also be accurately determined.

The cyclic shift sequence pair includes a first sequence and a second sequence, and an ambiguity function of the first sequence and an ambiguity function of the second sequence are superposed to obtain the ambiguity function of the cyclic shift sequence pair. A main lobe width of the ambiguity function of the cyclic shift sequence pair is equal to a delay-Doppler resolution, that is, a maximum timing-velocity measurement deviation allowed by the system. It can be learned from FIG. 4(c) that, when integer multiple sampling is performed on the cyclic shift sequence pair, a timing deviation between a main peak and a side peak of the cyclic shift sequence pair is equal to the delay-Doppler resolution. Therefore, in integer multiple sampling, the main peak of the cyclic shift sequence pair can be accurately determined. It can be learned from FIG. 4(d) that, when fractional multiple sampling is performed on the cyclic shift sequence pair, the timing deviation between the main peak and the side peak of the cyclic shift sequence pair is far greater than the delay-Doppler resolution, and a power at the main peak is close to a power at the side peak. Therefore, in fractional multiple sampling, the main peak of the cyclic shift sequence pair cannot be accurately determined.

In conclusion, impact of the side peak of the ambiguity function of the cyclic shift sequence pair on delay-Doppler estimation is far greater than impact of the side peak of the related function of the single cyclic shift sequence on delay estimation. Therefore, a low ambiguity zone in this embodiment of this application is a zone excluding an adjacent peak pair of the cyclic shift sequence pair, to reduce or even avoid incorrect impact of the adjacent peak pair on delay-Doppler estimation. In addition, the low ambiguity zone in this embodiment of this application can support as many delay domain cyclic shift multiplexing and Doppler domain cyclic shift multiplexing as possible, to obtain as many cyclic shift sequence pairs as possible. Therefore, the cyclic shift sequence pair obtained in this embodiment of this application includes the first sequence and the second sequence. A coordinate spacing between a first peak of the ambiguity function of the first sequence and a second peak of the ambiguity function of the second sequence in a delay domain is greater than or equal to a first threshold, or a coordinate spacing between the first peak of the ambiguity function of the first sequence and the second peak of the ambiguity function of the second sequence in a Doppler domain is greater than or equal to a second threshold. Because the coordinate spacing between the first peak and the second peak in the delay domain is greater than or equal to the first threshold, and the coordinate spacing in the Doppler domain is greater than or equal to the second threshold, no interference is caused to sampling of the main peak when integer multiple sampling or fractional multiple sampling is performed on the cyclic shift sequence pair.

It may be understood that, when an area of the low ambiguity zone is larger, more cyclic shift sequence pairs may be obtained when delay domain cyclic shift multiplexing and Doppler domain cyclic shift multiplexing are performed in the low ambiguity zone.

It should be noted that, on a delay-Doppler plane provided in this embodiment of this application, a horizontal coordinate is a delay, and a vertical coordinate is a Doppler. However, this is not limited to another representation form. For example, the horizontal coordinate is the Doppler, and the vertical coordinate is the delay.

It should be noted that, all operators +, -, $\times$, and $(\cdot)^{-1}$ in this application are addition, subtraction, multiplication, and inversion operations in a finite field $\mathbb{Z}_N$ . A correspondence between finite field operations and real number field operations is shown in Table 1.

**Table 1 Correspondence between finite field operations and real number field operations**

| Operator | Finite field operation | Real number field operation |
|---|---|---|
| + | $a + b$ | $(a + b)$ mod $N$ |
| - | $a - b$ | $(a - b)$ mod N |
| $\times$ | $ab$ | $ab$ mod $N$ |
| $(\cdot)^{-1}$ | $a^{-1}$ | $\dfrac{kN + 1}{a} : \forall k \in \{0, 1, \dots, a - 1\}, \text{s. t. } a \,|\, (kN + 1)$ |

The following describes in detail the method in embodiments of this application.

FIG. 5 is a schematic flowchart of a communication method according to an embodiment of this application. Optionally, the method may be applied to the foregoing communication system, for example, the communication system described in the implementation in FIG. 1.

The communication method shown in FIG. 5 may include one or more of step S501 to step S503. It should be understood that, a time point for performing the one or more steps, a quantity of times of performing the one or more steps, and the like are not limited in embodiments of this application.

In the communication method shown in FIG. 5, a first apparatus and a second apparatus each may be a terminal device, may be a communication unit, a component, or a chip in the terminal device, or may be an apparatus that matches the terminal device. Alternatively, the first apparatus and the second apparatus each may be a network device, may be a communication unit, a component, or a chip in the network device, or may be an apparatus that matches the network device.

Step S501 to step S503 are specifically as follows:

Step S501: The first apparatus obtains a cyclic shift sequence pair.

The cyclic shift sequence pair includes a first sequence and a second sequence, the first sequence is obtained by performing cyclic shifts on a first root sequence respectively based on a delay cyclic shift index and a Doppler cyclic shift index, the second sequence is obtained by performing the cyclic shifts on a second root sequence respectively based on the delay cyclic shift index and the Doppler cyclic shift index, and a first root index of the first root sequence is different from a second root index of the second root sequence. It should be noted that, the same delay cyclic shift index and the same Doppler cyclic shift index are required for performing the cyclic shifts on the first sequence and the second sequence.

In a possible implementation, an expression of a discrete-time signal of a cyclic shift sequence pair $s_{u_1|u_2,k,l}(n)$ based on a Zadoff-Chu sequence is as follows:

$$s_{u_1|u_2,k,l}(n) = \tilde{s}_{u_1,k,l}(n) + s_{u_1,k,l}(n - N_{\text{CP}}) + \tilde{s}_{u_2,k,l}(n - N - N_{\text{CP}}) + s_{u_2,k,l}(n - N - 2N_{\text{CP}})$$

$$(3.1)$$

An expression of the first root sequence is as follows:

$$s_{u_1}(n) = e^{-j\pi u_1 \cdot n(n+1)/N}, n = 0, 1, \dots, N - 1$$

An expression of the second root sequence is as follows:

$$s_{u_2}(n) = e^{-j\pi u_2 \cdot n(n+1)/N}, n = 0, 1, \dots, N - 1$$

A first sequence $s_{u_1,k,l}(n)$ in Formula (3.1) may be obtained by performing cyclic shifts on the first root sequence respectively based on a delay cyclic shift index k and a Doppler cyclic shift index *l*, and an expression of the first sequence is as follows:

$$s_{u_1,k,l}(n) = e^{-j\pi[u_1(n+k\Delta_T)(n+k\Delta_T+1)+2nl\Delta_F]/N}, n = 0, 1, \ldots, N-1 \quad (3.11)$$

A second sequence $s_{u_2,k,l}(n)$ in Formula (3.1) may be obtained by performing the cyclic shifts on the second root sequence respectively based on the delay cyclic shift index k and the Doppler cyclic shift index *l*, and an expression of the second sequence is as follows:

$$s_{u_2,k,l}(n) = e^{-j\pi[u_2(n+k\Delta_T)(n+k\Delta_T+1)+2nl\Delta_F]/N}, n = 0, 1, \ldots, N-1 \quad (3.12)$$

In Formula (3.1), $\tilde{s}_{u_1,k,l}(n)$ indicates a cyclic prefix of the first sequence, and an expression of the cyclic prefix is as follows:

$$\tilde{s}_{u_1,k,l}(n) = s_{u_1,k,l}(n + N - N_{CP}), n = 0, 1, \ldots, N_{CP} - 1 \quad (3.13)$$

In Formula (3.1), $\tilde{s}_{u_2,k,l}(n)$ indicates a cyclic prefix of the second sequence, and an expression of the cyclic prefix is as follows:

$$\tilde{s}_{u_2,k,l}(n) = s_{u_2,k,l}(n + N - N_{CP}), n = 0, 1, \ldots, N_{CP} - 1 \quad (3.14)$$

In the foregoing formulas, a sequence length *N* of the cyclic shift sequence pair is a prime number, $u_1$ indicates the first root index, $u_2$ indicates the second root index, the first root index $u_1$ is different from the second root index $u_2$, $\Delta_T \times \Delta_F$ indicates a zero ambiguity zone, $\Delta_T$ indicates a preset maximum delay, $\Delta_F$ indicates a preset maximum Doppler shift, a length $N_{CP}$ of the cyclic prefix is greater than or equal to the preset maximum delay $\Delta_T$, k indicates the delay cyclic shift index, and *l* indicates the Doppler cyclic shift index.

The delay cyclic shift index *k* may also be referred to as a large-scale cyclic shift index, and the Doppler cyclic shift index *l* may also be referred to as a small-scale cyclic shift index. $\Delta_T$ indicates the preset maximum delay, and $\Delta_F$ indicates the preset maximum Doppler shift.

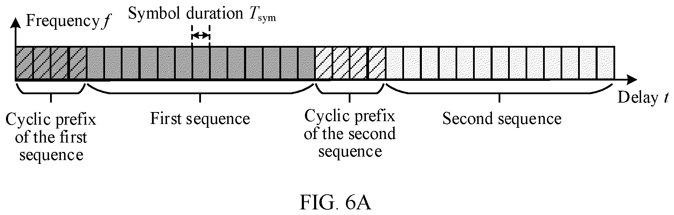

To ensure that cyclic shift sequence pairs are still periodically correlated after a receive end (for example, the second apparatus) removes cyclic prefixes, a length of the cyclic prefix may be set to: $N_{CP} \geq \Delta_T$. FIG. 6A is a diagram of time-frequency resources of a cyclic shift sequence pair according to an embodiment of this application. It can be learned from FIG. 6A that, the first sequence $s_{u_1,k,l}(n)$ and the second sequence $s_{u_2,k,l}(n)$ in the cyclic shift sequence pair $s_{u_1|u_2,k,l}(n)$ occupy consecutive time domain resources and same frequency domain resources, and use the same delay cyclic index k and the same Doppler cyclic index *l,* to reduce overheads of a guard interval between the sequences.

For example, an ambiguity function of the cyclic shift sequence pair $s_{u_1|u_2,k,l}(n)$ may be indicated as a sum of an ambiguity function of the first sequence and an ambiguity function of the second sequence.

$$A_{s_{u_1|u_2,k,l}}(\tau, v) = \underbrace{\sum_{n=0}^{N-1} s_{u_1,k,l}(n) s^*_{u_1,k,l}(n+\tau) e^{j2\pi nv/N}}_{A_{s_{u_1,k,l}}(\tau,v)} + \underbrace{\sum_{n=0}^{N-1} s_{u_2,k,l}(n) s^*_{u_2,k,l}(n+\tau) e^{j2\pi nv/N}}_{A_{s_{u_2,k,l}}(\tau,v)}$$

In a possible implementation, a coordinate spacing between a first peak of the ambiguity function of the first sequence and a second peak of the ambiguity function of the second sequence in a delay domain is greater than or equal to a first threshold, or a coordinate spacing between the first peak of the ambiguity function of the first sequence and the second peak of the ambiguity function of the second sequence in a Doppler domain is greater than or equal to a second threshold. In a possible design, the first threshold may be a delay resolution, and the second threshold may be a Doppler resolution.

In a possible implementation, the first apparatus obtains sequence configuration information. The sequence configuration information includes one or more of the following parameters: the sequence length N, root indexes of available cyclic shift sequence pairs, a maximum delay $\Delta_T$ in a first zone, and a maximum Doppler shift $\Delta_F$ in the first zone. The first zone may be a cell, a sensing zone, or the like.

In a possible implementation, the first apparatus receives the sequence configuration information. Optionally, the sequence configuration information may be sent by the second apparatus, or the sequence configuration information is sent by another apparatus.

In a possible implementation, the sequence configuration information is predefined, for example, predefined in a standard protocol.

In a possible implementation, the sequence configuration information is determined by the first apparatus. Optionally, the first apparatus further sends the sequence configuration information to the second apparatus.

In a possible implementation, when the cyclic shift sequence pair is for generating a random access signal, the first apparatus may obtain, based on random access information broadcast by a base station, related information for sending the random access signal, including the sequence length $N$, root indexes of available cyclic shift sequence pairs, a maximum delay $\Delta_T$ in a cell, and a maximum Doppler shift $\Delta_F$ in the cell.

First, the first apparatus may randomly select two root indexes, namely, the first root index $u_1$ and the second root index $u_2$, from the root indexes of the available cyclic shift sequence pairs, and determine the delay cyclic shift index $k$ and the Doppler cyclic shift index $l$ based on the sequence length $N$, the first root index $u_1$, the second root index $u_2$, the maximum delay $\Delta_T$ in the cell, and the maximum Doppler shift $\Delta_F$ in the cell. Then, the first apparatus may perform a delay cyclic shift and a Doppler cyclic shift on each of the first sequence and the second sequence in Formula (3.1) based on the sequence length N, the first root index $u_1$, the second root index $u_2$, the delay cyclic shift index $k$, and the Doppler cyclic shift index $l$, to obtain the cyclic shift sequence pair.

In another possible implementation, when the cyclic shift sequence pair is for generating a sensing signal, the first apparatus may receive sequence configuration information sent by a server or a control node. The configuration information includes related information for determining the cyclic shift sequence pair, and may specifically include the sequence length N, the first root index $u_1$, the second root index $u_2$, a maximum delay $\Delta_T$ in a sensing zone, and a maximum Doppler shift $\Delta_F$ in the sensing zone. Then, the first apparatus may determine the delay cyclic shift index $k$ and the Doppler cyclic shift index $l$ based on the sequence length $N$, the first root index $u_1$, the second root index $u_2$, the maximum delay $\Delta_T$ in the cell, and the maximum Doppler shift $\Delta_F$ in the cell. Then, the first apparatus may perform a delay cyclic shift and a Doppler cyclic shift on each of the first sequence and the second sequence in Formula (3.1) based on the sequence length $N$, the first root index $u_1$, the second root index $u_2$, the delay cyclic shift index $k$, and the Doppler cyclic shift index $l$, to obtain the cyclic shift sequence pair.

In a possible implementation, when a cyclic shift sequence is for generating a sensing signal, the first apparatus may determine sequence configuration information by itself, and obtain the cyclic shift sequence. Optionally, the first apparatus may further send the sequence configuration information to the second apparatus.

For example, when the sequence length $N$ = 13, the first root index of the first root sequence is that $u_1$ = 3, and the second root index of the second root sequence is that $u_2$ = 7, a cyclic shift sequence pair $s_{3|7,k,l}(n)$ may be determined according to Formula (3.1).

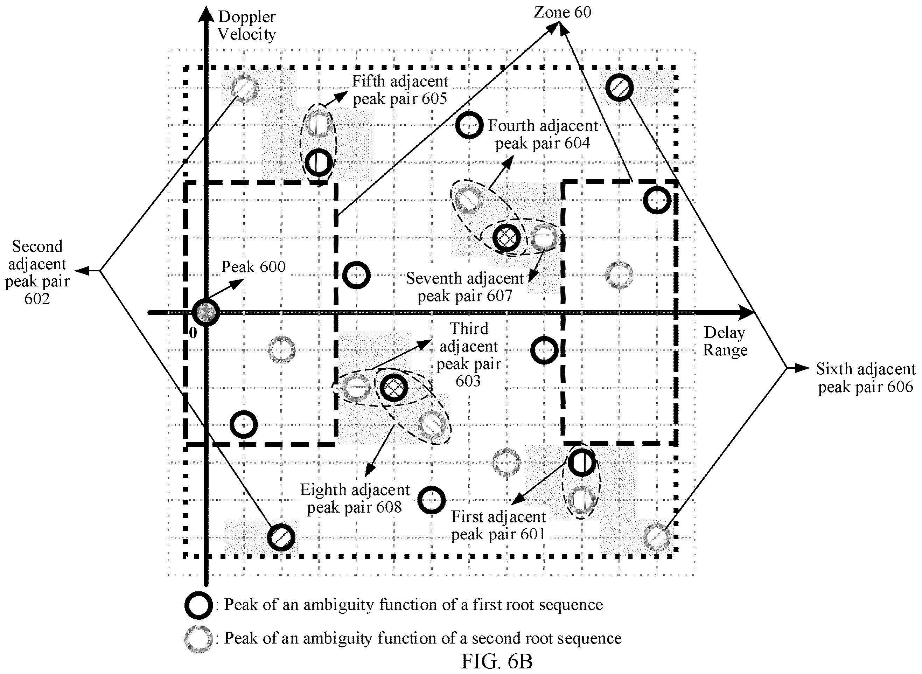

FIG. 6B is a diagram of an ambiguity function of a sequence pair according to an embodiment of this application. When no cyclic shift is considered, a peak of the ambiguity function of the first root sequence may be determined based on that the sequence length $N$ = 13 and the first root index $u_1$ = 3, and a peak of the ambiguity function of the second root sequence may be determined based on that the sequence length $N$ = 13 and the second root index $u_2$ = 7. Black circles shown in FIG. 6B indicate peaks of the ambiguity function of the first root sequence, and gray circles indicate peaks of the ambiguity function of the second root sequence.

It can be learned from FIG. 6B that, an ambiguity function of a first root sequence $s_{3,k,l}(n)$ and an ambiguity function of a second root sequence $s_{7,k,l}(n)$ have an overlapping peak 600 at an origin (0, 0), and have eight adjacent peak pairs: a first adjacent peak pair 601, a second adjacent peak pair 602, a third adjacent peak pair 603, a fourth adjacent peak pair 604, a fifth adjacent peak pair 605, a sixth adjacent peak pair 606, a seventh adjacent peak pair 607, and an eighth adjacent peak pair 608.

It may be understood that, sequences with different root indexes may form a low ambiguity zone, that is, the first root sequence and the second root sequence may form a low ambiguity zone. It can be learned from FIG. 6B that, when no cyclic shift is considered, the low ambiguity zone formed by the first root sequence $s_{3,k,l}(n)$ and the second root sequence $s_{7,k,l}(n)$ in this embodiment of this application is determined based on the eight adjacent peak pairs, and the finally determined low ambiguity zone is a zone 60 excluding the eight adjacent peak pairs. The first threshold is the delay resolution, which may be one unit length or two unit lengths on a horizontal coordinate (a delay coordinate) in a delay-Doppler coordinate system shown in FIG. 6B. The second threshold is the Doppler resolution, which may be one unit length or two unit lengths on a vertical coordinate (a Doppler coordinate) in the delay-Doppler coordinate system shown in FIG. 6B.

In a possible implementation, the delay cyclic shift index is any one index in a delay cyclic shift set, and the Doppler cyclic shift index is any one index in a Doppler cyclic shift set; and the first sequence and the second sequence have the same delay cyclic shift index, and the first sequence and the second sequence have the same Doppler cyclic shift index.

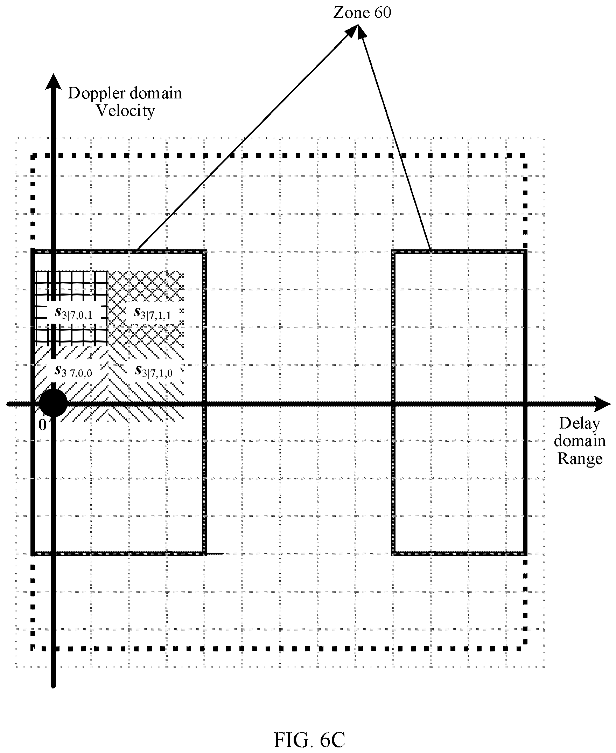

For example, FIG. 6C is a diagram of a cyclic shift sequence pair according to an embodiment of this application. When the sequence length $N = 13$, the first root index of the first root sequence is that $u_1 = 3$, the second root index of the second root sequence is that $u_2 = 7$, the preset maximum delay $\Delta_T = 2$, and the preset maximum Doppler shift $\Delta_F = 2$, it may be determined that the delay cyclic shift set is that $\mathcal{K} = \{0, 1\}$ and the Doppler cyclic shift set is that $\mathcal{L} = \{0, 1\}$. Therefore, it can be learned from FIG. 6C that, in the zone 60, a cyclic shift sequence is multiplexed four times, and the cyclic shift sequence pair may include $s_{3|7,0,0}(n)$, $s_{3|7,0,1}(n)$, $s_{3|7,1,0}(n)$, and $s_{3|7,1,1}(n)$. To be specific, one delay cyclic shift index $k$ is randomly selected from the delay cyclic shift set, and one Doppler cyclic shift index $l$ is randomly selected from the Doppler cyclic shift set, to perform cyclic shifts on the first root sequence $s_{3,k,l}(n)$, so that first sequences, including $s_{3,0,0}(n)$, $s_{3,0,1}(n)$, $s_{3,1,0}(n)$, and $s_{3,1,1}(n)$, in the cyclic shift sequence pairs may be obtained. One delay cyclic shift index $k$ is randomly selected from the delay cyclic shift set, and one Doppler cyclic shift index $l$ is randomly selected from the Doppler cyclic shift set, to perform cyclic shifts on the second root sequence $s_{7,k,l}(n)$, so that second sequences, including $s_{7,0,0}(n)$, $s_{7,0,1}(n)$, $s_{7,1,0}(n)$, and $s_{7,1,1}(n)$, in the cyclic shift sequence pairs may be obtained. A coordinate spacing between a first peak of an ambiguity function of the first sequence $s_{3,0,0}(n)$ and a second peak of an ambiguity function of the second sequence $s_{7,0,0}(n)$ in the delay domain is greater than or equal to the first threshold, or a coordinate spacing between the first peak of the first sequence $s_{3,0,0}(n)$ and the second peak of the second sequence $s_{7,0,0}(n)$ in the Doppler domain is greater than or equal to the second threshold. $s_{3,0,1}(n)$, $s_{3,1,0}(n)$, and $s_{3,1,1}(n)$ have same properties as $s_{3,0,0}(n)$, and $s_{7,0,1}(n)$, $s_{7,1,0}(n)$, and $s_{7,1,1}(n)$ have same properties as $s_{7,0,0}(n)$. Details are not described herein again.

In a possible implementation, the delay cyclic shift set and the Doppler cyclic shift set each are determined based on one or more target boundary points, the target boundary point is determined based on an adjacent peak pair, and the adjacent peak pair includes a third peak of an ambiguity function of the first root sequence and a fourth peak of an ambiguity function of the second root sequence.

For example, refer to FIG. 6B. It can be learned from FIG. 6B that, the adjacent peak pairs are centrosymmetric on a delay-Doppler plane. To be specific, the first adjacent peak pair 601 and the fifth adjacent peak pair 605 are centrosymmetric; the second adjacent peak pair 602 and the sixth adjacent peak pair 606 are centrosymmetric; and the third adjacent peak pair 603 and the seventh adjacent peak pair 607 are centrosymmetric; and the fourth adjacent peak pair 604 and the eighth adjacent peak pair 608 are centrosymmetric.

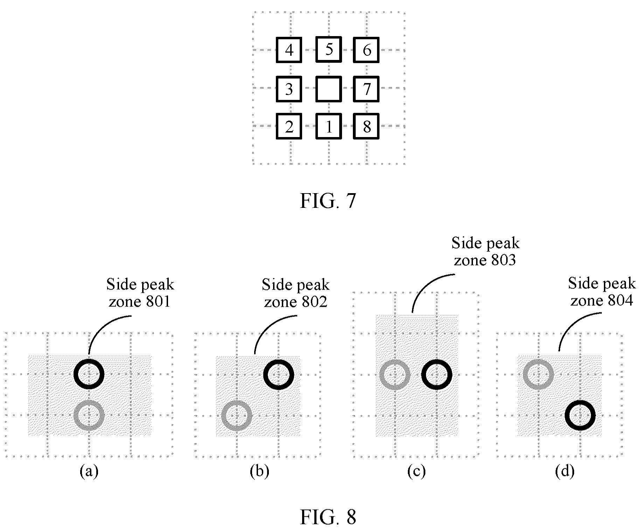

In a possible design, a relative location relationship between the eight adjacent peak pairs may be shown in FIG. 7. FIG. 7 is a diagram of a related location relationship between adjacent peak pairs according to an embodiment of this application. It can be learned from FIG. 7 that, the eight adjacent peak pairs, namely, the first adjacent peak pair 601 to the eighth adjacent peak pair 608, are respectively numbered from 1 to 8. Coordinates of the first adjacent peak pair 601 are denoted as $\langle \tau_1, v_1 \rangle$, coordinates of the second adjacent peak pair 602 are denoted as $\langle \tau_2, v_2 \rangle$, coordinates of the third adjacent peak pair 603 are denoted as $\langle \tau_3, v_3 \rangle$, coordinates of the fourth adjacent peak pair 604 are denoted as $\langle \tau_4, v_4 \rangle$, coordinates of the fifth adjacent peak pair 605 are denoted as $\langle \tau_6, v_6 \rangle$, coordinates of the sixth adjacent peak pair 606 are denoted as $\langle \tau_6, v_6 \rangle$, coordinates of the seventh adjacent peak pair 607 are denoted as $\langle \tau_7, v_7 \rangle$, and coordinates of the eighth adjacent peak pair 608 are denoted as $\langle \tau_8, v_8 \rangle$. Therefore, $\langle \tau_1, v_1 \rangle$ and $\langle \tau_5, v_5 \rangle$, $\langle \tau_2, v_2 \rangle$ and $\langle \tau_6, v_6 \rangle$, $\langle \tau_3, v_3 \rangle$ and $\langle \tau_7, v_7 \rangle$, and $\langle \tau_4, v_4 \rangle$ and $\langle \tau_8, v_8 \rangle$ are respectively centrosymmetric.

The coordinates of the eight adjacent peak pairs on the delay-Doppler plane are shown in Table 2.

**Table 2 Delay-Doppler coordinates of adjacent peak pairs**

| Delay/Doppler coordinate | First sequence | Second sequence |
| --- | --- | --- |
| $\langle \tau_1, v_1 \rangle$ | $\langle \Delta u^{-1}, -u_1 \Delta u^{-1} \rangle$ | $\langle \Delta u^{-1}, -u_1 \Delta u^{-1} - 1 \rangle$ |
| $\langle \tau_2, v_2 \rangle$ | $\langle (u_2 + 1)\Delta u^{-1}, -u_1(u_2 + 1)\Delta u^{-1} \rangle$ | $\langle (u_2 + 1)\Delta u^{-1} - 1, -u_1(u_2 + 1)\Delta u^{-1} - 1 \rangle$ |
| $\langle \tau_3, v_3 \rangle$ | $\langle u_2 \Delta u^{-1}, -u_1 u_2 \Delta u^{-1} \rangle$ | $\langle u_2 \Delta u^{-1} - 1, -u_1 u_2 \Delta u^{-1} \rangle$ |
| $\langle \tau_4, v_4 \rangle$ | $\langle (u_2 - 1)\Delta u^{-1}, -u_1(u_2 - 1)\Delta u^{-1} \rangle$ | $\langle (u_2 - 1)\Delta u^{-1} - 1, -u_1(u_2 - 1)\Delta u^{-1} + 1 \rangle$ |
| $\langle \tau_5, v_5 \rangle$ | $\langle -\Delta u^{-1}, u_1 \Delta u^{-1} \rangle$ | $\langle -\Delta u^{-1}, u_1 \Delta u^{-1} + 1 \rangle$ |
| $\langle \tau_6, v_6 \rangle$ | $\langle -(u_2 + 1)\Delta u^{-1}, u_1(u_2 + 1)\Delta u^{-1} \rangle$ | $\langle -(u_2 + 1)\Delta u^{-1} + 1, u_1(u_2 + 1)\Delta u^{-1} + 1 \rangle$ |
| $\langle \tau_7, v_7 \rangle$ | $\langle -u_2 \Delta u^{-1}, u_1 u_2 \Delta u^{-1} \rangle$ | $\langle -u_2 \Delta u^{-1} + 1, u_1 u_2 \Delta u^{-1} \rangle$ |
| $\langle \tau_8, v_8 \rangle$ | $\langle -(u_2 - 1)\Delta u^{-1}, u_1(u_2 - 1)\Delta u^{-1} \rangle$ | $\langle -(u_2 - 1)\Delta u^{-1} + 1, u_1(u_2 - 1)\Delta u^{-1} - 1 \rangle$ |

In Table 2, $\Delta u = u_2 - u_1$.

In another possible definition, $\Delta u = u_1 - u_2$. Correspondingly, delay-Doppler coordinates of the adjacent peak pairs are shown in Table 3.

**Table 3 Delay-Doppler coordinates of adjacent peak pairs**

| Delay/Doppler coordinate | First sequence | Second sequence |
|---|---|---|
| $\langle \tau_1, v_1 \rangle$ | $\langle -\Delta u^{-1}, u_1\Delta u^{-1} \rangle$ | $\langle -\Delta u^{-1}, u_1\Delta u^{-1} - 1 \rangle$ |
| $\langle \tau_2, v_2 \rangle$ | $\langle -(u_2 + 1)\Delta u^{-1}, u_1(u_2 + 1)\Delta u^{-1} \rangle$ | $\langle -(u_2 + 1)\Delta u^{-1} - 1, u_1(u_2 + 1)\Delta u^{-1} - 1 \rangle$ |
| $\langle \tau_3, v_3 \rangle$ | $\langle -u_2\Delta u^{-1}, u_1 u_2\Delta u^{-1} \rangle$ | $\langle -u_2\Delta u^{-1} - 1, u_1 u_2\Delta u^{-1} \rangle$ |
| $\langle \tau_4, v_4 \rangle$ | $\langle -(u_2 - 1)\Delta u^{-1}, u_1(u_2 - 1)\Delta u^{-1} \rangle$ | $\langle -(u_2 - 1)\Delta u^{-1} - 1, u_1(u_2 - 1)\Delta u^{-1} + 1 \rangle$ |
| $\langle \tau_5, v_5 \rangle$ | $\langle \Delta u^{-1}, -u_1\Delta u^{-1} \rangle$ | $\langle \Delta u^{-1}, -u_1\Delta u^{-1} + 1 \rangle$ |
| $\langle \tau_6, v_6 \rangle$ | $\langle (u_2, + 1)\Delta u^{-1}, -u_1(u_2 + 1)\Delta u^{-1} \rangle$ | $\langle (u_2 + 1)\Delta u^{-1} + 1, -u_1(u_2 + 1)\Delta u^{-1} + 1 \rangle$ |
| $\langle \tau_7, v_7 \rangle$ | $\langle u_2\Delta u^{-1}, -u_1 u_2\Delta u^{-1} \rangle$ | $\langle u_2\Delta u^{-1} + 1, -u_1 u_2\Delta u^{-1} \rangle$ |
| $\langle \tau_8, v_8 \rangle$ | $\langle (u_2 - 1)\Delta u^{-1}, -u_1(u_2 - 1)\Delta u^{-1} \rangle$ | $\langle (u_2 - 1)\Delta u^{-1} + 1, -u_1(u_2 - 1)\Delta u^{-1} - 1 \rangle$ |

Therefore, in another possible implementation, the first apparatus may separately calculate the coordinates of the eight adjacent peak pairs based on the coordinate expressions of the adjacent peak pairs on the delay-Doppler plane that are provided in Table 2 or Table 3, the first root index $u_1$ of the first sequence, and the second root index $u_2$ of the second sequence.

It should be noted that, in this embodiment of this application, that $\Delta u = u_2 - u_1$ shown in Table 2 is used as an example for description.

In a possible implementation, a coordinate spacing between a third peak and a fourth peak in the adjacent peak pair in the delay domain is less than or equal to the first threshold, and a coordinate spacing between the third peak and the fourth peak in the Doppler domain is less than or equal to the second threshold. Further, the adjacent peak pair includes one or more of the following: a peak pair with a same delay and adjacent Dopplers, a peak pair with adjacent delays and a same Doppler, and a peak pair with adjacent delays and adjacent Dopplers.

The peak pair with the same delay and the adjacent Dopplers is indicated as: The third peak and the fourth peak have the same coordinate in the delay domain, and the coordinate spacing between the third peak and the fourth peak in the Doppler domain is less than or equal to the second threshold. The peak pair with the adjacent delays and the same Doppler is indicated as: The coordinate spacing between the third peak and the fourth peak in the delay domain is less than or equal to the first threshold, and the third peak and the fourth peak have the same coordinate in the Doppler domain. The peak pair with the adjacent delays and the adjacent Dopplers is indicated as: The coordinate spacing between the third peak and the fourth peak in the delay domain is less than or equal to the first threshold, and the coordinate spacing between the third peak and the fourth peak in the Doppler domain is less than or equal to the second threshold.

It can be learned from FIG. 6B that, a relative location relationship between the first adjacent peak pair 601 and the fifth adjacent peak pair 605 on the delay-Doppler plane is that delays are the same and Dopplers are adjacent; a relative location relationship between the second adjacent peak pair 602 and the sixth adjacent peak pair 606 on the delay-Doppler plane is that delays are adjacent and Dopplers are adjacent; a relative location relationship between the third adjacent peak pair 603 and the seventh adjacent peak pair 607 on the delay-Doppler plane is that delays are adjacent and Dopplers are the same; and a relative location relationship between the fourth adjacent peak pair 604 and the eighth adjacent peak pair 608 on the delay-Doppler plane is that delays are adjacent and Dopplers are the same.

In a possible implementation, the first apparatus may determine, based on the relative location relationship between the adjacent peak pairs on the delay-Doppler plane, side peak zones of the adjacent peak pairs, that is, zones in which side peaks of ambiguity functions may occur. FIG. 8 is a diagram of a side peak zone of an ambiguity function according to an embodiment of this application. It can be learned from (a) of FIG. 8 that, when a relative location relationship between adjacent peak pairs on the delay-Doppler plane is that delays are the same and Dopplers are adjacent, a first peak and a second peak in the adjacent peak pair overlap in a delay direction. Therefore, in addition to covering the adjacent peak pair, a side peak zone 801 further covers locations of coordinate points adjacent to the adjacent peak pair in the delay direction. It can be learned from (b) and (d) of FIG. 8 that, when a relative location relationship between adjacent peak pairs on the delay-Doppler plane is that delays are adjacent and Dopplers are adjacent, a side peak zone 802 and a side peak zone 804 cover the adjacent peak pair. It can be learned from (c) of FIG. 8 that, when a relative location relationship between adjacent peak pairs on the delay-Doppler plane is that delays are adjacent and Dopplers are the same, a first peak and a second peak in the adjacent peak pair overlap in a Doppler direction. Therefore, in addition to covering the adjacent peak pair, a side peak zone 803 further covers locations of coordinate points adjacent to the adjacent peak pair in the Doppler direction.

It may be understood that, because the first adjacent peak pair $\langle \tau_1, v_1 \rangle$, and the fifth adjacent peak pair $\langle \tau_5, v_5 \rangle$, the second adjacent peak pair $\langle \tau_2, v_2 \rangle$ and the sixth adjacent peak pair $\langle \tau_6, v_6 \rangle$, the third adjacent peak pair $\langle \tau_3, v_3 \rangle$ and the seventh adjacent peak pair $\langle \tau_7, v_7 \rangle$, the fourth adjacent peak pair $\langle \tau_4, v_4 \rangle$ and the eighth adjacent peak pair $\langle \tau_8, v_8 \rangle$ are

respectively centrosymmetric with respect to the coordinate origin, eight side peak zones determined by the first apparatus based on the adjacent peak pairs are also centrosymmetric with respect to the coordinate origin.

In an example, the first apparatus uses, as a candidate boundary point, a coordinate point closest to the origin on the delay-Doppler plane in a side peak zone. An ambiguity function of a cyclic shift sequence pair has eight adjacent peaks, and the eight adjacent peaks may form eight side peak zones. In an example, eight candidate boundary points may be determined in the eight side peak zones. In another example, because a relative location relationship between adjacent peak pairs on the delay-Doppler plane is that coordinates are centrosymmetric, side peak zones corresponding to the adjacent peak pairs are also centrosymmetric. Therefore, one candidate boundary point may be determined for two side peak zones that are in the eight side peak zones and that are centrosymmetric, so that four candidate boundary points are determined in total.

In still another example, coordinates of candidate boundary points corresponding to side peaks of the ambiguity function are shown in Table 4.

**Table 4 Coordinates of candidate boundary points corresponding to side peak zones of adjacent peak pairs**

| Delay/Doppler | Coordinates of a candidate boundary point |
|---|---|
| $\overline{\tau}_1$ | $\min\{[\Delta u^{-1} - 1, \Delta u^{-1} + 1], [-\Delta u^{-1} - 1, -\Delta u^{-1} + 1]\}$ |
| $\overline{v}_1$ | $\min\{[-u_1\Delta u^{-1} - 1, -u_1\Delta u^{-1}], [u_1\Delta u^{-1}, u_1\Delta u^{-1} + 1]\}$ |
| $\overline{\tau}_2$ | $\min\{[(u_2 + 1)\Delta u^{-1} - 1, (u_2 + 1)\Delta u^{-1}], [-(u_2 + 1)\Delta u^{-1} + 1, -(u_2 + 1)\Delta u^{-1}]\}$ |
| $\overline{v}_2$ | $\min\{[-u_1(u_2 + 1)\Delta u^{-1} - 1, -u_1(u_2 + 1)\Delta u^{-1}], [u_1(u_2 + 1)\Delta u^{-1}, u_1(u_2 + 1)\Delta u^{-1} + 1]\}$ |
| $\overline{\tau}_3$ | $\min\{[u_2\Delta u^{-1} - 1, u_2\Delta u^{-1}], [-u_2\Delta u^{-1}, -u_2\Delta u^{-1} + 1]\}$ |
| $\overline{v}_3$ | $\min\{[-u_1u_2\Delta u^{-1} - 1, -u_1u_2\Delta u^{-1} + 1], [u_1u_2\Delta u^{-1} - 1, u_1u_2\Delta u^{-1} + 1]\}$ |
| $\overline{\tau}_4$ | $\min\{[(u_2 - 1)\Delta u^{-1} - 1, (u_2 - 1)\Delta u^{-1}], [-(u_2 - 1)\Delta u^{-1}, -(u_2 - 1)\Delta u^{-1} + 1]\}$ |
| $\overline{v}_4$ | $\min\{[-u_1(u_2 - 1)\Delta u^{-1}, -u_1(u_2 + 1)\Delta u^{-1} + 1], [u_1(u_2 - 1)\Delta u^{-1} - 1, u_1(u_2 - 1)\Delta u^{-1}]\}$ |

In Table 4, $\langle\overline{\tau}_1, \overline{v}_1\rangle$ indicates a first candidate boundary point, $\langle\overline{\tau}_2, \overline{v}_2\rangle$ indicates a second candidate boundary point, $\langle\overline{\tau}_3, \overline{v}_3\rangle$ indicates a third candidate boundary point, and $\langle\overline{\tau}_4, \overline{v}_4\rangle$ indicates a fourth candidate boundary point. The first candidate boundary point $\langle\overline{\tau}_1, \overline{v}_1\rangle$ is a coordinate point that is closest to the origin and that is in the side peak zone 801 determined based on the adjacent peak pairs $\langle\tau_1, v_1\rangle$ and $\langle\tau_5, v_5\rangle$ with a same delay and adjacent Dopplers in (a) of FIG. 8. The second candidate boundary point $\langle\overline{\tau}_2, \overline{v}_2\rangle$ is a coordinate point that is closest to the origin and that is in the side peak zone 801 determined based on the adjacent peak pairs $\langle\tau_2, v_2\rangle$ and $\langle\tau_6, v_6\rangle$ with adjacent delays and adjacent Dopplers in (b) of FIG. 8. The third candidate boundary point $\langle\overline{\tau}_3, \overline{v}_3\rangle$ is a coordinate point that is closest to the origin and that is in the side peak zone 801 determined based on the adjacent peak pairs $\langle\tau_3, v_3\rangle$ and $\langle\tau_7, v_7\rangle$ with adjacent delays and a same Doppler in (c) of FIG. 8. The fourth candidate boundary point $\langle\overline{\tau}_4, \overline{v}_4\rangle$ is a coordinate point that is closest to the origin and that is in the side peak zone 801 determined based on the adjacent peak pairs $\langle\tau_4, v_4\rangle$ and $\langle\tau_8, v_8\rangle$ with adjacent delays and adjacent Dopplers in (d) of FIG. 8.

The first candidate boundary point $\langle\overline{\tau}_1, \overline{v}_1\rangle$ is used as an example for description. It can be learned from Table 2 and Table 4 that, "$[\Delta u^{-1} - 1, \Delta u^{-1} + 1]$" indicates a first coordinate point set included in a side peak zone determined based on the adjacent peak pair $\langle\tau_1, v_1\rangle$, "$[-\Delta u^{-1} - 1, -\Delta u^{-1} + 1]$" indicates a second coordinate point set included in a side peak zone determined based on the adjacent peak pair $\langle\tau_5, v_5\rangle$, and $\min\{[\Delta u^{-1} - 1, \Delta u^{-1} + 1], [-\Delta u^{-1} - 1, -\Delta u^{-1} + 1]\}$ indicates that a minimum value is selected from the first coordinate set and the second coordinate set as the first candidate boundary point.

In another example, the one or more target boundary points are determined based on a plurality of candidate boundary points, that is, the first apparatus may determine, in the plurality of candidate boundary points, one or more target boundary points participating in determining the low ambiguity zone, where a first target boundary point is any one of the one or more target boundary points; and a coordinate spacing between the first target boundary point and the origin in the Doppler domain is less than or equal to a coordinate spacing between a to-be-determined candidate boundary point and the origin in the Doppler domain, and/or a coordinate spacing between the first target boundary point and the origin in the delay domain is less than a coordinate spacing between the to-be-determined candidate boundary point and the origin in the delay domain. The to-be-determined boundary point is any candidate boundary point other than the first target boundary point in the plurality of candidate boundary points.

For example, when it is determined whether the first candidate boundary point is a target boundary point, the first candidate boundary point is used as the to-be-determined boundary point. If a coordinate spacing between the first candidate boundary point and the origin in the Doppler domain is less than or equal to a coordinate spacing between at least one candidate boundary point (for example, the third candidate boundary point) in the second candidate boundary point, the third candidate boundary point, and the fourth candidate boundary point and the origin in the Doppler domain, and/or if a coordinate spacing between the first candidate boundary point and the origin in the delay domain is less than a coordinate spacing between the at least one candidate boundary point (for example, the third candidate boundary point) in the second candidate boundary point, the third candidate boundary point, and the fourth candidate boundary point and the origin in the Doppler domain, the first candidate boundary point is the target boundary point.

In another possible example, the target boundary point is a boundary point other than a non-boundary point in the plurality of candidate boundary points. A coordinate spacing between the non-boundary point and the origin in the Doppler domain is greater than a coordinate spacing between at least one candidate boundary point in the plurality of candidate boundary points and the origin in the Doppler domain, and/or a coordinate spacing between the non-boundary point and the origin in the delay domain is greater than or equal to a coordinate spacing between the at least one candidate boundary point and the origin in the delay domain. For determining of the second candidate boundary point, the third candidate boundary point, and the fourth candidate boundary point, refer to the descriptions of the first candidate boundary point. Details are not described herein again.

It should be noted that, when it is determined whether the first candidate boundary point is a non-boundary point, if the coordinate spacing between the at least one candidate boundary point (for example, the third candidate boundary point) in the second candidate boundary point, the third candidate boundary point, and the fourth candidate boundary point and the origin in the Doppler domain is less than the coordinate spacing between the first candidate boundary point and the origin in the Doppler domain, and the coordinate spacing between the at least one candidate boundary point (for example, the third candidate boundary point) and the origin in the delay domain is less than or equal to the coordinate spacing between the first candidate boundary point and the origin in the delay domain, the first candidate boundary point is a non-boundary point. For determining of the second candidate boundary point, the third candidate boundary point, and the fourth candidate boundary point, refer to the descriptions of the first candidate boundary point. Details are not described herein again.

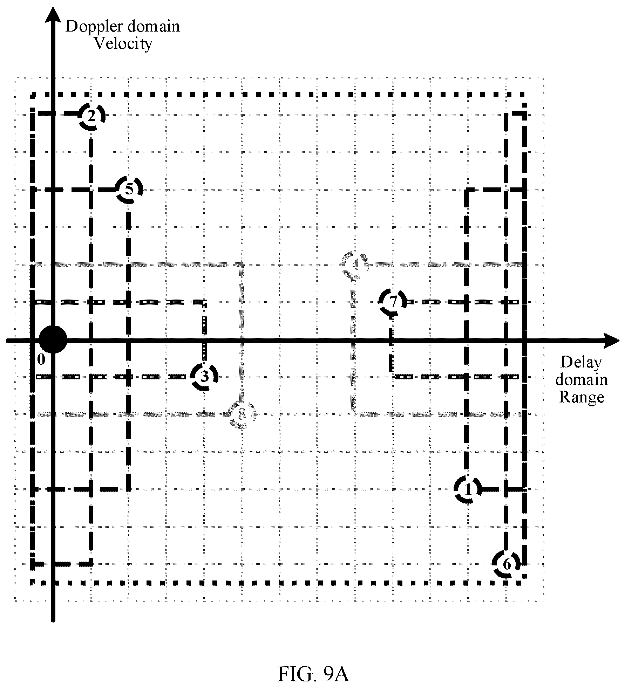

FIG. 9A is a diagram of determining a target boundary point in candidate boundary points according to an embodiment of this application. It can be learned from FIG. 9A that, a digit 1 to a digit 8 respectively indicate eight candidate boundary points, and the eight candidate boundary points are respectively coordinate points closest to the origin on the delay-Doppler plane in the eight side peak zones. A candidate boundary point with the digit 1 and a candidate boundary point with the digit 5 are centrosymmetric with respect to the coordinate origin, a candidate boundary point with the digit 2 and a candidate boundary point with the digit 6 are centrosymmetric with respect to the coordinate origin, a candidate boundary point with the digit 3 and a candidate boundary point with the digit 7 are centrosymmetric with respect to the coordinate origin, and a candidate boundary point with the digit 4 and a candidate boundary point with the digit 8 are centrosymmetric with respect to the coordinate origin. Therefore, one candidate boundary point may be determined for every two candidate boundary points that are centrosymmetric with respect to the coordinate origin. Therefore, based on Table 3, four candidate boundary points: $\langle \bar{\tau}_1, \bar{v}_1 \rangle$, $\langle \bar{\tau}_2, \bar{v}_2 \rangle$, $\langle \bar{\tau}_3, \bar{v}_3 \rangle$, and $\langle \bar{\tau}_4, \bar{v}_4 \rangle$ may be determined.

In conclusion, the candidate boundary point $\langle \bar{\tau}_4, \bar{v}_4 \rangle$ may be determined based on the candidate boundary point with the digit 4 and the candidate boundary point with the digit 8, the candidate boundary point $\langle \bar{\tau}_3, \bar{v}_3 \rangle$ may be determined based on the candidate boundary point with the digit 3 and the candidate boundary point with the digit 7, the candidate boundary point $\langle \bar{\tau}_2, \bar{v}_2 \rangle$ may be determined based on the candidate boundary point with the digit 5 and the candidate boundary point with the digit 1, and the candidate boundary point $\langle \bar{\tau}_1, \bar{v}_1 \rangle$ may be determined based on the candidate boundary point with the digit 2 and the candidate boundary point with the digit 6. Doppler spacings of the candidate boundary points $\langle \bar{\tau}_1, \bar{v}_1 \rangle$, $\langle \bar{\tau}_2, \bar{v}_2 \rangle$, and $\langle \bar{\tau}_3, \bar{v}_3 \rangle$ each are less than or equal to a Doppler spacing of the candidate boundary points $\langle \bar{\tau}_4, \bar{v}_4 \rangle$, and/or delay spacings of the candidate boundary points $\langle \bar{\tau}_1, \bar{v}_1 \rangle$, $\langle \bar{\tau}_2, \bar{v}_2 \rangle$, and $\langle \bar{\tau}_3, \bar{v}_3 \rangle$ each are less than a delay spacing of the candidate boundary points $\langle \bar{\tau}_4, \bar{v}_4 \rangle$. Therefore, the candidate boundary points $\langle \bar{\tau}_1, \bar{v}_1 \rangle$, $\langle \bar{\tau}_2, \bar{v}_2 \rangle$ and $\langle \bar{\tau}_3, \bar{v}_3 \rangle$ are target boundary points.

Alternatively, delay-Doppler coordinates of the candidate boundary point $\langle \bar{\tau}_4, \bar{v}_4 \rangle$ are on an outer side of those of the candidate boundary point $\langle \bar{\tau}_3, \bar{v}_3 \rangle$, that is, a coordinate spacing between the candidate boundary point $\langle \bar{\tau}_4, \bar{v}_4 \rangle$ and the origin in the Doppler domain is greater than a coordinate spacing between the candidate boundary point $\langle \bar{\tau}_3, \bar{v}_3 \rangle$ and the origin in the Doppler domain, and a coordinate spacing between the candidate boundary point $\langle \bar{\tau}_4, \bar{v}_4 \rangle$ and the origin in the delay domain is greater than or equal to a coordinate spacing between the candidate boundary point $\langle \bar{\tau}_3, \bar{v}_3 \rangle$ and the origin in the delay domain. Therefore, the candidate boundary point $\langle \bar{\tau}_4, \bar{v}_4 \rangle$ is a non-boundary point and is not for determining the low ambiguity zone. The candidate boundary points $\langle \bar{\tau}_1, \bar{v}_1 \rangle$, $\langle \bar{\tau}_2, \bar{v}_2 \rangle$ and $\langle \bar{\tau}_3, \bar{v}_3 \rangle$ are target boundary points, and may be for determining the low ambiguity zone.

In an example, the first apparatus may obtain an index set {1, 2, 3, 4} based on the four candidate boundary points $\langle \bar{\tau}_1, \bar{v}_1 \rangle$, $\langle \bar{\tau}_2, \bar{v}_2 \rangle$, $\langle \bar{\tau}_3, \bar{v}_3 \rangle$, and $\langle \bar{\tau}_4, \bar{v}_4 \rangle$. A coordinate spacing between a target boundary point and the origin in the Doppler domain is less than or equal to the coordinate spacing between the to-be-determined candidate boundary point and the origin in the Doppler domain, and/or a coordinate spacing between the target boundary point and the origin in the delay domain is less than the coordinate spacing between the to-be-determined candidate boundary point and the origin in the delay domain. Therefore, an index set of the target boundary point is that $\mathcal{J} = \{i | \forall i, j \in \{1, 2, 3, 4\}, j \neq i, \nexists j \bar{\tau}_j \leq \bar{\tau}_i, \bar{v}_j < \bar{v}_i\}$. In other

words, for a target boundary point index $i$ in the index set, an index j whose delay spacing is less than or equal to $\overline{\tau}_i$ and whose Doppler spacing is less than $\overline{v}_i$ does not exist in the index set.

All the operators +, -, $\times$, and $(\cdot)^{-1}$ in embodiments of this application are the addition, subtraction, multiplication, and inversion operations in the finite field $\mathbb{Z}_N$. Therefore, the coordinate spacing in the Doppler domain is determined based on a Doppler coordinate (or a coordinate in the Doppler domain) and the sequence length of the cyclic shift sequence pair, and the coordinate spacing in the delay domain is determined based on a delay coordinate (or a coordinate in the delay domain) and the sequence length of the cyclic shift sequence pair.

In another instance, in ascending order of delay coordinates, $|\mathcal{J}|$ target boundary points are sorted as: $\overline{\tau}_{i_1} < \overline{\tau}_{i_2} < ... <$, to obtain $\langle \overline{\tau}_{i_1}, \overline{v}_{i_1} \rangle, \langle \overline{\tau}_{i_2}, \overline{v}_{i_2} \rangle, ... , \langle \overline{\tau}_{i_{|\mathcal{J}|}}, \overline{v}_{i_{|\mathcal{J}|}} \rangle$. Because a maximum value that can be obtained in the delay domain and the Doppler domain is the sequence length $N$, $(|\mathcal{J}|+1)$ candidate low ambiguity zones: $\overline{\tau}_{i_1} \times N, \overline{\tau}_{i_2} \times \overline{v}_{i_1}, ... , \overline{\tau}_{i_{|\mathcal{J}|}} \times \overline{v}_{i_{|\mathcal{J}|-1}}$, and $N \times \overline{v}_{i_{|\mathcal{J}|}}$, may be jointly determined based on the target boundary points and the sequence length $N$. For ease of representation, it is assumed that $\overline{\tau}_{i_{|\mathcal{J}|+1}} = \overline{v}_{i_0} = N$. Therefore, an index of a low ambiguity zone whose sequence capacity is maximized may be indicated as: $\overline{m} = \underset{m \in \{0,1,...,|\mathcal{J}|\}}{\operatorname{argmax}} \left\{ \lfloor \overline{\tau}_{i_{m+1}} / \Delta_T \rfloor \lfloor \overline{v}_{i_m} / \Delta_F \rfloor \right\}$. In other words, when $m \in \{0, 1, ..., |\mathcal{J}|\}$, the sequence capacity $\lfloor \overline{\tau}_{i_{m+1}} / \Delta_T \rfloor \lfloor \overline{v}_{i_m} / \Delta_F \rfloor$ takes a value of $m$ corresponding to a maximum value.

In a possible implementation, the first sequence and the second sequence in the cyclic shift sequence pair use the same delay cyclic shift index and the Doppler cyclic shift index, the delay cyclic shift index is any one index in the delay cyclic shift set, and the Doppler cyclic shift index is any one index in the Doppler cyclic shift set. A delay cyclic shift set $\mathcal{K} = \left\{ 0, 1, ..., \lfloor \overline{\tau}_{i_{\overline{m}+1}} / \Delta_T \rfloor - 1 \right\}$, and a Doppler cyclic shift set $\mathcal{L} = \left\{ 0, 1, ..., \lfloor \overline{v}_{i_{\overline{m}}} / \Delta_F \rfloor - 1 \right\}$. For the first sequence $s_{u_1,k,l}(n)$ and the second sequence $s_{u_2,k,l}(n)$, $\lfloor \overline{\tau}_{i_{\overline{m}+1}} / \Delta_T \rfloor \lfloor \overline{v}_{i_{\overline{m}}} / \Delta_F \rfloor$ cyclic shift sequences form $(\Delta_T \times \Delta_F)$ low ambiguity zones. It may be understood that, because the ambiguity function of the first sequence and the ambiguity function of the second sequence have eight adjacent peak pairs on the delay-Doppler plane, one or more candidate low ambiguity zones may exist. When one candidate low ambiguity zone exists, the candidate low ambiguity zone is used as a target low ambiguity zone. When a plurality of candidate low ambiguity zones exist, a candidate low ambiguity zone including a largest quantity of cyclic shift sequence pairs is used as the target low ambiguity zone.

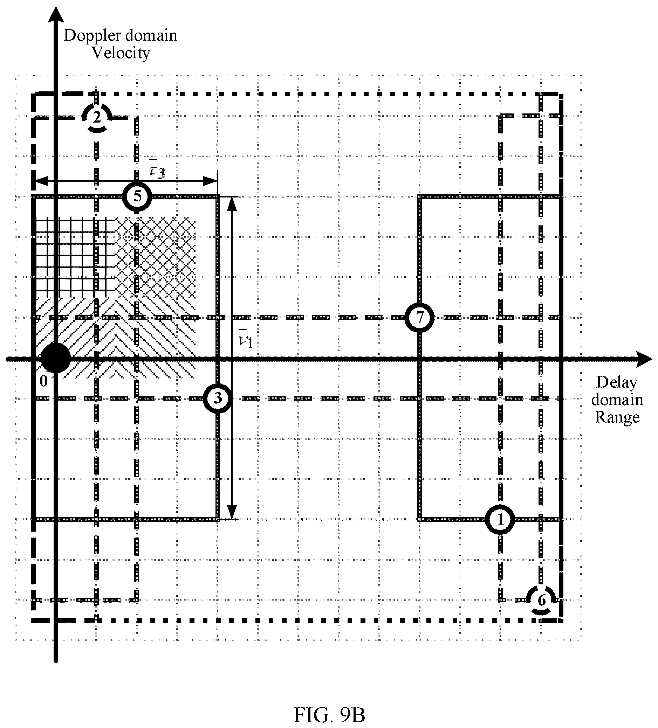

FIG. 9B is a diagram of constructing a cyclic shift sequence pair in a low ambiguity zone according to an embodiment of this application. When the sequence length of the cyclic shift sequence pair is that $N = 13$, the first root index of the first sequence is that $u_1 = 3$, the second root index of the second sequence is that $u_2 = 7$, the preset maximum delay $\Delta_T = 2$, and the preset maximum Doppler shift $\Delta_F = 2$, the first apparatus may determine coordinates of the four candidate boundary points based on Table 3, and may determine three target boundary points $\langle \overline{\tau}_1, \overline{v}_1 \rangle$, $\langle \overline{\tau}_2, \overline{v}_2 \rangle$, and $\langle \overline{\tau}_3, \overline{v}_3 \rangle$ in the four candidate boundary points based on the index set of the target boundary point: $\mathcal{J} = \{i | \forall i,j \in \{1, 2, 3, 4\}, j \neq i, \overline{\tau}_j \leq \overline{\tau}_i, \overline{v}_j < \overline{v}_i\}$. Therefore, $\mathcal{J} = \{1, 2, 3\}$. It can be learned from FIG. 9B that, in ascending order of delay coordinates, $|\mathcal{J}|$ target boundary points are sorted as $\langle \overline{\tau}_2, \overline{v}_2 \rangle, \langle \overline{\tau}_1, \overline{v}_1 \rangle$, and $\langle \overline{\tau}_3, \overline{v}_3 \rangle$, The first apparatus may determine four candidate low ambiguity zones: $\overline{\tau}_2 \times N, \overline{\tau}_1 \times \overline{v}_2, \overline{\tau}_3 \times \overline{v}_1$, and $N \times \overline{v}_3$ based on the three target boundary points and the sequence length $N$. Therefore, the first apparatus may determine that $\overline{m} = 2$ based on that $\overline{m} = \underset{m \in \{0,1,...,|\mathcal{J}|\}}{\operatorname{argmax}} \left\{ \lfloor \overline{\tau}_{i_{m+1}} / \Delta_T \rfloor \lfloor \overline{v}_{i_m} / \Delta_F \rfloor \right\}$. Then, based on the target boundary points $\langle \overline{\tau}_2, \overline{v}_2 \rangle, \langle \overline{\tau}_1, \overline{v}_1 \rangle$, and $\langle \overline{\tau}_3, \overline{v}_3 \rangle$ that are sorted in ascending order, the first apparatus may determine that $i_1 = 2, i_2 = 1$, and $i_3 = 3$. Then, the first apparatus may determine that $i_{\overline{m}+1} = 3$ and $i_{\overline{m}} = 1$ based on that $\overline{m} = 2, i_1 = 2, i_2 = 1$, $i_3 = 3$, the delay cyclic shift set $\mathcal{K} = \left\{ 0, 1, ..., \lfloor \overline{\tau}_{i_{\overline{m}+1}} / \Delta_T \rfloor - 1 \right\}$, and the Doppler cyclic shift set $\mathcal{L} = \left\{ 0, 1, ..., \lfloor \overline{v}_{i_{\overline{m}}} / \Delta_F \rfloor - 1 \right\}$. Therefore, $\overline{\tau}_{i_{\overline{m}+1}} = \overline{\tau}_3, \overline{v}_{i_{\overline{m}}} = \overline{v}_1$, the corresponding delay cyclic shift index $k = 0$, 1, and the corresponding Doppler cyclic shift index $l = 0$, 1. A cyclic shift is performed on each of the first root sequence and the second root sequence based on the delay cyclic shift index, and a cyclic shift is performed on each of the first root sequence and the second root sequence based on the Doppler cyclic shift index, to obtain the cyclic shift sequence pair.

Step S502: The first apparatus outputs the cyclic shift sequence pair.

Correspondingly, the second apparatus may receive the cyclic shift sequence pair from the first apparatus, or the second apparatus may receive a cyclic shift sequence pair reflected by a target apparatus.

In a possible implementation, the first apparatus performs N-point DFT transform on the cyclic shift sequence pair to obtain a cyclic shift sequence pair distributed in the frequency domain, or may perform a weighted shift on the cyclic shift sequence pair to obtain the cyclic shift sequence pair distributed in the frequency domain, to save a DFT operation. Next, subcarrier mapping is performed, to map the cyclic shift sequence pair distributed in the frequency domain obtained through DFT to a corresponding subcarrier location. After IDFT is performed on the mapped cyclic shift sequence pair distributed in the frequency domain, a time domain signal may be obtained. After corresponding processing (for example, inserting the cyclic prefix of the first sequence and the cyclic prefix of the second sequence) is performed on the time domain signal, the time domain signal including the cyclic shift sequence pair is sent to the second apparatus or a target device.

Step S503: The second apparatus processes the cyclic shift sequence pair.

In a possible implementation, if the cyclic shift sequence pair is for generating a random access signal, the first apparatus sends a signal including the cyclic shift sequence pair to the second apparatus, and the second apparatus processes the cyclic shift sequence pair. Specifically, the second apparatus extracts the cyclic shift sequence pair from a frequency domain start location, samples the cyclic shift sequence pair, and may finally obtain a range between the first apparatus and the second apparatus and/or a velocity of the first apparatus relative to the second apparatus. Further, the second apparatus may calculate a timing advance required by the first apparatus, and send the timing advance to the first apparatus, so that the first apparatus may send a data signal at a correct time point based on the timing advance in subsequent data transmission. It may be understood that, the first apparatus may be a terminal device or an apparatus in the terminal device, and the second apparatus may be a target apparatus. The target apparatus may be an apparatus that establishes a communication connection to the first apparatus, and may be specifically a network device or an apparatus in the network device.

In another possible implementation, if the cyclic shift sequence pair is for generating a sensing signal, the first apparatus sends a signal including the cyclic shift sequence pair to a target apparatus. The target apparatus may reflect the signal including the cyclic shift sequence pair, so that the signal may be received by the second apparatus. The second apparatus processes the cyclic shift sequence pair. The second apparatus extracts the cyclic shift sequence pair from a frequency domain start location, samples the cyclic shift sequence pair, and may finally obtain a range between the first apparatus and the target apparatus and/or a velocity of the first apparatus relative to the target apparatus.

Scenarios to which this embodiment of this application is applicable include but are not limited to the following scenarios:

[Scenario 1] The cyclic shift sequence pair is for generating the random access signal.

In a possible implementation scenario, a terminal device 104 shown in FIG. 1 is used as an example. The terminal device 104 obtains a cyclic shift sequence pair. The cyclic shift sequence pair includes a first sequence and a second sequence, the first sequence is obtained by performing cyclic shifts on a first root sequence respectively based on a delay cyclic shift index and a Doppler cyclic shift index, the second sequence is obtained by performing the cyclic shifts on a second root sequence respectively based on the delay cyclic shift index and the Doppler cyclic shift index, and a first root index of the first root sequence is different from a second root index of the second root sequence. It should be noted that, the same delay cyclic shift index and the same Doppler cyclic shift index are required for performing the cyclic shifts on the first sequence and the second sequence. Specifically, the terminal device 104 may obtain the cyclic shift sequence pair based on the foregoing communication method, for example, the communication method shown in FIG. 5.

The terminal device 104 sends, to a network device 111 or a functional module in the network device, a random access signal including the cyclic shift sequence pair.

The network device 111 or the functional module in the network device may receive the random access signal including the cyclic shift sequence pair, and implement downlink signal synchronization and uplink random access of the terminal device 104 based on a correlation of the cyclic shift sequence pair. Specifically, the network device 111 may measure a range between the terminal device 104 and the network device 111 or a velocity of the terminal device 104 relative to the network device 111 based on the cyclic shift sequence pair. The network device 111 may calculate a timing advance required by the terminal device 104 based on the range or the velocity, and feed back the timing advance to the terminal device 104. Therefore, in a random access procedure, the terminal device 104 is identified by the network device 111, and obtains the timing advance estimated by the network device 111, to establish uplink and downlink synchronization and construct a bidirectional link between the terminal device 104 and the network device 111. Then, the terminal device 104 may perform data transmission based on a resource scheduled by the network device 111.

[Scenario 2] The cyclic shift sequence pair is for generating the sensing signal.

In a possible implementation scenario, a network device 111 shown in FIG. 1 is used as an example. The network device 111 obtains a cyclic shift sequence pair. The cyclic shift sequence pair includes a first sequence and a second sequence, the first sequence is obtained by performing cyclic shifts on a first root sequence respectively based on a delay cyclic shift index and a Doppler cyclic shift index, the second sequence is obtained by performing the cyclic shifts on a second root sequence respectively based on the delay cyclic shift index and the Doppler cyclic shift index, and a first root index of the first root sequence is different from a second root index of the second root sequence. It should be noted that, the same delay cyclic shift index and the same Doppler cyclic shift index are required for performing the cyclic shifts on the first sequence and the second sequence. Specifically, the network device 111 may obtain the cyclic shift sequence pair based on the foregoing communication method, for example, the communication method shown in FIG. 5.

In a possible implementation, the network device 111 may receive sequence configuration information sent by a server or a control node (not shown in FIG. 1), may receive sequence configuration information sent by a terminal device, or may receive sequence configuration information sent by a network device 112. The network device 111 determines the delay cyclic shift index and the Doppler cyclic shift index based on the sequence configuration information.

The network device 111 or a functional module in the network device sends, to a target object (for example, a vehicle in a surrounding environment), a sensing signal including the cyclic shift sequence pair.

The target object may reflect the sensing signal including the cyclic shift sequence pair, so that the sensing signal is received by the network device 111. The network device 111 determines, based on the reflection of the sensing signal, some attributes of the target object, including one or more of a range, a location, a shape, or a velocity.

In a possible implementation, the sensing signal including the cyclic shift sequence pair reflected by the target object may be received by the network device 112 or a functional module in the network device 112. The network device 112 or the functional module in the network device 112 determines, based on the reflection of the sensing signal, some attributes of the target object, including one or more of the range, the location, the shape, or the velocity.

In another possible implementation, the sensing signal including the cyclic shift sequence pair reflected by the target object may be received by the terminal device or a functional module in the terminal device. The terminal device or the functional module in the terminal device determines, based on the reflection of the sensing signal, some attributes of the target object, including one or more of the range, the location, the shape, or the velocity.

It should be noted that, the terminal device or the functional module in the terminal device may alternatively obtain the cyclic shift sequence pair, to send the sensing signal including the cyclic shift sequence pair to the target object.

The following describes some possible implementations of the cyclic shift sequence pair.

[Implementation 1]

In a possible implementation, when a sequence length of the cyclic shift sequence pair is that $N = 139$, the first root index of the first sequence in the cyclic shift sequence pair is that $u_1 = 29$, the second root index of the second sequence is that $u_2 = 42$, a preset maximum delay $\Delta_T = 10$, and a preset maximum Doppler shift $\Delta_F = 10$, $\Delta u = u_2 - u_1 = 13$. The first apparatus may obtain delay-Doppler coordinates of eight adjacent peak pairs based on Table 2. Then, the first apparatus may determine side peak zones of the adjacent peak pairs based on the delay-Doppler coordinates of the eight adjacent peak pairs, and use, as candidate coordinate points, coordinate points closest to an origin on a delay-Doppler plane in the side peak zones. To be specific, the first apparatus may determine, based on Table 3, delay-Doppler coordinates of four candidate boundary points: $\langle \bar{\tau}_1, \bar{v}_1 \rangle = \langle 13, 10 \rangle$, $\langle \bar{\tau}_2, \bar{v}_2 \rangle = (31, 45)$, $\langle \bar{\tau}_3, \bar{v}_3 \rangle = \langle 45, 55 \rangle$, and $\langle \bar{\tau}_4, \bar{v}_4 \rangle = \langle 61, 37 \rangle$.

Then, the first apparatus determines a target boundary point in the four candidate boundary points based on that an index set of the target boundary point is that $\mathcal{J} = \{i | \forall i, j \in \{1, 2, 3, 4\}, j \neq i, \bar{\tau}_j \leq \bar{\tau}_i, \bar{v}_j < \bar{v}_i\}$, where a point other than the target boundary point in the candidate boundary points is a non-boundary point. If a coordinate spacing between one candidate boundary point in the candidate boundary points and the origin on the delay-Doppler plane in a Doppler domain is less than a coordinate spacing between a to-be-determined boundary point in the candidate boundary points and the origin in the Doppler domain, and a coordinate spacing between the one candidate boundary point and the origin in a delay domain is less than or equal to a coordinate spacing between the to-be-determined boundary point in the candidate boundary points and the origin in the delay domain, the to-be-determined boundary point is a non-boundary point.

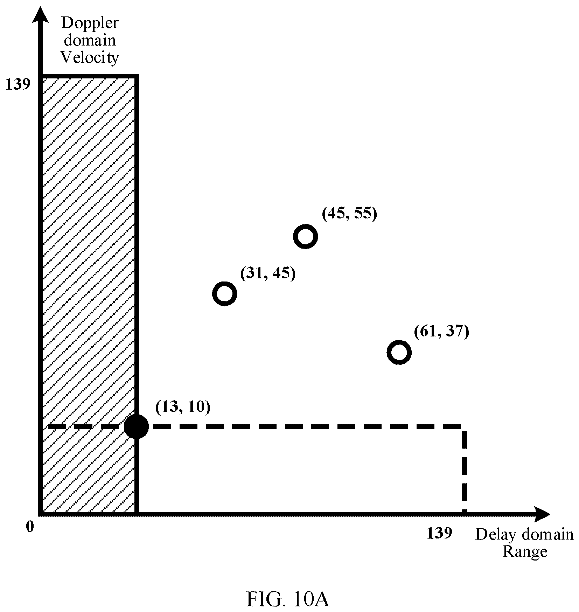

FIG. 10A is a diagram of determining one target boundary point in candidate boundary points according to an embodiment of this application. It can be learned from FIG. 10A that, a coordinate spacing between the candidate boundary point $\langle \bar{\tau}_1, \bar{v}_1 \rangle = (13, 10)$ and the origin on the delay-Doppler plane in the Doppler domain is less than a coordinate spacing between the candidate boundary point $\langle \bar{\tau}_2, \bar{v}_2 \rangle = (31, 45)$, $\langle \bar{\tau}_3, \bar{v}_3 \rangle = (45, 55)$, or $\langle \bar{\tau}_4, \bar{v}_4 \rangle = (61, 37)$ and the origin in the Doppler domain, and a coordinate spacing between the candidate boundary point $\langle \bar{\tau}_1, \bar{v}_1 \rangle = (13, 10)$ and the origin in the delay domain is less than a coordinate spacing between the candidate boundary point $\langle \bar{\tau}_2, \bar{v}_2 \rangle = (31, 45)$, $\langle \bar{\tau}_3, \bar{v}_3 \rangle = (45, 55)$, or $\langle \bar{\tau}_4, \bar{v}_4 \rangle = (61, 37)$ and the origin in the delay domain. In this case, the candidate boundary point $\langle \bar{\tau}_1, \bar{v}_1 \rangle = (13, 10)$ is the target boundary point, and the candidate boundary point $\langle \bar{\tau}_2, \bar{v}_2 \rangle = \langle 31, 45 \rangle$, $\langle \bar{\tau}_3, \bar{v}_3 \rangle = \langle 45, 55 \rangle$, or $\langle \bar{\tau}_4, \bar{v}_4 \rangle = (61, 37)$ is the non-boundary point.

A delay cyclic shift set $\mathcal{K} = \left\{ 0, 1, \dots, \left\lfloor \bar{\tau}_{i_{\overline{m}+1}} / \Delta_T \right\rfloor - 1 \right\}$; and a Doppler cyclic shift set $\mathcal{L} = \left\{ 0, 1, \dots, \left\lfloor \bar{v}_{i_{\overline{m}}} / \Delta_F \right\rfloor - 1 \right\}$, where $\overline{m} = \underset{m \in \{0, 1, \dots, |\mathcal{J}|\}}{\arg\max} \left\{ \left\lfloor \bar{\tau}_{i_{m+1}} / \Delta_T \right\rfloor \left\lfloor \bar{v}_{i_m} / \Delta_F \right\rfloor \right\}, \bar{\tau}_{i_{|\mathcal{J}|+1}} = \bar{v}_{i_0} = N$.

For example, two candidate low ambiguity zones: $\bar{\tau}_1 \times N = 13 \times 139$, and $N \times \bar{v}_1 = 139 \times 10$, may be determined based on the target boundary point $\langle \bar{\tau}_1, \bar{v}_1 \rangle = (13, 10)$ and that the sequence length $N = 139$, where a low ambiguity zone including a maximum sequence capacity is: $\bar{\tau}_1 \times N = 13 \times 139$.

Therefore, the first apparatus may determine that the delay cyclic shift set $\mathcal{K}$ = {0} and the Doppler cyclic shift set $\mathcal{L}$ = {0, 1, ... , 12} based on the target boundary point $\langle \overline{\tau}_1, \overline{v}_1 \rangle$ = (13, 10) and that the sequence length $N$ = 139. The first apparatus selects the delay cyclic shift index from the delay cyclic shift set, selects the Doppler cyclic shift index from the Doppler cyclic shift set, and performs a delay domain cyclic shift and a Doppler domain cyclic shift respectively according to Formula (3.11) and Formula (3.12), to obtain the cyclic shift sequence pair. A capacity of the finally determined cyclic shift sequence pair is: $\lfloor \overline{\tau}_1 / \Delta_T \rfloor \lfloor N / \Delta_F \rfloor = 13$. To be specific, when the sequence length of the cyclic shift sequence pair is that $N$ = 139, the first root index of the first sequence in the cyclic shift sequence pair is that $u_1$ = 29, the second root index of the second sequence is that $u_2$ = 42, the preset maximum delay $\Delta_T$ = 10, and the preset maximum Doppler shift $\Delta_F$ = 10, the first apparatus may obtain 13 cyclic shift sequence pairs.

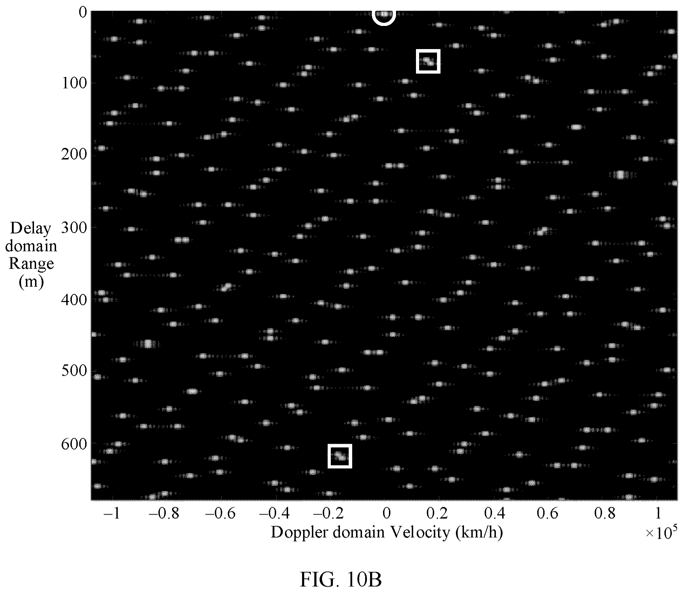

FIG. 10B is a diagram of simulation of an ambiguity function of a cyclic shift sequence pair having one target boundary point according to an embodiment of this application. It can be learned from FIG. 10B that, a white circle indicates an overlapping peak of an ambiguity function of the first sequence and an ambiguity function of the second sequence, and the white circle shown in FIG. 10B corresponds to the origin (0, 0) in FIG. 10A. White boxes indicate adjacent peaks participating in determining the low ambiguity zone, and the target boundary point $\langle \overline{\tau}_1, \overline{v}_1 \rangle$ = (13, 10) shown in FIG. 10A may be determined based on two white boxes shown in FIG. 10B.

For a specific carrier frequency, a product of a maximum observation range and velocity of a single cyclic shift sequence is a constant, that is, an area of a maximum zero ambiguity zone 300 shown in FIG. 3 is fixed. When a cyclic shift sequence pair has one target boundary point, two low ambiguity zones with different areas may be obtained, and a low ambiguity zone that may include a maximum sequence capacity in the two low ambiguity zones with different areas is used as a low ambiguity zone whose sequence capacity is maximized. Therefore, in comparison with the single cyclic shift sequence, the cyclic shift sequence pair may increase a measurement range and a measurement velocity.

[Implementation 2]

In a possible implementation, when a sequence length of the cyclic shift sequence pair is that $N$ = 139, the first root index of the first sequence in the cyclic shift sequence pair is that $u_1$ = 17, the second root index of the second sequence is that $u_2$ = 22, a preset maximum delay $\Delta_T$ = 10, and a preset maximum Doppler shift $\Delta_F$ = 10, $\Delta u = u_2 - u_1$ = 5. The first apparatus may obtain delay-Doppler coordinates of eight adjacent peak pairs based on Table 2. Then, the first apparatus may determine side peak zones of the adjacent peak pairs based on the delay-Doppler coordinates of the eight adjacent peak pairs, and use, as candidate coordinate points, coordinate points closest to an origin on a delay-Doppler plane in the side peak zones. To be specific, the first apparatus may determine, based on Table 3, delay-Doppler coordinates of four candidate boundary points: $\langle \overline{\tau}_1, \overline{v}_1 \rangle$ = (27, 59), $\langle \overline{\tau}_2, \overline{v}_2 \rangle$ = (31, 12), $\langle \overline{\tau}_3, \overline{v}_3 \rangle$ = ⟨51, 32⟩, and $\langle \overline{\tau}_4, \overline{v}_4 \rangle$ = (59, 46).

Then, the first apparatus determines a target boundary point in the four candidate boundary points based on that an index set of the target boundary point is that $\mathcal{J}$ = {$i | \forall i, j \in \{1, 2, 3, 4\}, j \neq i, \exists \overline{\tau}_j \leq \overline{\tau}_i, \overline{v}_j < \overline{v}_i$}, where a point other than the target boundary point in the candidate boundary points is a non-boundary point. If a coordinate spacing between one candidate boundary point in the candidate boundary points and the origin on the delay-Doppler plane in a Doppler domain is less than a coordinate spacing between a to-be-determined boundary point in the candidate boundary points and the origin in the Doppler domain, and a coordinate spacing between the one candidate boundary point and the origin in a delay domain is less than or equal to a coordinate spacing between the to-be-determined boundary point in the candidate boundary points and the origin in the delay domain, the to-be-determined boundary point is a non-boundary point.

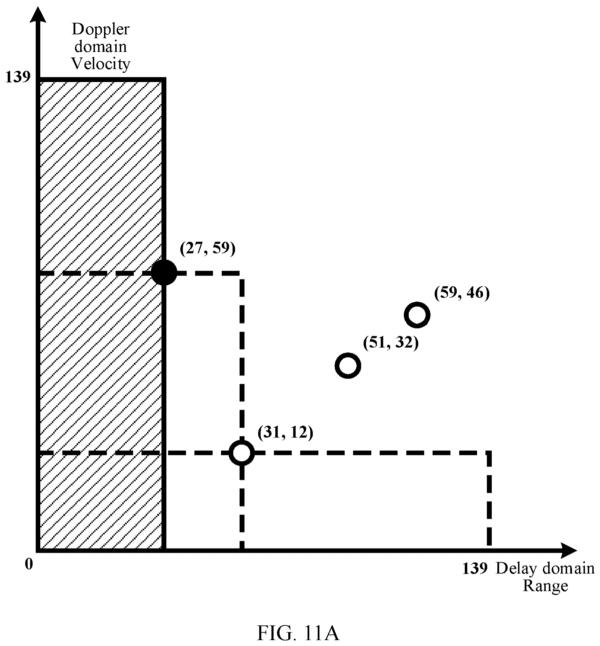

FIG. 11A is a diagram of determining two target boundary points in candidate boundary points according to an embodiment of this application. It can be learned from FIG. 11A that, a coordinate spacing between the candidate boundary point $\langle \overline{\tau}_2, \overline{v}_2 \rangle$ = (31, 12) and the origin on the delay-Doppler plane in the Doppler domain is less than a coordinate spacing between the candidate boundary point $\langle \overline{\tau}_3, \overline{v}_3 \rangle$ = (51, 32) or $\langle \overline{\tau}_4, \overline{v}_4 \rangle$ = (59, 46) and the origin in the Doppler domain, and a coordinate spacing between the candidate boundary point $\langle \overline{\tau}_2, \overline{v}_2 \rangle$ = (31, 12) and the origin in the delay domain is less than a coordinate spacing between the candidate boundary point $\langle \overline{\tau}_3, \overline{v}_3 \rangle$ = (51, 32) or $\langle \overline{\tau}_4, \overline{v}_4 \rangle$ = (59, 46) and the origin in the delay domain. In this case, the candidate boundary points $\langle \overline{\tau}_1, \overline{v}_1 \rangle$ = (27, 59) and $\langle \overline{\tau}_2, \overline{v}_2 \rangle$ = ⟨31, 12⟩ are the target boundary points, and the candidate boundary points $\langle \overline{\tau}_3, \overline{v}_3 \rangle$ = (51, 32) and $\langle \overline{\tau}_4, \overline{v}_4 \rangle$ = (59, 46) are non-boundary points.

A delay cyclic shift set $\mathcal{K} = \left\{ 0, 1, ..., \lfloor \overline{\tau}_{i_{\overline{m}+1}} / \Delta_T \rfloor - 1 \right\}$, and a Doppler cyclic shift set $\mathcal{L} = \left\{ 0, 1, ..., \lfloor \overline{v}_{i_{\overline{m}}} / \Delta_F \rfloor - 1 \right\}$, where $\overline{m} = \underset{m \in \{0, 1, ..., |\mathcal{J}|\}}{\mathrm{argmax}} \left\{ \lfloor \overline{\tau}_{i_{m+1}} / \Delta_T \rfloor \lfloor \overline{v}_{i_m} / \Delta_F \rfloor \right\}$, and $\overline{\tau}_{i_{|\mathcal{J}|+1}} = \overline{v}_{i_0} = N$. For example, three candidate low ambiguity zones: $\overline{\tau}_1 \times N = 27 \times 139$, $\overline{\tau}_2 \times \overline{v}_1 = 31 \times 59$, and $N \times \overline{v}_2 = 139 \times 12$, may be determined based on the target boundary points $\langle \overline{\tau}_1, \overline{v}_1 \rangle$ = (27, 59) and $\langle \overline{\tau}_2, \overline{v}_2 \rangle$ = (31, 12) and that the sequence length $N$ = 139, where a low ambiguity zone including a maximum sequence capacity is: $\overline{\tau}_1 \times N = 27 \times 139$.

Therefore, the first apparatus may determine that the delay cyclic shift set $\mathcal{K}$ = {0, 1} and the Doppler cyclic shift set $\mathcal{L}$ = {0, 1, ... , 12} based on the target boundary points $\langle \bar{\tau}_1, \bar{v}_1 \rangle$ = (27, 59) and $\langle \bar{\tau}_2, \bar{v}_2 \rangle$ = (31, 12) and that the sequence length $N$ = 139. The first apparatus selects the delay cyclic shift index from the delay cyclic shift set, selects the Doppler cyclic shift index from the Doppler cyclic shift set, and performs a delay domain cyclic shift and a Doppler domain cyclic shift respectively according to Formula (3.11) and Formula (3.12), to obtain the cyclic shift sequence pair. A capacity of the finally determined cyclic shift sequence pair is: $\lfloor \bar{\tau}_1 / \Delta_{\text{T}} \rfloor \lfloor N_{ZC} / \Delta_{\text{F}} \rfloor = 26$. To be specific, when the sequence length of the cyclic shift sequence pair is that $N$ = 139, the first root index of the first sequence in the cyclic shift sequence pair is that $u_1$ = 17, the second root index of the second sequence is that $u_2$ = 22, the preset maximum delay $\Delta_{\text{T}}$ = 10, and the preset maximum Doppler shift $\Delta_{\text{F}}$ = 10, the first apparatus may obtain 26 cyclic shift sequence pairs.

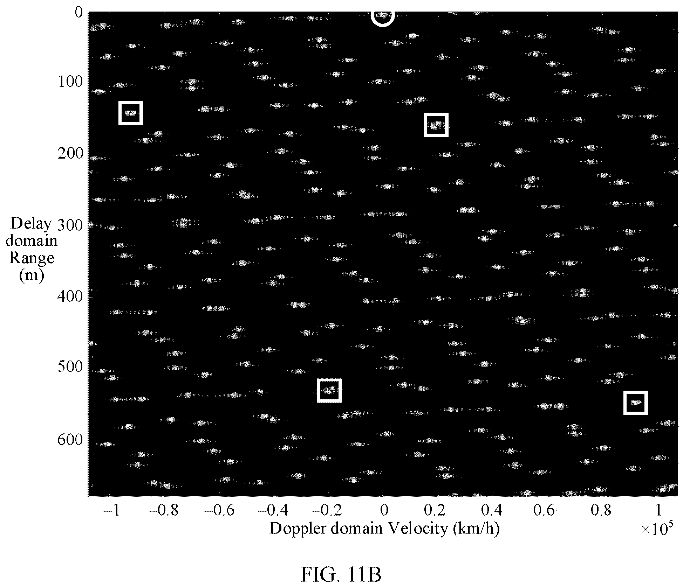

FIG. 11B is a diagram of an ambiguity function of a cyclic shift sequence pair having two target boundary points according to an embodiment of this application. It can be learned from FIG. 11B that, a white circle indicates an overlapping peak of an ambiguity function of the first sequence and an ambiguity function of the second sequence, and the white circle shown in FIG. 11B corresponds to the origin (0, 0) in FIG. 11A. White boxes indicate adjacent peaks participating in determining the low ambiguity zone, and the target boundary points $\langle \bar{\tau}_1, \bar{v}_1 \rangle$ = $\langle 27, 59 \rangle$ and $\langle \bar{\tau}_2, \bar{v}_2 \rangle$ = (31, 12) shown in FIG. 11A may be determined based on the four white boxes shown in FIG. 11B.

For a specific carrier frequency, a product of a maximum observation range and velocity of a single cyclic shift sequence is a constant, that is, an area of a maximum zero ambiguity zone 300 shown in FIG. 3 is fixed. When a cyclic shift sequence pair has two target boundary points, three low ambiguity zones with different areas may be obtained, and a low ambiguity zone that may include a maximum sequence capacity in the three low ambiguity zones with different areas is used as a low ambiguity zone whose sequence capacity is maximized. Therefore, in comparison with the single cyclic shift sequence, the cyclic shift sequence pair may increase a measurement range and a measurement velocity.

[Implementation 3]

In a possible implementation, when a sequence length of the cyclic shift sequence pair is that $N$ = 139, the first root index of the first sequence in the cyclic shift sequence pair is that $u_1$ = 31, the second root index of the second sequence is that $u_2$ = 42, a preset maximum delay $\Delta_{\text{T}}$ = 10, and a preset maximum Doppler shift $\Delta_{\text{F}}$ = 10, $\Delta u = u_2 - u_1$ = 11. The first apparatus may obtain delay-Doppler coordinates of eight adjacent peak pairs based on Table 2. Then, the first apparatus may determine side peak zones of the adjacent peak pairs based on the delay-Doppler coordinates of the eight adjacent peak pairs, and use, as candidate coordinate points, coordinate points closest to an origin on a delay-Doppler plane in the side peak zones. To be specific, the first apparatus may determine, based on Table 3, delay-Doppler coordinates of four candidate boundary points: $\langle \bar{\tau}_1, \bar{v}_1 \rangle$ = $\langle 28, 64 \rangle$, $\langle \bar{\tau}_2, \bar{v}_2 \rangle$ = $\langle 34, 58 \rangle$, $\langle \bar{\tau}_3, \bar{v}_3 \rangle$ = $\langle 37, 66 \rangle$, and $\langle \bar{\tau}_4, \bar{v}_4 \rangle$ = $\langle 66, 28 \rangle$.

Then, the first apparatus determines a target boundary point in the four candidate boundary points based on that an index set of the target boundary point is that $\mathcal{J}$ = {$i | \forall i,j \in \{1, 2, 3, 4\}, j \neq i, \nexists \bar{\tau}_j \leq \bar{\tau}_i, \bar{v}_j < \bar{v}_i$}, where a point other than the target boundary point in the candidate boundary points is a non-boundary point. If a coordinate spacing between one candidate boundary point in the candidate boundary points and the origin on the delay-Doppler plane in a Doppler domain is less than a coordinate spacing between a to-be-determined boundary point in the candidate boundary points and the origin in the Doppler domain, and a coordinate spacing between the one candidate boundary point and the origin in a delay domain is less than or equal to a coordinate spacing between the to-be-determined boundary point in the candidate boundary points and the origin in the delay domain, the to-be-determined boundary point is a non-boundary point.

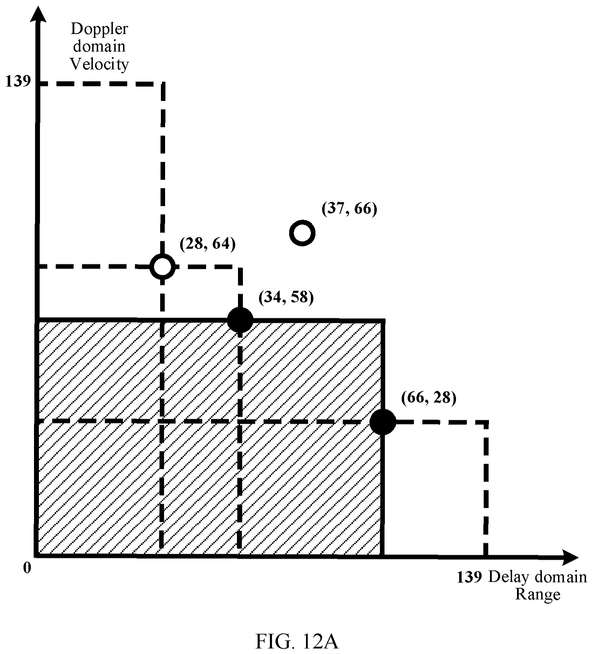

FIG. 12A is a diagram of determining three target boundary points in candidate boundary points according to an embodiment of this application. It can be learned from FIG. 12A that, a coordinate spacing between the candidate boundary point $\langle \bar{\tau}_1, \bar{v}_1 \rangle$ = (28, 64) or $\langle \bar{\tau}_2, \bar{v}_2 \rangle$ = $\langle 34, 58 \rangle$ and the origin on the delay-Doppler plane in the Doppler domain is less than a coordinate spacing between the candidate boundary point $\langle \bar{\tau}_3, \bar{v}_3 \rangle$ = (37, 66) and the origin in the Doppler domain, and a coordinate spacing between the candidate boundary point $\langle \bar{\tau}_1, \bar{v}_1 \rangle$ = (28, 64) or $\langle \bar{\tau}_2, \bar{v}_2 \rangle$ = (34, 58) and the origin in the delay domain is less than a coordinate spacing between the candidate boundary point $\langle \bar{\tau}_3, \bar{v}_3 \rangle$ = (37, 66) and the origin in the delay domain. In this case, the candidate boundary points $\langle \bar{\tau}_1, \bar{v}_1 \rangle$ = (28, 64), $\langle \bar{\tau}_2, \bar{v}_2 \rangle$ = (34, 58), and $\langle \bar{\tau}_4, \bar{v}_4 \rangle$ = (66, 28) are the target boundary points, and the candidate boundary point $\langle \bar{\tau}_3, \bar{v}_3 \rangle$ = (37, 66) is the non-boundary point.

A delay cyclic shift set $\mathcal{K} = \left\{ 0, 1, ..., \left\lfloor \bar{\tau}_{i_{\bar{m}+1}} / \Delta_{\text{T}} \right\rfloor - 1 \right\}$, and a Doppler cyclic shift set $\mathcal{L} = \left\{ 0, 1, ..., \left\lfloor \bar{v}_{i_{\bar{m}}} / \Delta_{\text{F}} \right\rfloor - 1 \right\}$, where $\bar{m} = \underset{m \in \{0,1,...,|\mathcal{J}|\}}{\text{argmax}} \left\{ \left\lfloor \bar{\tau}_{i_{m+1}} / \Delta_{\text{T}} \right\rfloor \left\lfloor \bar{v}_{i_m} / \Delta_{\text{F}} \right\rfloor \right\}$, and $\bar{\tau}_{i_{|\mathcal{J}|+1}} = \bar{v}_{i_0}$ = N. For example, four candidate low ambiguity zones: $\bar{\tau}_1 \times N$ = 28 × 139, $\bar{\tau}_2 \times \bar{v}_1$ = 34 × 64, $\bar{\tau}_4 \times \bar{v}_2$ = 66 × 58, and $N \times \bar{v}_4$ = 139 × 28, may be determined based on the target boundary points $\langle \bar{\tau}_1, \bar{v}_1 \rangle$ = $\langle 28, 64 \rangle$, $\langle \bar{\tau}_2, \bar{v}_2 \rangle$ = (34, 58), and $\langle \bar{\tau}_4, \bar{v}_4 \rangle$ = (66, 28) and that the sequence length $N$ = 139, where a low ambiguity zone including a maximum sequence capacity is: $\bar{\tau}_4 \times \bar{v}_2$ = 66 ×

58.

Therefore, the first apparatus may determine that the delay cyclic shift set $\mathcal{K} = \{0, 1, ..., 5\}$ and the Doppler cyclic shift set $\mathcal{L} = \{0, 1, ..., 4\}$ based on the target boundary points $\langle \bar{\tau}_1, \bar{v}_1 \rangle = \langle 28, 64 \rangle, \langle \bar{\tau}_2, \bar{v}_2 \rangle = (34, 58)$, and $\langle \bar{\tau}_4, \bar{v}_4 \rangle = (66, 28)$ and that the sequence length $N = 139$. The first apparatus selects the delay cyclic shift index from the delay cyclic shift set, selects the Doppler cyclic shift index from the Doppler cyclic shift set, and performs a delay domain cyclic shift and a Doppler domain cyclic shift respectively according to Formula (3.11) and Formula (3.12), to obtain the cyclic shift sequence pair. A capacity of the finally determined cyclic shift sequence pair is: $\lfloor \bar{\tau}_1 / \Delta_T \rfloor \lfloor N_{ZC} / \Delta_F \rfloor = 30$. To be specific, when the sequence length of the cyclic shift sequence pair is that $N = 139$, the first root index of the first sequence in the cyclic shift sequence pair is that $u_1 = 31$, the second root index of the second sequence is that $u_2 = 42$, the preset maximum delay $\Delta_T = 10$, and the preset maximum Doppler shift $\Delta_F = 10$, the first apparatus may obtain 30 cyclic shift sequence pairs.

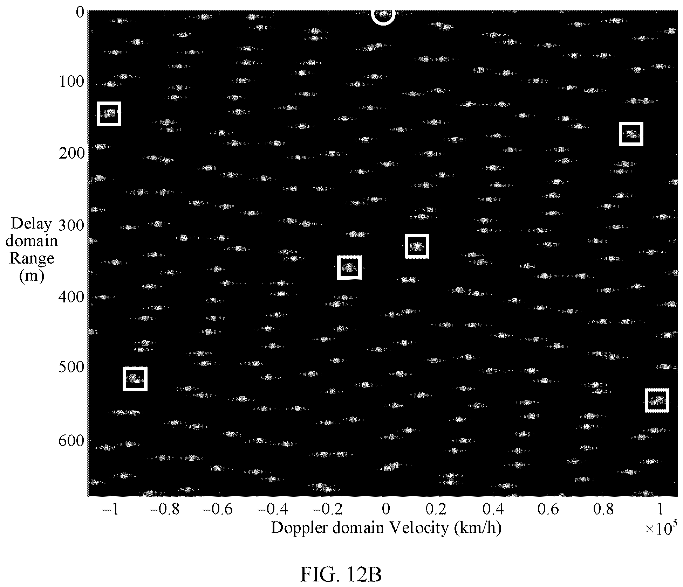

FIG. 12B is a diagram of an ambiguity function of a cyclic shift sequence pair having two target boundary points according to an embodiment of this application. It can be learned from FIG. 12B that, a white circle indicates an overlapping peak of an ambiguity function of the first sequence and an ambiguity function of the second sequence, and the white circle shown in FIG. 12B corresponds to the origin (0, 0) in FIG. 12A. White boxes indicate adjacent peaks participating in determining the low ambiguity zone, and the target boundary points $\langle \bar{\tau}_1, \bar{v}_1 \rangle = \langle 28, 64 \rangle, \langle \bar{\tau}_2, \bar{v}_2 \rangle = (34, 58)$, and $\langle \bar{\tau}_4, \bar{v}_4 \rangle = (66, 28)$ shown in FIG. 12A may be determined based on six white boxes shown in FIG. 12B.

For a specific carrier frequency, a product of a maximum observation range and velocity of a single cyclic shift sequence is a constant, that is, an area of a maximum zero ambiguity zone 300 shown in FIG. 3 is fixed. When a cyclic shift sequence pair has three target boundary points, four low ambiguity zones with different areas may be obtained, and a low ambiguity zone that may include a maximum sequence capacity in the four low ambiguity zones with different areas is used as a low ambiguity zone whose sequence capacity is maximized. Therefore, in comparison with the single cyclic shift sequence, the cyclic shift sequence pair may increase a measurement range and a measurement velocity.

[Implementation 4]

In a possible implementation, when a sequence length of the cyclic shift sequence pair is that $N = 139$, the first root index of the first sequence in the cyclic shift sequence pair is that $u_1 = 25$, the second root index of the second sequence is that $u_2 = 28$, a preset maximum delay $\Delta_T = 10$, and a preset maximum Doppler shift $\Delta_F = 10$, $\Delta u = u_2 - u_1 = 3$. The first apparatus may obtain delay-Doppler coordinates of eight adjacent peak pairs based on Table 2. Then, the first apparatus may determine side peak zones of the adjacent peak pairs based on the delay-Doppler coordinates of the eight adjacent peak pairs, and use, as candidate coordinate points, coordinate points closest to an origin on a delay-Doppler plane in the side peak zones. To be specific, the first apparatus may determine, based on Table 3, delay-Doppler coordinates of four candidate boundary points: $\langle \bar{\tau}_1, \bar{v}_1 \rangle = (8, 53), \langle \bar{\tau}_2, \bar{v}_2 \rangle = (37, 47), \langle \bar{\tau}_3, \bar{v}_3 \rangle = \langle 45, 37 \rangle$, and $\langle \bar{\tau}_4, \bar{v}_4 \rangle = \langle 55, 10 \rangle$.

Then, the first apparatus determines a target boundary point in the four candidate boundary points based on that an index set of the target boundary point is that $\mathcal{J} = \{i | \forall i, j \in \{1, 2, 3, 4\}, j \neq i, \nexists \bar{\tau}_j \leq \bar{\tau}_i, \bar{v}_j < \bar{v}_i\}$, where a point other than the target boundary point in the candidate boundary points is a non-boundary point. If a coordinate spacing between one candidate boundary point in the candidate boundary points and the origin on the delay-Doppler plane in a Doppler domain is less than a coordinate spacing between a to-be-determined boundary point in the candidate boundary points and the origin in the Doppler domain, and a coordinate spacing between the one candidate boundary point and the origin in a delay domain is less than or equal to a coordinate spacing between the to-be-determined boundary point in the candidate boundary points and the origin in the delay domain, the to-be-determined boundary point is a non-boundary point.

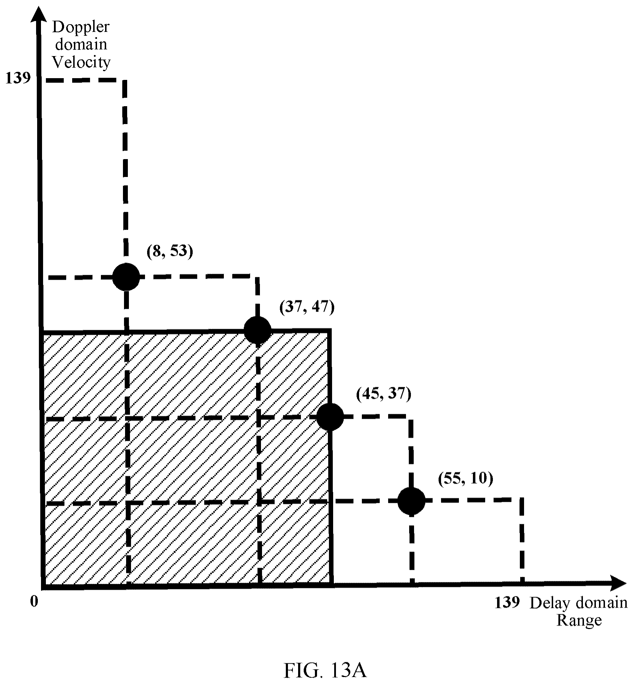

FIG. 13A is a diagram of determining four target boundary points in candidate boundary points according to an embodiment of this application. It can be learned from FIG. 13A that, in the candidate boundary points, there is no candidate boundary point whose coordinate spacing with the origin on the delay-Doppler plane in the Doppler domain is less than a coordinate spacing between a to-be-determined boundary point in the candidate boundary points and the origin in the Doppler domain, and whose coordinate spacing with the origin in the delay domain is less than a coordinate spacing between the to-be-determined candidate boundary point and the origin in the delay domain. In this case, the candidate boundary points $\langle \bar{\tau}_1, \bar{v}_1 \rangle = (8, 53), \langle \bar{\tau}_2, \bar{v}_2 \rangle = \langle 37, 47 \rangle, \langle \bar{\tau}_3, \bar{v}_3 \rangle = (45, 37)$, and $\langle \bar{\tau}_4, \bar{v}_4 \rangle = (55, 10)$ are the target boundary points.

A delay cyclic shift set $\mathcal{K} = \left\{ 0, 1, ..., \left\lfloor \bar{\tau}_{i_{\bar{m}+1}} / \Delta_T \right\rfloor - 1 \right\}$, and a Doppler cyclic shift set $\mathcal{L} = \left\{ 0, 1, ..., \left\lfloor \bar{v}_{i_{\bar{m}}} / \Delta_F \right\rfloor - 1 \right\}$, where $\bar{m} = \underset{m \in \{0, 1, ..., |\mathcal{J}|\}}{\operatorname{argmax}} \left\{ \left\lfloor \bar{\tau}_{i_{m+1}} / \Delta_T \right\rfloor \left\lfloor \bar{v}_{i_m} / \Delta_F \right\rfloor \right\}$, and $\bar{\tau}_{i_{|\mathcal{J}|+1}} = \bar{v}_{i_0} = N$.

For example, five candidate low ambiguity zones: $\bar{\tau}_1 \times N = 8 \times 139, \bar{\tau}_2 \times \bar{v}_1 = 37 \times 53, \bar{\tau}_3 \times \bar{v}_2 = 45 \times 47, \bar{\tau}_4 \times \bar{v}_3 = 55 \times 37$, and $N \times \bar{v}_4 = 39 \times 10$, may be determined based on the target boundary points $\langle \bar{\tau}_1, \bar{v}_1 \rangle = (8, 53), \langle \bar{\tau}_2, \bar{v}_2 \rangle = \langle 37, 47 \rangle, \langle \bar{\tau}_3, \bar{v}_3 \rangle = \langle 45, 37 \rangle$, and $\langle \bar{\tau}_4, \bar{v}_4 \rangle = (55, 10)$ and that the sequence length $N = 139$, where a low ambiguity zone including a maximum

sequence capacity is $\bar{\tau}_3 \times \bar{v}_2 = 45 \times 47$.

Therefore, the first apparatus may determine that the delay cyclic shift set $\mathcal{K} = \{0, 1, ..., 3\}$ and the Doppler cyclic shift set $\mathcal{L} = \{0, 1, ..., 3\}$ based on the target boundary points $\langle\bar{\tau}_1, \bar{v}_1\rangle = \langle 8, 53\rangle, \langle\bar{\tau}_2, \bar{v}_2\rangle = (37,47), \langle\bar{\tau}_3, \bar{v}_3\rangle = (45, 37)$, and $\langle\bar{\tau}_4, \bar{v}_4\rangle = (55, 10)$ and that the sequence length $N = 139$. The first apparatus selects the delay cyclic shift index from the delay cyclic shift set, selects the Doppler cyclic shift index from the Doppler cyclic shift set, and performs a delay domain cyclic shift and a Doppler domain cyclic shift respectively according to Formula (3.11) and Formula (3.12), to obtain the cyclic shift sequence pair. A capacity of the finally determined cyclic shift sequence pair is: $\lfloor\bar{\tau}_1/\Delta_T\rfloor\lfloor N_{ZC}/\Delta_F\rfloor = 16$. To be specific, when the sequence length of the cyclic shift sequence pair is that $N = 139$, the first root index of the first sequence in the cyclic shift sequence pair is that $u_1 = 25$, the second root index of the second sequence is that $u_2 = 28$, the preset maximum delay $\Delta_T = 10$, and the preset maximum Doppler shift $\Delta_F = 10$, the first apparatus may obtain 16 cyclic shift sequence pairs.

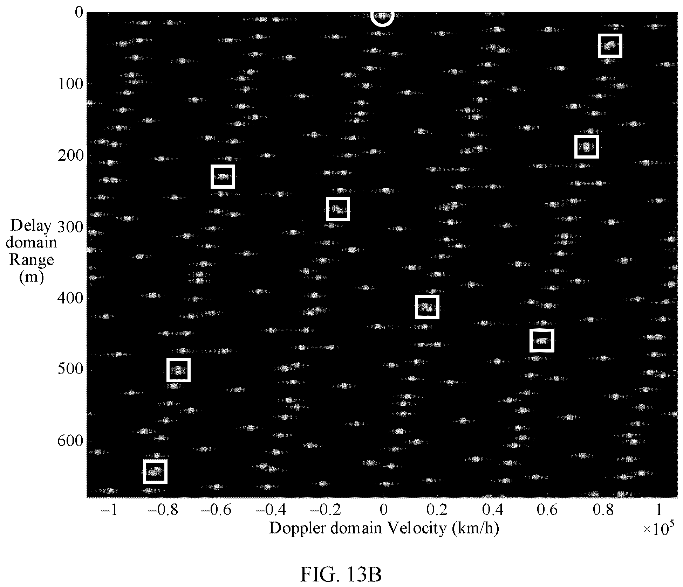

FIG. 13B is a diagram of an ambiguity function of a cyclic shift sequence pair having four target boundary points according to an embodiment of this application. It can be learned from FIG. 13B that, a white circle indicates an overlapping peak of an ambiguity function of the first sequence and an ambiguity function of the second sequence, and the white circle shown in FIG. 13B corresponds to the origin (0, 0) in FIG. 13A. White boxes indicate adjacent peaks participating in determining the low ambiguity zone, and the target boundary points $\langle\bar{\tau}_1, \bar{v}_1\rangle = \langle 8, 53\rangle, \langle\bar{\tau}_2, \bar{v}_2\rangle = (37,47), \langle\bar{\tau}_3, \bar{v}_3\rangle = (45, 37)$, and $\langle\bar{\tau}_4, \bar{v}_4\rangle = \langle 55, 10\rangle$ shown in FIG. 12A may be determined based on six white boxes shown in FIG. 13B.

For a specific carrier frequency, a product of a maximum observation range and velocity of a single cyclic shift sequence is a constant, that is, an area of a maximum zero ambiguity zone 300 shown in FIG. 3 is fixed. When a cyclic shift sequence pair has four target boundary points, fifth low ambiguity zones with different areas may be obtained, and a low ambiguity zone that may include a maximum sequence capacity in the fifth low ambiguity zones with different areas is used as a low ambiguity zone whose sequence capacity is maximized. Therefore, in comparison with the single cyclic shift sequence, the cyclic shift sequence pair may increase a measurement range and a measurement velocity.

The foregoing describes in detail the method in embodiments of this application. The following provides apparatuses in embodiments of this application.

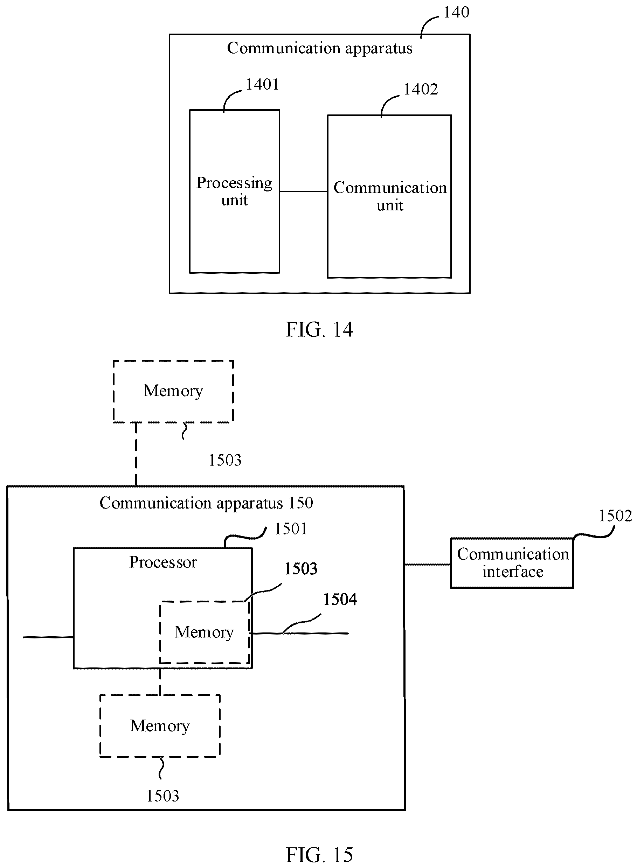

An embodiment of this application provides a communication apparatus. The communication apparatus may include modules or units that are in one-to-one correspondence with the methods/operations/steps/actions in the foregoing method embodiment. The module or the unit may be a hardware circuit, may be software, or may be implemented by the hardware circuit in combination with the software. For example, FIG. 14 is a diagram of a structure of a communication apparatus 140 according to an embodiment of this application. The communication apparatus 140 may include a processing unit 1401 and a communication unit 1402. The communication apparatus 140 is configured to implement the foregoing communication method, for example, the communication method in the embodiment shown in FIG. 5.

Optionally, the communication apparatus 140 may be the first apparatus or the second apparatus in the foregoing embodiment, for example, the first apparatus or the second apparatus in the embodiment shown in FIG. 5.

In a possible implementation, when the communication apparatus 140 is the first apparatus in the foregoing embodiment,

the processing unit 1401 is configured to obtain a cyclic shift sequence pair, where the cyclic shift sequence pair includes a first sequence and a second sequence, the first sequence is obtained by performing cyclic shifts on a first root sequence respectively based on a delay cyclic shift index and a Doppler cyclic shift index, the second sequence is obtained by performing the cyclic shifts on a second root sequence respectively based on the delay cyclic shift index and the Doppler cyclic shift index, and a first root index of the first root sequence is different from a second root index of the second root sequence; and
the communication unit 1402 is configured to output the cyclic shift sequence pair.

In a possible implementation, when the communication apparatus 140 is the second apparatus in the foregoing embodiment,

the communication unit 1402 is configured to receive a cyclic shift sequence pair; and
the processing unit 1401 is configured to process the cyclic shift sequence pair.

In a possible implementation, a coordinate spacing between a first peak of an ambiguity function of the first sequence and a second peak of an ambiguity function of the second sequence in a delay domain is greater than or equal to a first threshold, or a coordinate spacing between the first peak of the ambiguity function of the first sequence and the second peak of the ambiguity function of the second sequence in a Doppler domain is greater than or equal to a second threshold.

In a possible implementation, the delay cyclic shift index is any one index in a delay cyclic shift set, and the Doppler cyclic shift index is any one index in a Doppler cyclic shift set; and

the first sequence and the second sequence have the same delay cyclic shift index, and the first sequence and the second sequence have the same Doppler cyclic shift index.

In a possible implementation, the delay cyclic shift set and the Doppler cyclic shift set each are determined based on one or more target boundary points, the target boundary point is determined based on an adjacent peak pair, the adjacent peak pair includes a third peak of an ambiguity function of the first root sequence and a fourth peak of an ambiguity function of the second root sequence, a coordinate spacing between the third peak and the fourth peak in the delay domain is less than or equal to the first threshold, and a coordinate spacing between the third peak and the fourth peak in the Doppler domain is less than or equal to the second threshold.

In a possible implementation, the one or more target boundary points are determined based on a plurality of candidate boundary points, where a first target boundary point is any one of the one or more target boundary points; and a coordinate spacing between the first target boundary point and an origin in the Doppler domain is less than or equal to a coordinate spacing between a to-be-determined candidate boundary point and the origin in the Doppler domain, and/or a coordinate spacing between the first target boundary point and the origin in the delay domain is less than a coordinate spacing between the to-be-determined candidate boundary point and the origin in the delay domain, where the to-be-determined candidate boundary point is any candidate boundary point other than the first target boundary point in the plurality of candidate boundary points, and the candidate boundary point is a coordinate point closest to the origin in a side peak zone determined based on the adjacent peak pair; and the coordinate spacing in the Doppler domain is determined based on a Doppler coordinate and a sequence length of the cyclic shift sequence pair, and the coordinate spacing in the delay domain is determined based on a delay coordinate and the sequence length of the cyclic shift sequence pair.

In a possible implementation, the adjacent peak pair includes one or more of the following: the third peak and the fourth peak have the same coordinate in the delay domain, and the coordinate spacing between the third peak and the fourth peak in the Doppler domain is less than or equal to the second threshold; the coordinate spacing between the third peak and the fourth peak in the delay domain is less than or equal to the first threshold, and the third peak and the fourth peak have the same coordinate in the Doppler domain; and the coordinate spacing between the third peak and the fourth peak in the delay domain is less than or equal to the first threshold, and the coordinate spacing between the third peak and the fourth peak in the Doppler domain is less than or equal to the second threshold.

In a possible implementation, the first threshold is a delay resolution, and the second threshold is a Doppler resolution.

In a possible implementation, the cyclic shift sequence pair is for measuring a range between the first apparatus and a target apparatus, or a velocity of the first apparatus relative to the target apparatus.

In a possible implementation, an expression of a discrete-time signal of the cyclic shift sequence pair is as follows:

$$s_{u_1|u_2,k,l}(n) = \tilde{s}_{u_1,k,l}(n) + s_{u_1,k,l}(n - N_{\mathrm{CP}}) + \tilde{s}_{u_2,k,l}(n - N - N_{\mathrm{CP}}) + s_{u_2,k,l}(n - N - 2N_{\mathrm{CP}})$$

$$s_{u_1,k,l}(n) = e^{-j\pi[u_1(n+k\Delta_{\mathrm{T}})(n+k\Delta_{\mathrm{T}}+1)+2nl\Delta_{\mathrm{F}}]/N}, n = 0, 1, \ldots, N-1$$

$$\tilde{s}_{u_1,k,l}(n) = s_{u_1,k,l}(n + N - N_{\mathrm{CP}}), n = 0, 1, \ldots, N_{\mathrm{CP}} - 1$$

$$s_{u_2,k,l}(n) = e^{-j\pi[u_2(n+k\Delta_{\mathrm{T}})(n+k\Delta_{\mathrm{T}}+1)+2nl\Delta_{\mathrm{F}}]/N}, n = 0, 1, \ldots, N-1$$

$$\tilde{s}_{u_2,k,l}(n) = s_{u_2,k,l}(n + N - N_{\mathrm{CP}}), n = 0, 1, \ldots, N_{\mathrm{CP}} - 1$$

where $s_{u_1,k,l}(n)$ indicates the first sequence, $\tilde{s}_{u1,k,l}(n)$ indicates a cyclic prefix of the first sequence, $s_{u2,k,l}(n)$ indicates the second sequence, $\tilde{s}_{u2,k,l}(n)$ indicates a cyclic prefix of the second sequence, N indicates the sequence length of the cyclic shift sequence pair, $N_{\mathrm{CP}}$ indicates a length of the cyclic prefix, $u_1$ indicates the first root index, $u_2$ indicates the second root index, $\Delta_{\mathrm{T}}$ indicates a preset maximum delay, $\Delta_{\mathrm{F}}$ indicates a preset maximum Doppler shift, the length of the cyclic prefix is greater than or equal to the preset maximum delay, k indicates the delay cyclic shift index, and l indicates the Doppler cyclic shift index.

FIG. 15 is a diagram of a structure of a communication apparatus 150 according to an embodiment of this application. The communication apparatus 150 may be configured to implement a function of the first apparatus and the second apparatus in the foregoing method. The communication apparatus 150 is an apparatus having a computing capability and/or a communication capability. The communication apparatus herein may be an entity device, for example, a network device or a terminal device, may be a communication unit, a component, or a chip in the network device, may be a communication unit, a component, or a chip in the terminal device, may be an apparatus that matches the network device, or may be an apparatus that matches the terminal device.

As shown in FIG. 15, the communication apparatus 150 includes a processor 1501. In a possible implementation, the communication apparatus may further include at least one communication interface 1502, or the processor 1501 is coupled to the communication interface 1502. In still another possible implementation, the communication apparatus may further include at least one memory 1503. The memory 1503 may be integrated with the processor 1501, may be separately arranged, or may be arranged outside the communication apparatus 150. It should be understood that, a quantity of processors and a quantity of memories in the communication apparatus 150 are not limited in this application.

The processor 1501 is a module for performing an operation, and may include any one or more of processors such as a controller (for example, a storage controller), a logic circuit, a baseband processor, a central processing unit (central processing unit, CPU), a micro graphics processing unit (graphics processing unit, GPU), a microprocessor (microprocessor, MP), a digital signal processor (digital signal processor, DSP), a coprocessor (assisting the central processing unit in completing corresponding processing and application), a field programmable gate array (field programmable gate array, FPGA), an application-specific integrated circuit (Application-Specific Integrated Circuit, ASIC), and a microcontroller unit (Microcontroller Unit, MCU).

The communication interface 1502 may be configured to provide information input or output for the at least one processor; and/or the communication interface 1502 may be configured to receive data sent externally and/or send data to the outside. The communication interface 1502 may be an input/output interface, may be a wired link interface including an ethernet cable, or may be a wireless link (Wi-Fi, Bluetooth, universal wireless transmission, or another wireless communication technology) interface. Optionally, the communication interface 1502 may further include a transmitter (for example, a radio frequency transmitter or an antenna), a receiver, or the like that is coupled to the interface. For example, when the communication apparatus 150 is the first apparatus, the communication interface 1502 is configured to send a cyclic shift sequence pair. When the communication apparatus 150 is the second apparatus, the communication interface 1502 is configured to receive a cyclic shift sequence pair.

The memory 1503 is configured to provide storage space. The storage space may optionally store application data, user data, an operating system, a computer program, a configuration file, and the like. The memory 1503 may include a volatile memory (volatile memory), for example, a random access memory (random access memory, RAM). The memory 1503 may further include a nonvolatile memory (nonvolatile memory), for example, a read-only memory (read-only memory, ROM), a flash memory, a hard disk drive (hard disk drive, HDD), or a solid-state drive (solid-state drive, SSD).

The communication apparatus 150 may further include a bus 1504. The bus 1504 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one line is used to represent the bus in FIG. 15, but this does not mean that there is only one bus or only one type of bus. The bus 1504 may include a path for transmitting information between components (for example, the memory 1503, the processor 1501, and the communication interface 1502) of the communication apparatus 150.

In this embodiment of this application, the memory 1503 stores executable instructions, and the processor 1501 executes the executable instructions to implement the foregoing communication method, for example, the communication method in the embodiment in FIG. 5. In other words, the memory 1503 stores instructions for performing the communication method.

In a possible implementation, when the communication apparatus 150 is the first apparatus, the communication apparatus 150 is configured to perform the steps performed by the first apparatus in the possible implementations of the foregoing method embodiment. For example, the processor 1501 is configured to obtain a cyclic shift sequence pair, where the cyclic shift sequence pair includes a first sequence and a second sequence, the first sequence is obtained by performing cyclic shifts on a first root sequence respectively based on a delay cyclic shift index and a Doppler cyclic shift index, the second sequence is obtained by performing the cyclic shifts on a second root sequence respectively based on the delay cyclic shift index and the Doppler cyclic shift index, and a first root index of the first root sequence is different from a second root index of the second root sequence; and the processor 1501 is configured to send the cyclic shift sequence pair through the communication interface 1502.

In another possible implementation, when the communication apparatus 150 is the second apparatus, the communication apparatus 150 is configured to perform the steps performed by the first apparatus in the possible implementations of the foregoing method embodiment. For example, the processor 1501 is configured to receive a cyclic shift sequence pair through the communication interface 1502; and the processor 1501 processes the cyclic shift sequence pair.

When the communication apparatus 150 is a chip used in a terminal, the chip in the terminal implements a function of the terminal in the foregoing method embodiment. The chip in the terminal receives information from another module (for example, a radio frequency module or an antenna) in the terminal, where the information is sent by another terminal or a network device to the terminal. Alternatively, the chip in the terminal outputs information to another module (for example, a radio frequency module or an antenna) in the terminal, where the information is sent by the terminal to another terminal or a network device.

When the communication apparatus 150 is a chip used in a network device, the chip in the network device implements a function of the network device in the foregoing method embodiment. The chip in the network device receives information from another module (for example, a radio frequency module or an antenna) in the network device, where the information is sent by a terminal or another network device to the network device. Alternatively, the chip in the network device outputs information to another module (for example, a radio frequency module or an antenna) in the network device, where the information is sent by the network device to a terminal or another network device.

An embodiment of this application may further provide a computer program product. The computer program product includes computer instructions, and when the instructions are run on at least one processor, the foregoing communication method is implemented, for example, the communication method in the embodiment in FIG. 5.

In a possible implementation, the computer program product may be a software installation package or an image package. When the foregoing method needs to be used, the computer program product may be downloaded, and the computer program product is executed on a computing device.

An embodiment of this application may further provide a communication system. The communication system includes a terminal device and a network device. For specific descriptions, refer to the communication method shown in FIG. 5.

An embodiment of this application may further provide a computer program. The computer program is configured to implement the foregoing communication method, for example, the communication method in the embodiment in FIG. 5.

An embodiment of this application further provides a computer-readable storage medium. The computer-readable storage medium includes instructions, and the instructions are for implementing the foregoing communication method, for example, the communication method in the embodiment in FIG. 5.

The computer-readable storage medium may be any usable medium accessible by a communication apparatus, or a data storage device, for example, a data center integrating one or more usable media. The usable medium may be a magnetic medium (for example, a floppy disk, a hard disk, or a magnetic tape), an optical medium (for example, a digital video disc (Digital Video Disc, DVD)), a semiconductor medium (for example, a solid-state drive), or the like.

In embodiments of this application, terms such as "example" or "for example" are used to represent giving an example, an illustration, or a description. Any embodiment or design solution described as an "example" or "for example" in this application should not be explained as being more preferred or having more advantages than another embodiment or design solution. Exactly, use of the terms such as "example" or "for example" is intended to present a related concept in a specific manner.

"At least one" in embodiments of this application means one or more, and "a plurality of" means two or more. "At least one of the following items (pieces)" or a similar expression thereof indicates any combination of these items, including a single item (piece) or any combination of a plurality of items (pieces). For example, at least one item (piece) of a, b, and c may indicate: a, b, c, (a and b), (a and c), (b and c), or (a, b, and c), where a, b, and c may be singular or plural. "And/Or" describes an association relationship between associated objects and represents that three relationships may exist. For example, A and/or B may represent the following cases: Only A exists, both A and B exist, and only B exists, where A and B may be singular or plural. The character "/" generally indicates an "or" relationship between the associated objects.

In addition, unless otherwise specified, ordinal numbers such as "first" and "second" are used in embodiments of this application to distinguish a plurality of objects, but are not used to limit a sequence, a time sequence, a priority, or an importance degree of the plurality of objects. For example, a first container storage management apparatus and a second container storage management apparatus are merely for ease of description, but do not indicate differences in apparatus structures, deployment sequences, importance degrees, and the like of the first container storage management apparatus and the first container storage management apparatus.

A person of ordinary skill in the art may understand that all or some of the steps of the foregoing embodiments may be implemented by hardware or a program instructing related hardware. The program may be stored in a computer-readable storage medium. The storage medium may be a read-only memory, a magnetic disk, an optical disc, or the like.

Finally, it should be noted that, the foregoing embodiments are merely intended for describing the technical solutions of this application, but not for limiting this application. Although this application is described in detail with reference to the foregoing embodiments, a person of ordinary skill in the art should understand that modifications can still be made to the technical solutions described in the foregoing embodiments or equivalent replacements can be made to some technical features thereof, without departing from the protection scope of the technical solutions in embodiments of this application.

Claims

1. A communication method, wherein the method comprises:

    obtaining, by a first apparatus, a cyclic shift sequence pair, wherein the cyclic shift sequence pair comprises a first sequence and a second sequence, the first sequence is obtained by performing cyclic shifts on a first root sequence respectively based on a delay cyclic shift index and a Doppler cyclic shift index, the second sequence is obtained by performing the cyclic shifts on a second root sequence respectively based on the delay cyclic shift index and the Doppler cyclic shift index, and a first root index of the first root sequence is different from a second root index of the second root sequence; and
    outputting the cyclic shift sequence pair.

2. The method according to claim 1, wherein a coordinate spacing between a first peak of an ambiguity function of the first sequence and a second peak of an ambiguity function of the second sequence in a delay domain is greater than or equal to a first threshold, and/or a coordinate spacing between the first peak of the ambiguity function of the first sequence and the second peak of the ambiguity function of the second sequence in a Doppler domain is greater than or equal to a second threshold.

3. The method according to claim 1 or 2, wherein the delay cyclic shift index is any one index in a delay cyclic shift set, and the Doppler cyclic shift index is any one index in a Doppler cyclic shift set; and
    the first sequence and the second sequence have the same delay cyclic shift index, and the first sequence and the second sequence have the same Doppler cyclic shift index.

4. The method according to claim 3, wherein the delay cyclic shift set and the Doppler cyclic shift set each are determined based on one or more target boundary points, the target boundary point is determined based on an adjacent peak pair, the adjacent peak pair comprises a third peak of an ambiguity function of the first root sequence and a fourth peak of an ambiguity function of the second root sequence, a coordinate spacing between the third peak and the fourth peak in the delay domain is less than or equal to the first threshold, and a coordinate spacing between the third peak and the fourth peak in the Doppler domain is less than or equal to the second threshold.

5. The method according to claim 4, wherein the one or more target boundary points are determined based on a plurality of candidate boundary points, wherein a first target boundary point is any one of the one or more target boundary points; and a coordinate spacing between the first target boundary point and an origin in the Doppler domain is less than or equal to a coordinate spacing between a to-be-determined candidate boundary point and the origin in the Doppler domain, and/or a coordinate spacing between the first target boundary point and the origin in the delay domain is less than a coordinate spacing between the to-be-determined candidate boundary point and the origin in the delay domain, wherein the to-be-determined candidate boundary point is any candidate boundary point other than the first target boundary point in the plurality of candidate boundary points, and the candidate boundary point is a coordinate point closest to the origin in a side peak zone determined based on the adjacent peak pair; and the coordinate spacing in the Doppler domain is determined based on a Doppler coordinate and a sequence length of the cyclic shift sequence pair, and the coordinate spacing in the delay domain is determined based on a delay coordinate and the sequence length of the cyclic shift sequence pair.

6. The method according to claim 4 or 5, wherein the adjacent peak pair comprises one or more of the following: the third peak and the fourth peak have the same coordinate in the delay domain, and the coordinate spacing between the third peak and the fourth peak in the Doppler domain is less than or equal to the second threshold; the coordinate spacing between the third peak and the fourth peak in the delay domain is less than or equal to the first threshold, and the third peak and the fourth peak have the same coordinate in the Doppler domain; and the coordinate spacing between the third peak and the fourth peak in the delay domain is less than or equal to the first threshold, and the coordinate spacing between the third peak and the fourth peak in the Doppler domain is less than or equal to the second threshold.

7. The method according to any one of claims 2 to 6, wherein the first threshold is a delay resolution, and the second threshold is a Doppler resolution.

8. The method according to any one of claims 1 to 7, wherein the cyclic shift sequence pair is for measuring a range between the first apparatus and a target apparatus, or a velocity of the first apparatus relative to the target apparatus.

9. The method according to any one of claims 1 to 8, wherein an expression of a discrete-time signal of the cyclic shift sequence pair is as follows:

$$s_{u_1|u_2,k,l}(n) = \tilde{s}_{u_1,k,l}(n) + s_{u_1,k,l}(n - N_{CP}) + \tilde{s}_{u_2,k,l}(n - N - N_{CP}) + s_{u_2,k,l}(n - N - 2N_{CP})$$

$$s_{u_1,k,l}(n) = e^{-j\pi[u_1(n+k\Delta_T)(n+k\Delta_T+1)+2nl\Delta_F]/N}, n = 0, 1, ..., N - 1$$

$$\tilde{s}_{u_1,k,l}(n) = s_{u_1,k,l}(n + N - N_{CP}), n = 0, 1, ..., N_{CP} - 1$$

$$s_{u_2,k,l}(n) = e^{-j\pi[u_2(n+k\Delta_T)(n+k\Delta_T+1)+2nl\Delta_F]/N}, n = 0, 1, ..., N - 1$$

$$\tilde{s}_{u_2,k,l}(n) = s_{u_2,k,l}(n + N - N_{CP}), n = 0, 1, ..., N_{CP} - 1$$

wherein $s_{u1,k,l}(n)$ indicates the first sequence, $\tilde{s}_{u1,k,l}(n)$ indicates a cyclic prefix of the first sequence, $s_{u2,k,l}(n)$ indicates the second sequence, $\tilde{s}_{u2,k,l}(n)$ indicates a cyclic prefix of the second sequence, N indicates the sequence length of the cyclic shift sequence pair, $N_{CP}$ indicates a length of the cyclic prefix, $u_1$ indicates the first root index, $u_2$ indicates the second root index, $\Delta_T$ indicates a preset maximum delay, $\Delta_F$ indicates a preset maximum Doppler shift, the length of the cyclic prefix is greater than or equal to the preset maximum delay, k indicates the delay cyclic shift index, and $l$ indicates the Doppler cyclic shift index.

10. A communication method, wherein the method comprises:

receiving, by a second apparatus, a cyclic shift sequence pair, wherein the cyclic shift sequence pair comprises a first sequence and a second sequence, the first sequence is obtained by performing cyclic shifts on a first root sequence respectively based on a delay cyclic shift index and a Doppler cyclic shift index, the second sequence is obtained by performing the cyclic shifts on a second root sequence respectively based on the delay cyclic shift index and the Doppler cyclic shift index, and a first root index of the first root sequence is different from a second root index of the second root sequence; and
processing the cyclic shift sequence pair.

11. The method according to claim 10, wherein a coordinate spacing between a first peak of an ambiguity function of the first sequence and a second peak of an ambiguity function of the second sequence in a delay domain is greater than or equal to a first threshold, and/or a coordinate spacing between the first peak of the ambiguity function of the first sequence and the second peak of the ambiguity function of the second sequence in a Doppler domain is greater than or equal to a second threshold.

12. The method according to claim 10 or 11, wherein the delay cyclic shift index is any one index in a delay cyclic shift set, and the Doppler cyclic shift index is any one index in a Doppler cyclic shift set; and
the first sequence and the second sequence have the same delay cyclic shift index, and the first sequence and the second sequence have the same Doppler cyclic shift index.

13. The method according to claim 12, wherein the delay cyclic shift set and the Doppler cyclic shift set each are determined based on one or more target boundary points, the target boundary point is determined based on an adjacent peak pair, the adjacent peak pair comprises a third peak of an ambiguity function of the first root sequence and a fourth peak of an ambiguity function of the second root sequence, a coordinate spacing between the third peak and the fourth peak in the delay domain is less than or equal to the first threshold, or a coordinate spacing between the third peak and the fourth peak in the Doppler domain is equal to the second threshold.

14. The method according to claim 13, wherein the one or more target boundary points are determined based on a plurality of candidate boundary points, wherein a first target boundary point is any one of the one or more target boundary points; and a coordinate spacing between the first target boundary point and an origin in the Doppler domain is less than or equal to a coordinate spacing between a to-be-determined candidate boundary point and the origin in the Doppler domain, and/or a coordinate spacing between the first target boundary point and the origin in the delay domain is less than a coordinate spacing between the to-be-determined candidate boundary point and the origin in the delay domain, wherein the to-be-determined candidate boundary point is any candidate boundary point other than the first target boundary point in the plurality of candidate boundary points, and the candidate boundary point is a coordinate point closest to the origin in a side peak zone determined based on the adjacent peak pair; and the coordinate spacing in the Doppler domain is determined based on a Doppler coordinate and a sequence length of the cyclic shift sequence pair, and the coordinate spacing in the delay domain is determined based on a delay coordinate and the sequence length of the cyclic shift sequence pair.

15. The method according to claim 13 or 14, wherein the adjacent peak pair comprises one or more of the following: the third peak and the fourth peak have the same coordinate in the delay domain, and the coordinate spacing between the third peak and the fourth peak in the Doppler domain is less than or equal to the second threshold; the coordinate spacing between the third peak and the fourth peak in the delay domain is less than or equal to the first threshold, and the third peak and the first peak have the same coordinate in the Doppler domain; and the coordinate spacing between the third peak and the fourth peak in the delay domain is equal to the first threshold, and the coordinate spacing between the third peak and the first peak in the Doppler domain is equal to the second threshold.

16. The method according to any one of claims 11 to 15, wherein the first threshold is a delay resolution, and the second threshold is a Doppler resolution.

17. The method according to any one of claims 10 to 16, wherein the cyclic shift sequence pair is for measuring a range between the first apparatus and a target apparatus, or a velocity of the first apparatus relative to the target apparatus; and the target apparatus is an apparatus that receives the cyclic shift sequence pair.

18. The method according to any one of claims 10 to 17, wherein an expression of a discrete-time signal of the cyclic shift sequence pair is as follows:

$$s_{u_1|u_2,k,l}(n) = \tilde{s}_{u_1,k,l}(n) + s_{u_1,k,l}(n - N_{CP}) + \tilde{s}_{u_2,k,l}(n - N - N_{CP}) + s_{u_2,k,l}(n - N - 2N_{CP})$$

$$s_{u_1,k,l}(n) = e^{-j\pi[u_1(n+k\Delta_T)(n+k\Delta_T+1)+2nl\Delta_F]/N}, n = 0, 1, \dots, N - 1$$

$$\tilde{s}_{u_1,k,l}(n) = s_{u_1,k,l}(n + N - N_{CP}), n = 0, 1, \dots, N_{CP} - 1$$

$$s_{u_2,k,l}(n) = e^{-j\pi[u_2(n+k\Delta_T)(n+k\Delta_T+1)+2nl\Delta_F]/N}, n = 0, 1, \dots, N - 1$$

$$\tilde{s}_{u_2,k,l}(n) = s_{u_2,k,l}(n + N - N_{CP}), n = 0, 1, \dots, N_{CP} - 1$$

wherein $s_{u_1,k,l}(n)$ indicates the first sequence, $\tilde{s}_{u1,k,l}(n)$ indicates a cyclic prefix of the first sequence, $s_{u2,k,l}(n)$ indicates the second sequence, $\tilde{s}_{u2,k,l}(n)$ indicates a cyclic prefix of the second sequence, $N$ indicates the sequence length of the cyclic shift sequence pair, $N_{CP}$ indicates a length of the cyclic prefix, $u_1$ indicates the first root index, $u_2$ indicates the second root index, $\Delta_T$ indicates a preset maximum delay, $\Delta_F$ indicates a preset maximum Doppler shift, the length of the cyclic prefix is greater than or equal to the preset maximum delay, k indicates the delay cyclic shift index, and $l$ indicates the Doppler cyclic shift index.

19. A communication system, wherein the communication system comprises a first apparatus and a second apparatus, wherein
the first apparatus is configured to perform the method according to any one of claims 1 to 9, and the second apparatus is configured to perform the method according to any one of claims 10 to 18.

20. A communication apparatus, wherein the communication apparatus comprises a communication unit and a processing unit, wherein

the processing unit is configured to obtain a cyclic shift sequence pair, wherein the cyclic shift sequence pair comprises a first sequence and a second sequence, the first sequence is obtained by performing cyclic shifts on a first root sequence respectively based on a delay cyclic shift index and a Doppler cyclic shift index, the second sequence is obtained by performing the cyclic shifts on a second root sequence respectively based on the delay cyclic shift index and the Doppler cyclic shift index, and a first root index of the first root sequence is different from a second root index of the second root sequence; and
the communication unit is configured to output the cyclic shift sequence pair.

21. The apparatus according to claim 20, wherein a coordinate spacing between a first peak of an ambiguity function of the first sequence and a second peak of an ambiguity function of the second sequence in a delay domain is greater than or equal to a first threshold, and/or a coordinate spacing between the first peak of the ambiguity function of the first sequence and the second peak of the ambiguity function of the second sequence in a Doppler domain is greater than or equal to a second threshold.

22. The apparatus according to claim 20 or 21, wherein the delay cyclic shift index is any one index in a delay cyclic shift set, and the Doppler cyclic shift index is any one index in a Doppler cyclic shift set; and the first sequence and the second sequence have the same delay cyclic shift index, and the first sequence and the second sequence have the same Doppler cyclic shift index.

23. The apparatus according to claim 22, wherein the delay cyclic shift set and the Doppler cyclic shift set each are determined based on one or more target boundary points, the target boundary point is determined based on an adjacent peak pair, the adjacent peak pair comprises a third peak of an ambiguity function of the first root sequence and a fourth peak of an ambiguity function of the second root sequence, a coordinate spacing between the third peak and the fourth peak in the delay domain is less than or equal to the first threshold, and a coordinate spacing between the third peak and the fourth peak in the Doppler domain is less than or equal to the second threshold.

24. The apparatus according to claim 23, wherein the one or more target boundary points are determined based on a plurality of candidate boundary points, wherein a first target boundary point is any one of the one or more target boundary points; and a coordinate spacing between the first target boundary point and an origin in the Doppler domain is less than or equal to a coordinate spacing between a to-be-determined candidate boundary point and the origin in the Doppler domain, and/or a coordinate spacing between the first target boundary point and the origin in the delay domain is less than a coordinate spacing between the to-be-determined candidate boundary point and the origin in the delay domain, wherein the to-be-determined candidate boundary point is any candidate boundary point other than the first target boundary point in the plurality of candidate boundary points, and the candidate boundary point is a coordinate point closest to the origin in a side peak zone determined based on the adjacent peak pair; and the coordinate spacing in the Doppler domain is determined based on a Doppler coordinate and a sequence length of the cyclic shift sequence pair, and the coordinate spacing in the delay domain is determined based on a delay coordinate and the sequence length of the cyclic shift sequence pair.

25. The apparatus according to claim 23 or 24, wherein the adjacent peak pair comprises one or more of the following: the third peak and the fourth peak have the same coordinate in the delay domain, and the coordinate spacing between the third peak and the fourth peak in the Doppler domain is less than or equal to the second threshold; the coordinate spacing between the third peak and the fourth peak in the delay domain is less than or equal to the first threshold, and the third peak and the fourth peak have the same coordinate in the Doppler domain; and the coordinate spacing between the third peak and the fourth peak in the delay domain is less than or equal to the first threshold, and the coordinate spacing between the third peak and the fourth peak in the Doppler domain is less than or equal to the second threshold.

26. The apparatus according to any one of claims 21 to 25, wherein the first threshold is a delay resolution, and the second threshold is a Doppler resolution.

27. The apparatus according to any one of claims 20 to 26, wherein the cyclic shift sequence pair is for measuring a range between the first apparatus and a target apparatus, or a velocity of the first apparatus relative to the target apparatus.

28. The apparatus according to any one of claims 20 to 27, wherein an expression of a discrete-time signal of the cyclic shift sequence pair is as follows:

$$s_{u_1|u_2,k,l}(n) = \tilde{s}_{u_1,k,l}(n) + s_{u_1,k,l}(n - N_{\text{CP}}) + \tilde{s}_{u_2,k,l}(n - N - N_{\text{CP}}) + s_{u_2,k,l}(n - N - 2N_{\text{CP}})$$

$$s_{u_1,k,l}(n) = e^{-j\pi[u_1(n+k\Delta_{\text{T}})(n+k\Delta_{\text{T}}+1)+2nl\Delta_{\text{F}}]/N}, n = 0, 1, ..., N - 1$$

$$\tilde{s}_{u_1,k,l}(n) = s_{u_1,k,l}(n + N - N_{\text{CP}}), n = 0, 1, \ldots, N_{\text{CP}} - 1$$

$$s_{u_2,k,l}(n) = e^{-j\pi[u_2(n+k\Delta_{\text{T}})(n+k\Delta_{\text{T}}+1)+2nl\Delta_{\text{F}}]/N}, n = 0, 1, \ldots, N - 1$$

$$\tilde{s}_{u_2,k,l}(n) = s_{u_2,k,l}(n + N - N_{\text{CP}}), n = 0, 1, \ldots, N_{\text{CP}} - 1$$

wherein $s_{u_1,k,l}(n)$ indicates the first sequence, $\tilde{s}_{u_1,k,l}(n)$ indicates a cyclic prefix of the first sequence, $s_{u_2,k,l}(n)$ indicates the second sequence, $\tilde{s}_{u_2,k,l}(n)$ indicates a cyclic prefix of the second sequence, $N$ indicates the sequence length of the cyclic shift sequence pair, $N_{\text{CP}}$ indicates a length of the cyclic prefix, $u_1$ indicates the first root index, $u_2$ indicates the second root index, $\Delta_{\text{T}}$ indicates a preset maximum delay, $\Delta_{\text{F}}$ indicates a preset maximum Doppler shift, the length of the cyclic prefix is greater than or equal to the preset maximum delay, k indicates the delay cyclic shift index, and $l$ indicates the Doppler cyclic shift index.

29. A communication apparatus, wherein the communication apparatus comprises a communication unit and a processing unit, wherein

the communication unit is configured to receive a cyclic shift sequence pair, wherein the cyclic shift sequence pair comprises a first sequence and a second sequence, the first sequence is obtained by performing cyclic shifts on a first root sequence respectively based on a delay cyclic shift index and a Doppler cyclic shift index, the second sequence is obtained by performing the cyclic shifts on a second root sequence respectively based on the delay cyclic shift index and the Doppler cyclic shift index, and a first root index of the first root sequence is different from a second root index of the second root sequence; and
the processing unit is configured to process the cyclic shift sequence.

30. The apparatus according to claim 29, wherein a coordinate spacing between a first peak of an ambiguity function of the first sequence and a second peak of an ambiguity function of the second sequence in a delay domain is greater than or equal to a first threshold, and/or a coordinate spacing between the first peak of the ambiguity function of the first sequence and the second peak of the ambiguity function of the second sequence in a Doppler domain is greater than or equal to a second threshold.

31. The apparatus according to claim 29 or 30, wherein the delay cyclic shift index is any one index in a delay cyclic shift set, and the Doppler cyclic shift index is any one index in a Doppler cyclic shift set; and
the first sequence and the second sequence have the same delay cyclic shift index, and the first sequence and the second sequence have the same Doppler cyclic shift index.

32. The apparatus according to claim 31, wherein the delay cyclic shift set and the Doppler cyclic shift set each are determined based on one or more target boundary points, the target boundary point is determined based on an adjacent peak pair, the adjacent peak pair comprises a third peak of an ambiguity function of the first root sequence and a fourth peak of an ambiguity function of the second root sequence, a coordinate spacing between the third peak and the fourth peak in the delay domain is less than or equal to the first threshold, and a coordinate spacing between the third peak and the fourth peak in the Doppler domain is less than or equal to the second threshold.

33. The apparatus according to claim 32, wherein the one or more target boundary points are determined based on a plurality of candidate boundary points, wherein a first target boundary point is any one of the one or more target boundary points; and a coordinate spacing between the first target boundary point and an origin in the Doppler domain is less than or equal to a coordinate spacing between a to-be-determined candidate boundary point and the origin in the Doppler domain, and/or a coordinate spacing between the first target boundary point and the origin in the delay domain is less than a coordinate spacing between the to-be-determined candidate boundary point and the origin in the delay domain, wherein the to-be-determined candidate boundary point is any candidate boundary point other than the first target boundary point in the plurality of candidate boundary points, and the candidate boundary point is a coordinate point closest to the origin in a side peak zone determined based on the adjacent peak pair; and the coordinate spacing in the Doppler domain is determined based on a Doppler coordinate and a sequence length of the cyclic shift sequence pair, and the coordinate spacing in the delay domain is determined based on a delay coordinate and the sequence length of the cyclic shift sequence pair.

34. The apparatus according to claim 32 or 33, wherein the adjacent peak pair comprises one or more of the following: the third peak and the fourth peak have the same coordinate in the delay domain, and the coordinate spacing between the third peak and the fourth peak in the Doppler domain is less than or equal to the second threshold; the coordinate spacing between the third peak and the fourth peak in the delay domain is less than or equal to the first threshold, and the third peak and the fourth peak have the same coordinate in the Doppler domain; and the coordinate spacing between the third peak and the fourth peak in the delay domain is less than or equal to the first threshold, and the coordinate spacing between the third peak and the fourth peak in the Doppler domain is less than or equal to the second threshold.

35. The apparatus according to any one of claims 29 to 34, wherein the first threshold is a delay resolution, and the second threshold is a Doppler resolution.

36. The apparatus according to any one of claims 29 to 35, wherein the cyclic shift sequence pair is for measuring a range between the first apparatus and a target apparatus, or a velocity of the first apparatus relative to the target apparatus; and the target apparatus is an apparatus that receives the cyclic shift sequence pair.

37. The apparatus according to any one of claims 29 to 36, wherein an expression of a discrete-time signal of the cyclic shift sequence pair is as follows:

$$s_{u_1|u_2,k,l}(n) = \tilde{s}_{u_1,k,l}(n) + s_{u_1,k,l}(n - N_{\text{CP}}) + \tilde{s}_{u_2,k,l}(n - N - N_{\text{CP}}) + s_{u_2,k,l}(n - N - 2N_{\text{CP}})$$

$$s_{u_1,k,l}(n) = e^{-j\pi[u_1(n+k\Delta_{\text{T}})(n+k\Delta_{\text{T}}+1)+2nl\Delta_{\text{F}}]/N}, n = 0, 1, \dots, N - 1$$

$$\tilde{s}_{u_1,k,l}(n) = s_{u_1,k,l}(n + N - N_{\text{CP}}), n = 0, 1, \dots, N_{\text{CP}} - 1$$

$$s_{u_2,k,l}(n) = e^{-j\pi[u_2(n+k\Delta_{\text{T}})(n+k\Delta_{\text{T}}+1)+2nl\Delta_{\text{F}}]/N}, n = 0, 1, \dots, N - 1$$

$$\tilde{s}_{u_2,k,l}(n) = s_{u_2,k,l}(n + N - N_{\text{CP}}), n = 0, 1, \dots, N_{\text{CP}} - 1$$

wherein $s_{u_1,k,l}(n)$ indicates the first sequence, $\tilde{s}_{u_1,k,l}(n)$ indicates a cyclic prefix of the first sequence, $s_{u_2,k,l}(n)$ indicates the second sequence, $\tilde{s}_{u_2,k,l}(n)$ indicates a cyclic prefix of the second sequence, $N$ indicates the sequence length of the cyclic shift sequence pair, $N_{\text{CP}}$ indicates a length of the cyclic prefix, $u_1$ indicates the first root index, $u_2$ indicates the second root index, $\Delta_{\text{T}}$ indicates a preset maximum delay, $\Delta_{\text{F}}$ indicates a preset maximum Doppler shift, the length of the cyclic prefix is greater than or equal to the preset maximum delay, $k$ indicates the delay cyclic shift index, and $l$ indicates the Doppler cyclic shift index.

38. A communication apparatus, wherein the communication apparatus comprises a processor, and the processor is configured to execute instructions stored in a memory, to cause the communication apparatus to implement the method according to any one of claims 1 to 18.

39. A computer-readable storage medium, wherein the computer-readable storage medium stores a computer program, and when the computer program runs on a processor, the method according to any one of claims 1 to 18 is performed.

40. A computer program product, wherein the computer program product comprises a computer program or instructions, and when the computer program or the instructions are executed, the method according to any one of claims 1 to 18 is performed.

41. A chip system, wherein the chip system comprises at least one processor and an interface circuit, the interface circuit and the at least one processor are interconnected through a line, and the processor is configured to implement the method according to any one of claims 1 to 18.

42. A communication system, comprising the communication apparatus according to any one of claims 20 to 28 and the communication apparatus according to any one of claims 29 to 37.

FIG. 1

FIG. 2

FIG. 3

FIG. 4(a)

FIG. 4(b)

FIG. 4(c)

FIG. 4(d)

FIG. 5

FIG. 6A

FIG. 6B

EP 4 672 848 A1

FIG. 6C

FIG. 7

Side peak
zone 803

Side peak
zone 801

Side peak
zone 802

Side peak
zone 804

(a)          (b)          (c)          (d)

FIG. 8

FIG. 9A

FIG. 9B

FIG. 10A

FIG. 10B

FIG. 11A

FIG. 11B

FIG. 12A

FIG. 12B

FIG. 13A

FIG. 13B

Communication apparatus 140

1401

Processing unit

1402

Communication unit

FIG. 14

Memory

1503

Communication apparatus 150

1501

Processor

1503

Memory

1504

1502

Communication interface

Memory

1503

FIG. 15

## INTERNATIONAL SEARCH REPORT

| | International application No. |
|---|---|
| | **PCT/CN2023/082624** |

| A. | CLASSIFICATION OF SUBJECT MATTER |
|---|---|

H04W 74/08(2009.01)i;  H04B 7/26(2006.01)i

According to International Patent Classification (IPC) or to both national classification and IPC

| B. | FIELDS SEARCHED |
|---|---|

Minimum documentation searched (classification system followed by classification symbols)

IPC: H04W,H04B

Documentation searched other than minimum documentation to the extent that such documents are included in the fields searched

Electronic data base consulted during the international search (name of data base and, where practicable, search terms used)

CJFD, CNTXT, DWPI, ENTXT: 前导, 序列, 循环, 移位, 多普勒, 索引, 根序列, preamble, sequence, cyclic, shift, doppler, index

| C. | DOCUMENTS CONSIDERED TO BE RELEVANT |
|---|---|

| Category* | Citation of document, with indication, where appropriate, of the relevant passages | Relevant to claim No. |
|---|---|---|
| A | CN 111315034 A (SICHUAN CHUANGZHI LIANHENG TECHNOLOGY CO., LTD.) 19 June 2020 (2020-06-19)<br>description, paragraphs 58-95 | 1-42 |
| A | CN 112087805 A (BEIJING SAMSUNG TELECOM R&D CENTER et al.) 15 December 2020 (2020-12-15)<br>entire document | 1-42 |
| A | CN 114175527 A (NEC CORP.) 11 March 2022 (2022-03-11)<br>entire document | 1-42 |
| A | CN 114521028 A (CHONGQING UNIVERSITY OF POSTS AND TELECOMMUNICATIONS) 20 May 2022 (2022-05-20)<br>entire document | 1-42 |
| A | US 2011158330 A1 (INDUSTRIAL TECHNOLOGY RESEARCH INSTITUTE) 30 June 2011 (2011-06-30)<br>entire document | 1-42 |

☐ Further documents are listed in the continuation of Box C.      ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **27 June 2023** | **16 November 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/082624**

| Patent document cited in search report | | | Publication date (day/month/year) | Patent family member(s) | | | Publication date (day/month/year) |
|---|---|---|---|---|---|---|---|
| CN | 111315034 | A | 19 June 2020 | None | | | |
| CN | 112087805 | A | 15 December 2020 | US | 2020266908 | A1 | 20 August 2020 |
| | | | | WO | 2020167019 | A1 | 20 August 2020 |
| | | | | CN | 111565401 | A | 21 August 2020 |
| | | | | KR | 20210116557 | A | 27 September 2021 |
| | | | | EP | 3915218 | A1 | 01 December 2021 |
| CN | 114175527 | A | 11 March 2022 | WO | 2021007714 | A1 | 21 January 2021 |
| | | | | EP | 3997809 | A1 | 18 May 2022 |
| | | | | US | 2022264658 | A1 | 18 August 2022 |
| | | | | IN | 202217001216 | A | 08 April 2022 |
| | | | | JP | 2022549058 | W | 24 November 2022 |
| CN | 114521028 | A | 20 May 2022 | None | | | |
| US | 2011158330 | A1 | 30 June 2011 | TW | 201141146 | A | 16 November 2011 |
| | | | | US | 8638876 | B2 | 28 January 2014 |
| | | | | CN | 102118345 | A | 06 July 2011 |
| | | | | CA | 2761372 | A1 | 22 June 2012 |
| | | | | AU | 2011253863 | A1 | 12 July 2012 |
| | | | | CN | 103227674 | A | 31 July 2013 |
| | | | | CN | 103326983 | A | 25 September 2013 |

Form PCT/ISA/210 (patent family annex) (July 2022)